# EUROPEAN PATENT SPECIFICATION

(11) **EP 3 034 545 B1**
(45) Date of publication and mention of the grant of the patent: **04.11.2020**
(21) Application number: 14198480.7
(22) Date of filing: 17.12.2014
(51) Int. Cl.: C08G 81/02, C08F 216/04, C08F 4/6392, C08F 4/659, C08F 4/6592, C08F 8/00, C08G 61/00, C08G 63/08, C08G 64/30, C08F 216/10, C08G 64/18

(54) **A PROCESS FOR THE PREPARATION OF A GRAFT COPOLYMER COMPRISING A POLYOLEFIN MAIN CHAIN AND ONE OR A MULTIPLE POLYMER SIDE CHAINS AND THE PRODUCTS OBTAINED THEREFROM**
VERFAHREN ZUR HERSTELLUNG EINES PFROPFCOPOLYMERS MIT EINER POLYOLEFINHAUPTKETTE UND EINER ODER MEHREREN SEITENKETTEN VON POLYMEREN UND DAMIT ERHALTENE PRODUKTE
PROCÉDÉ DE PRÉPARATION D'UN COPOLYMÈRE GREFFÉ COMPRENANT UNE CHAÎNE DE POLYOLÉFINE PRINCIPALE ET UNE OU PLUSIEURS CHAÎNES LATÉRALES DE POLYMÈRES ET PRODUITS OBTENUS À PARTIR DE CE DERNIER

(43) Date of publication of application: 22.06.2016
(73) Proprietor: SABIC Global Technologies B.V., 4612 PX Bergen op Zoom (NL)
(72) Inventor: Bouyahyi, Miloud, 6160 GA Geleen (NL); Duchateau, Robert, 6160 GA Geleen (NL); Jasinska-Walc, Lidia, 6160 GA Geleen (NL); Shaneesh, Vadake Kulangara, 6160 GA Geleen (NL); Zych, Arkadiusz, 6160 GA Geleen (NL); Rutkowski, Szymon Lukasz, 6160 GA Geleen (NL)
(74) Representative: Sabic Intellectual Property Group

(56) References cited:
- WO-A1-00/69921
- US-A1- 2011 294 960
- HENRY MARTINEZ ET AL: "Ring-opening metathesis polymerization of 8-membered cyclic olefins", POLYMER CHEMISTRY, vol. 5, no. 11, 1 January 2014 (2014-01-01), page 3507, XP055191111, ISSN: 1759-9954, DOI: 10.1039/c3py01787g

## Description

The present invention relates to a process for the preparation of a graft copolymer comprising a polyolefin main chain and one or a multiple polymer side chains and the products obtained therefrom.

### Background

The present invention relates to a process for preparing graft copolymers having a polyolefin main chain containing one or multiple polar or nonpolar polymer or polyethylene-like side chains and the products obtained therefrom.

Graft copolymers combining a polyolefin main chain with at least one polyethylene-like polymer side chain are useful as compatibilizers for e.g. polyolefin (e.g. iPP) and polyethylene blends. The preparation of actual polyolefin-polyethylene graft copolymers (e.g. iPP-g-PE) is a very tedious process.

Graft copolymers combining a polyolefin main chain with at least one type of polar polymer side chain may be used to enhance the properties of polyolefin polymers that have an inherent nonpolar character that leads to drawbacks for certain applications, because of poor adhesion, printability and compatibility that can restrict their efficacy. Furthermore, such graft copolymers are useful as compatibilizers of e.g. polyolefin (e.g. iPP) and polar polymers (e.g. polycarbonate) blends.

It is known that graft copolymers may be prepared using as a main chain a well-defined randomly functionalized polyolefin, containing functionalized short chain branches. This main chain polyolefin is prepared in a separate process to which the side chains are added using an additional catalyst in a subsequent process.

The formation of the polar or nonpolar polymer side chains can either be carried out by growing these polymer side chains from the reactive substituents on the polyolefin main chain (grafting from approach) or by attaching a pre-synthesized polymer to the reactive side groups of a polyolefin main chain (grafting onto approach).

A process for preparation of graft copolymers comprising a hydrophobic backbone polymer, for example a copolymer of 1,5-cyclooctadiene and 5-norbornene-2-methanol, has been disclosed in US2011/0294960A1. Further in Polym. Chem., 2014, 6, 3507-3532, polymerisation reactions such as ring-opening polymerisations using functionalised cyclic monomers are described. In WO00/69921A1, preparation of amine-functionalised copolymers is described.

The aim of the present invention is to provide an easy, versatile and tunable process for the preparation of graft copolymers.

It is moreover an aim of the present invention to produce graft copolymers having a polyolefin main chain and at least one type of polar (preferably polyethylene-like polyester) or nonpolar polymer side chains.

It is moreover an aim of the present invention to provide copolymers that can be used as compatibilizers for blends of polyolefins and polar polymers, such as iPP with polycarbonate, or for blends of polyolefins and nonpolar polymers, such as iPP with PE.

It is another aim of the present invention to provide a catalyst system allowing efficient chain transfer in the preparation of metal-functionalized polyolefins, which after subsequent metal substitution provide polyolefin main chains having one or multiple functionalized side chain branches which can be applied as initiators for the formation of graft copolymers.

Chain transfer agents create a controlled, living-like system and have at least one weak chemical bond that can be broken to allow the growing polymer chain to transfer to this agent.

One or more of these aims are obtained by the process according to the present invention.

### Summary of the invention

The present invention relates to the novel and inventive process for the preparation of graft copolymers comprising a polyolefin main chain and one or a multiple polymer side chains and the products obtained therefrom.

In a first aspect, the present invention relates to a process for the preparation of a graft copolymer comprising a polyolefin main chain and one or multiple polymer side chains, the process comprising the steps of:
A) copolymerizing at least one first type of olefin monomer and at least one second type of metal-pacified functionalized olefin monomer using a catalyst system to obtain a polyolefin main chain having one or multiple metal-pacified functionalized short chain branches, the catalyst system comprising:
   i) a metal catalyst or metal catalyst precursor comprising a metal from Group 3-10 of the IUPAC Periodic Table of elements;
   ii) optionally a co-catalyst;
B) reacting the polyolefin main chain having one or multiple metal-pacified functionalized short chain branches obtained in step A) with at least one metal substituting agent to obtain a polyolefin main chain having one or multiple functionalized short chain branches;
C) forming one or multiple polymer side chains on the polyolefin main chain, wherein the functionalized short chain branches on the polyolefin main chain obtained in step B) are used to obtain the graft copolymer.

In an embodiment, the catalyst system further comprises: iii) optionally a scavenger.

Step C) may be carried out for example by ring-opening polymerization (ROP) and/or nucleophilic substitution.

In an embodiment, step C) of obtaining a graft copolymer is carried out by ring-opening polymerization (ROP) using at least one type of cyclic monomer.

In an embodiment, step C) of obtaining a graft copolymer is carried out by a nucleophilic substitution reaction, for example especially a transesterification reaction, at a carbonyl group-containing functionality, for example especially a carboxylic or carbonic acid ester functionality, of at least one type of polymer for the side chains.

In an embodiment, the first type of olefin monomer is a compound according to Formula I-A: 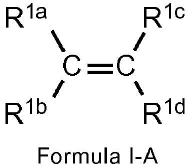 wherein C is carbon and wherein R^{1a}, R^{1b}, R^{1c}, and R^{1d} are each independently selected from the group consisting of H or hydrocarbyl with 1 to 16 carbon atoms.

In another embodiment, the second type of metal-pacified functionalized olefin monomer is a compound according to Formula I-B: 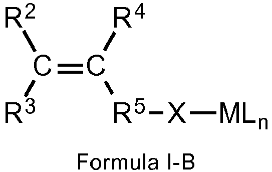
wherein C is carbon;
wherein R², R³, and R⁴ are each independently selected from the group consisting of H or hydrocarbyl with 1 to 16 carbon atoms, and
wherein R⁵-X-MLₙ is a main group metal pacified heteroatom-containing functional group, wherein X is a heteroatom or a heteroatom-containing group, wherein the heteroatom that is bonded to M is selected from the group consisting of O, S and N; wherein R⁵ is a hydrocarbyl with 1 to 16 carbon atoms.

In yet another embodiment, step B) is carried out directly after step A) and/or wherein step C) is carried out directly after step B), preferably in a series of connected reactors, preferably continuously.

In yet another embodiment, during step C) a catalyst for the ROP or nucleophilic substitution reaction is added.

In yet another embodiment, the metal catalyst used in step A) comprises a metal from Group 3-8, preferably Group 3-6, more preferably from Group 3-4 of the IUPAC Periodic Table of elements and/or wherein the metal catalyst used in step A) comprises a metal selected from the group consisting of Ti, Zr, Hf, V, Cr, Fe, Co, Ni, Pd, preferably Ti, Zr or Hf.

In yet another embodiment, the co-catalyst is selected from the group consisting of MAO, DMAO, MMAO, SMAO and fluorinated aryl borane or fluorinated aryl borate.

In yet another embodiment, the scavenger is selected from the group consisting of aluminum alkyls, such as triisobutyl aluminum, trioctyl aluminum, trimethyl aluminum, MAO, MMAO, SMAO, zinc alkyls, such as diethyl zinc, or magnesium alkyls such as dibutyl magnesium. In an embodiment, the scavenger is the same compound as the co-catalyst. In another embodiment, the scavenger is a different compound than the co-catalyst. The scavenger may also function as a chain transfer agent.

In yet another embodiment, the olefin monomer according to Formula I-A is selected from the group consisting of ethylene, propylene, 1-butene, 4-methyl-1-pentene, 1-pentene, 1-hexene, 1-heptene, 1-octene, 1-nonene, 1-decene, 1-undecene, 1-dodeceme, 1-tridecene, 1-tetradecene, 1-pentadecene, 1-hexadecene, 1-heptadecene, 1-octadecene, 1-cyclopentene, cyclohexene, norbornene, ethylidene-norbornene, and vinylidene-norbornene and one or more combinations thereof.

In yet another embodiment, the cyclic monomer used during ROP in step C) is a polar monomer, selected from the group consisting of a lactone, a lactide, a cyclic oligoester such as a di-ester, a tri-ester, a tetra-ester, a penta-ester or higher oligoesters, an epoxide, an aziridine, a combination of epoxide and/or aziridine and CO₂, a cyclic anhydride, a combination of epoxide and/or aziridine and a cyclic anhydride, a combination of epoxide and/or aziridine and CO₂ and a cyclic anhydride, a cyclic N-carboxyanhydride, a cyclic carbonate, a lactam and one or more combinations thereof, preferably a lactone.

In yet another embodiment, the cyclic monomer used during ROP in step C) is a cyclic monomer comprising a carbonyl group-containing functionality and at least 10 consecutive carbon atoms in the ring/cycle, preferably selected from the group consisting of cyclic esters such as macrolactones, cyclic carbonates, cyclic amides, cyclic urethanes and cyclic ureas; or one or more combinations thereof, preferably macrolactones.

In yet another embodiment, the polymer for the side chains comprising at least one carboxylic or carbonic acid ester functionality or a carbonyl group-containing functionality is selected from the group consisting of a polyester, a polycarbonate, a polyamide, a polyurethane, a polyurea, a random or block poly(carbonate-ester), poly(carbonate-ether), poly(ester-ether), poly(carbonate-ether-ester), poly(ester-amide), poly(ester-ether-amide), poly(carbonate-amide), poly(carbonate-ether-amide), poly(ester-urethane), poly(ester-ether-urethane), poly(carbonate-urethane), poly(carbonate-ether-urethane), poly(ester-urea), poly(ester-ether-urea), poly(carbonate-urea), poly(carbonate-ether-urea), poly(ether-amide), poly(amide-urethane), poly(amide-urea), poly(urethane-urea) or one or more combination thereof.

In yet another embodiment, the pacifying metal used to obtain the metal-pacified functionalized olefin monomer is selected from the group consisting of: magnesium, calcium, boron, aluminum, gallium, bismuth, titanium, zinc, and one or more combinations thereof.

In another aspect of the present invention, the invention relates to a graft copolymer obtained by or obtainable by a process according to the present invention.

### Definitions

The following definitions are used in the present description and claims to define the stated subject matter. Other terms not cited below are meant to have the generally accepted meaning in the field.

"graft copolymer" as used in the present description means: a macromolecule with one or more side chains connected to a main chain. These side chains may have constitutional or configurational features that differ from those in the main chain, preferably the side chains comprise at least one different monomer compared to the main chain.

"main chain" as used in the present description means: the linear polymer chain to which all other chains may be regarded as being pendant. The main chain is preferably also the polymer chain starting from which other chains/side chains may be obtained. The main chain is thus obtained in step A).

"side chain" or "branch" or "polymer branches" or "polymer side chains" as used in the present description means: an offshoot from a polymer main chain. These terms can be used interchangeably. This offshoot may be oligomer or polymeric and might be similar or different in nature compared to the polymer main chain. A "side chain" or "branch" or "polymer branches" or "polymer side chains" can thereby also be a random or block copolymer comprising at least two different monomers. "Side-chains" can be obtained staring from the main chain. "Side-chains" can thereby be obtained in step C).

"short chain branch" as used in the present description means: a branch that has only a few atoms. Short chain branches are much smaller than the backbone of the linear molecule to which they are attached.

"side group" as used in the present description means: an offshoot, neither oligomeric nor polymeric from a chain.

"olefin monomer" as used in the present description means: an a hydrocarbon compound having a carbon-carbon double bond that can be used serves as a building block for a polyolefin.

"a-olefin" as used in the present description means: an olefin having a double bond at the α position.

"polyolefin" as used in the present description means: a polymer obtained by the polymerization of olefin monomer.

"polymer chain" as used in the present description means: a chain having a number average molecular weight (*Mₙ*) of at least 500 g/mol.

"copolymer" as used in the present description means: a polymer derived from more than one type of monomer.

"copolymerization" as used in the present description means: a process to produce a copolymer wherein at least two different types of monomers are used.

"pacifying agent" as used in the present description means: an agent that blocks or protects a functional group to reversibly deactivate that functional group.

"metal-pacified functionalized olefin monomer" as used in the present description means: an olefin monomer having a reactive function which reactive function has reacted with a metal. It is a functionalized olefin monomer that is pacified using a metal in order to reversibly deactivate the functional group.

"metal-pacified functionalized short chain branches" as used in the present description means: short chain branches having a reactive function which reactive function has reacted with a metal. It is a functionalized short chain branch that is pacified using a metal in order to reversibly deactivate the functional group.

"reactive-metal containing functionalized short chain branches" as used in the present description means: short chain branches having at least one reactive-metal containing functional group.

"reactive metal" as used in the present description means: a metal that is active in ROP, nucleophilic substitution or transesterification, such as Mg, Ca, Sc, Y, lanthanides, Ti, Zr, Zn, Al, Ga, Bi and Sn.

"hydrocarbyl chain" as used in the present description means: the hydrocarbyl product of a polymerization reaction according to step A) of the present invention. It may be an oligomeric polyolefin chain having e.g. between 2 and 20 olefin units or it may be a polyolefin chain, i.e. consisting of more than 20 olefin units. It should be noted that "hydrocarbyl chain" and "hydrocarbyl" are not used as synonyms.

"hydrocarbyl" as used in the present description means: a substituent containing hydrogen and carbon atoms; it is a linear, branched or cyclic saturated or unsaturated aliphatic substituent, such as alkyl, alkenyl, alkadienyl and alkynyl; alicyclic substituent, such as cycloalkyl, cycloalkadienyl cycloalkenyl; aromatic substituent, such as monocyclic or polycyclic aromatic substituent, as well as combinations thereof, such as alkyl-substituted aryls and aryl-substituted alkyls. It may be substituted with one or more non-hydrocarbyl, heteroatom-containing substituents. Hence, when in the present description "hydrocarbyl" is used it can also be "substituted hydrocarbyl", unless stated otherwise. Included in the term "hydrocarbyl" are also perfluorinated hydrocarbyls wherein all hydrogen atoms are replaced by fluorine atoms. A hydrocarbyl may be present as a group on a compound (hydrocarbyl group) or it may be present as a ligand on a metal (hydrocarbyl ligand).

" polyethylene-like block" or "polyethylene-like polymer" or "polyethylene-like polymer block" as used in the present description refers a polymer or polymer block that is at least partially miscible with polyethylene that includes but is not limited to for example polyethylene-like polyester blocks. Such kind of polymers or polymer blocks may contain at least 60 mol% of monomer units with at least 10 consecutive between carbonyl group-containing functionalities. So, in the context of the present invention, polyethylene-like polymers are considered to be nonpolar.

"cyclic monomer" as used in the present description means: a compound having a ring system, which can be used as a building block in polymerization. The ring system is opened and the ring-opened monomer is attached to the growing polymer chain.

"ring-opening polymerization" or "ROP" as used in the present description means: a form of chain-growth polymerization where cyclic monomers are ring-opened and enchained to form a polymer. It also includes the copolymerization of cyclic monomers with carbon dioxide (e.g. epoxide + CO₂).

"initiator" as used in the present description means: a reagent that is capable of initiating ROP or nucleophilic substitution reactions when used with a metal catalyst.

"catalytic initiator" as used in the present description means: a metal-comprising reagent that is capable of initiating and catalyzing ROP or nucleophilic substitution reactions. In other words, a catalytic initiator is a combination of a metal catalyst and an initiator.

"metal substituting agent" as used in the present description means: an agent or a reagent that is suitable for substituting the metal of by a non-metal atom or group. It may for example be a hydrolyzing agent.

"Pol" as used in the present description means: polyolefin.

"PE" as used in the present description means: polyethylene.

"LDPE" as used in the present description means: low density polyethylene.
and "LLDPE" as used in the present description means: linear low density polyethylene. LDPE and LLDPE thereby encompass polyethylene with a density for example between 0.85 and 0.95 kg/m³, that can thus also includes especially for example VLDPE and MDPE.

"HDPE" as used in the present description means: high density polyethylene.

"CL" as used in the present description means: ε-caprotactone.

"PCL" as used in the present description means: polycaprolactone.

"PLA" as used in the present description means: polylactide (L, D or DL lactide can be used).

"aPP" as used in the present description means: atactic polypropylene.

"iPP" as used in the present description means: isotactic polypropylene.

"sPP" as used in the present description means: syndiotactic polypropylene.

"EB" as used in the present description means: cyclic ethylene brassylate.

"PEB" as used in the present description means: polyethylene brassylate.

"Amb" as used in the present description means: ambrettolide.

"PAmb" as used in the present description means: polyambrettolide.

"BA" as used in the present description means: cyclic butylene adipate.

"PBA" as used in the present description means: polybutyladipate.

"BS" as used in the present description means: cyclic butylene succinate.

"PBS" as used in the present description means: polybutylsuccinate.

"aPS" as used in the present description means: atactic polystyrene.

"iPS" as used in the present description means: isotactic polystyrene.

"sPS" as used in the present description means: syndiotactic polystyrene.

"PDL" as used in the present description means: pentadecalactone.

"PPDL" as used in the present description means: polypentadecalactone.

"P4M1P" as used in the present description means: poly-4-methyl-1-pentene.

"iP4M1P" as used in the present description means: isotactic poly-4-methyl-1-pentene.

"-g-" as used in the present description means: graft copolymer, e.g. HDPE-g-PCL is a graft copolymer of PCL grafted onto HDPE.

"-co-" as used in the present description means: random copolymer, e.g. poly(CL-co-PDL) is a random copolymer of CL and PDL.

"nucleophilic substitution" as used in the present description means: a reaction in which a nucleophile attached to a carbonyl group-containing functionality is replaced by another nucleophile.

"transesterification" as used in the present description means: a process of exchanging a nucleophilic alkoxide group of a carboxylic or carbonic acid ester. Transesterification is a special type of nucleophilic substitution using an ester or carbonate functional group.

"carboxylic acid ester functionality" as used in the present description means: an ester group (-O-C(=O)-) bonded to an organic hydrocarbyl group.

"carbonic acid ester functionality" as used in the present description means: a carbonate group (-O-C(=O)-O-) bonded to an organic hydrocarbyl group.

"carbonyl group-containing functionality" as used in the present description means: a carbonyl (>C=O) group bonded to an organic heteroatom-containing group XR', wherein X is selected from O, S, and NR" wherein R' and R" are hydrogen or hydrocarbyl and wherein the carbonyl group is attached to the heteroatom. In the context of the present invention preferably, the polymer for the side chain comprises as the carbonyl group-containing functionality at least one carboxylic acid ester, carbonic acid ester, amide, urethane or urea functionality. The term carbonyl group-containing functionality also includes carboxylic and carbonic ester functionalities in addition to other functionalities. A carbonyl group-containing functionality does therefore preferably refer to a reactive carbonyl group-containing functionality. In the sense of the present invention, it can accordingly preferably not refer to a ketone.

"cyclic ester" as used in the present description means: an ester compound in cyclic form. It also encompasses cyclic oligoesters being a cyclic di-ester, a cyclic tri-ester, a cyclic tetra-ester, a cyclic penta-ester or a higher cyclic oligomeric ester.

"lactone" as used in the present description means: a cyclic ester of a hydroxycarboxylic acid. This is encompassed by the definition of cyclic ester.

"oligolactone" as used in the present description means: a di-lactone, a tri-lactone, a tetra-lactone, a penta-lactone or a higher oligomeric lactone. These are special forms of a lactone and are encompassed by the definition of lactone.

"macrolactone" as used in the present description means: a macrocyclic lactone, being a lactone comprising an ester-functionality and at least 10 consecutive carbon atoms in the ring/cycle These are special forms of a lactone and are encompassed by the definition of lactone.

"macrooligolactones" as used in the present description means: a mixture of cyclic macromono-, macrodi, macriotri-, macrotetra- and macropenta-lactones or higher oligomers. These are special forms of a macrolactone and are encompassed by the definition of macrolactone.

"cyclic amide" as used in the present description means: an amide compound in cyclic form. It also encompasses cyclic oligoamides being a cyclic di-amide, a cyclic triamide, a cyclic tetra-amide, a cyclic penta-amide or higher cyclic oligomeric amides.

"cyclic carbonate" as used in the present description means: a carbonate compound in cyclic form. It also encompasses cyclic oligocarbonates being a cyclic di-carbonate, a cyclic tri-carbonate, a cyclic tetra-carbonate, a cyclic penta-carbonate or higher cyclic oligomeric carbonates.

"cyclic urethane" as used in the present description means: a urethane compound in cyclic form. It also encompasses cyclic oligourethanes being a cyclic di-urethane, a cyclic tri-urethane, a cyclic tetra-urethane, a cyclic penta-urethane or a higher cyclic oligomeric urethane.

"cyclic ureas" as used in the present description means: a urea compound in cyclic form. It also encompasses cyclic oligoureas being a cyclic di-urea, a cyclic tri-urea, a cyclic tetra-urea, a cyclic penta-urea or higher cyclic oligomeric ureas.

"HT SEC" as used in the present description means: high temperature size exclusion chromatography. HT SEC can be used as a measure of both the size and the polydispersity of a polymer.

"polydispersity index (*Ð*)" as used in the present description means: a value that indicates the distribution of the sizes of polymer molecules (*M_{w}*/*Mₙ*). The method of measuring the *Ð* is explained below. *Mₙ* is the number average molecular weight and *M_{w}* is the weight average molecular weight.

"chain transfer agent" as used in the present description means: a compound that is capable of reversibly or irreversibly interchanging hydrocarbyls and/or hydrocarbyl chains with the active catalyst. It is a metal compound comprising at least one ligand with a weak chemical bond.

"catalyst system" as used in the present description means: a system comprising a metal catalyst or a metal catalyst precursor and optionally a co-catalyst and optionally a scavenger.

"catalyst" as used in the present description means: a species providing the catalytic reaction.

"metal catalyst" as used in the present description means: a catalyst comprising at least one metal center that forms the active site. In the context of the present invention a "metal catalyst" is the same as a "transition metal catalyst" wherein the metal is a transition metal.

"metal catalyst precursor" as used in the present description means: a compound that upon activation forms the active metal catalyst.

"metallocene" as used in the present description means: a metal catalyst or metal catalyst precursor typically consisting of two substituted cyclopentadienyl (Cp) ligands bound to a metal active site.

"transition metal" as used in the present description means: a metal from any of the Groups 3-10 of the IUPAC Periodic Table of elements or in other words a Group 3 metal, a Group 4 metal, a Group 5 metal, a Group 6 metal, a Group 7 metal, a Group 8 metal, a Group 9 metal or a Group 10 metal.

"Group 3 metal" as used in the present description means: a metal selected from Group 3 of the IUPAC Periodic Table of elements, being scandium (Sc), yttrium (Y), lanthanum (La) and other lanthanides (Ce-Lu), and actinium (Ac) and other actinides (Th-Lr).

"Group 4 metal" as used in the present description means: a metal selected from Group 4 of the IUPAC Periodic Table of elements, being titanium (Ti), zirconium (Zr) and hafnium (Hf).

"Group 5 metal" as used in the present description means: a metal selected from Group 5 of the IUPAC Periodic Table of elements, being vanadium (V), niobium (Nb) and tantalum (Ta).

"Group 6 metal" as used in the present description means: a metal selected from Group 6 of the Periodic Table of elements, being chromium (Cr), molybdenum (Mo) and tungsten (W).

"Group 7 metal" as used in the present description means: a metal selected from Group 7 of the Periodic Table of elements, being manganese (Mn), technetium (Tc) and rhenium (Re).

"Group 8 metal" as used in the present description means: a metal selected from Group 8 of the Periodic Table of elements, being iron (Fe), ruthenium (Ru) and osmium (Os).

"Group 9 metal" as used in the present description means: a metal selected from Group 9 of the Periodic Table of elements, being cobalt (Co), rhodium (Rh) and iridium (Ir).

"Group 10 metal" as used in the present description means: a metal selected from Group 10 of the Periodic Table of elements, being nickel (Ni), palladium (Pd) and platinum (Pt).

"main group metal" as used in the present description means: a metal that is an element of Groups 1, 2, and 13-15 of the IUPAC Periodic Table of elements. In other words, metals of:
* Group 1: lithium (Li), sodium (Na), and potassium (K)
* Group 2: beryllium (Be), magnesium (Mg), and calcium (Ca)
* Group 13: boron (B), aluminum (Al), gallium (Ga), and indium (In)
* Group 14: germanium (Ge), and tin (Sn)
* Group 15: antimony (Sb), and bismuth (Bi)
main group metals also include for the context of the present invention zinc (Zn).
" "co-catalyst" as used in the present description means: a compound that activates the metal catalyst precursor to obtain the active metal catalyst.

"scavenger" as used in the present description means: a compound that reacts with impurities present in the polymerization reactor, solvent and monomer feed, thereby preventing poisoning of the catalyst during the olefin polymerization process.

"methylaluminoxane" or "MAO" as used in the present description means: a compound derived from the partial hydrolysis of trimethyl aluminum that serves as a co-catalyst for catalytic olefin polymerization.

"SMAO" as used in the present description means: supported methylaluminoxane, viz. a methylaluminoxane bound to a solid support.

"DMAO" as used in the present description means: depleted methylaluminoxane, viz. a methylaluminoxane from which the free trimethyl aluminum has been removed.

"MMAO" as used in the present description means: modified methylaluminoxane, viz. the product obtained after partial hydrolysis of trimethyl aluminium plus another trialkyl aluminium such as triisobutyl aluminium or tri-n-octyl aluminium.

"fluorinated aryl borate or fluorinated aryl borane" as used in the present description means: a borate compound having three or four fluorinated (preferably perfluorinated) aryl ligands or a borane compound having three fluorinated (preferably perfluorinated) aryl ligands.

"halide" as used in the present description means: an ion selected from the group consisting of: fluoride (F⁻), chloride (Cl⁻), bromide (Br⁻) and iodide (I⁻).

"halogen" as used in the present description means: an atom selected from the group consisting of: fluorine (F), chlorine (CI), bromine (Br) and iodine (I).

"heteroatom" as used in the present description means: an atom other than carbon or hydrogen. Heteroatom also includes halides.

"heteroatom selected from Group 14, 15, 16 or 17 of the IUPAC Periodic Table of the Elements" as used in the present description means: a heteroatom selected from Si, Ge, Sn [Group 14], N, P, As, Sb, Bi [Group 15], O, S, Se, Te [Group 16], F, CI, Br, I [Group 17].

"alkyl" as used in the present description means: a group consisting of carbon and hydrogen atoms having only single carbon-carbon bonds. An alkyl group may be straight or branched, un-substituted or substituted. It may contain aryl substituents. It may or may not contain one or more heteroatoms, such as oxygen (O), nitrogen (N), phosphorus (P), silicon (Si), tin (Sn) or sulfur (S) or halogen (i.e. F, CI, Br, I).

"aryl" as used in the present description means: a substituent derived from an aromatic ring. An aryl group may or may not contain one or more heteroatoms, such as oxygen (O), nitrogen (N), phosphorus (P), silicon (Si), tin (Sn), sulfur (S) or halogen (i.e. F, CI, Br, I). An aryl group also encloses substituted aryl groups wherein one or more hydrogen atoms on the aromatic ring have been replaced by hydrocarbyl groups.

"alkoxide" or "alkoxy" as used in the present description means: a substituent obtained by deprotonation of an aliphatic alcohol. It consists of an alkyl group bonded to an oxygen atom.

"aryloxide" or "aryloxy" or "phenoxide" as used in the present description means: a substituent obtained by deprotonation of an aromatic alcohol. It consists of an aryl group bonded to an oxygen atom.

"silyl group" as used in the present description means: a linear, branched or cyclic substituent containing 1-20 silicon atoms. Said silyl group may comprise Si-Si single or double bonds.

Expressions like for example "C1-C20" and similar formulations may refer to a range regarding a number of carbon atoms, here for example from 1 to 20 carbon atoms.

### Detailed description of the invention

The present invention relates to the novel and inventive process for the preparation of graft copolymers comprising a polyolefin main chain and one or a multiple polymer side chains and the products obtained therefrom, which polymers have finely tuned parameters, such as polarity. The polymer side chains may be polar or nonpolar.

The key to the present invention is the use of two different types of olefin monomers in step A): a first type of olefin monomer and a second type of olefin comonomer having a metal-pacified functional group; resulting in a random copolymer containing short chain branches having metal-pacified functional groups, which are subjected to a metal substitution step B) to obtain short chain branches having functional groups which are in turn used as initiator for the subsequent step C), consisting of the formation of the graft copolymer.

The formation of the polymer side chains can either be carried out by growing these polymer side chains from the functional groups (grafting from approach) or by attaching a pre-synthesized polymer to the functional groups of the randomly functionalized polyolefin produced in step B) (grafting onto approach).

Step A) is related to polymerizing at least two different types of monomers, of which at least one type has a metal-pacified functionalized group, using a catalyst system to obtain a polyolefin main chain containing randomly placed metal-pacified short chain branches.

The catalyst system used in step A) comprises: i) a Group 3-10, preferably a Group 3-8, metal catalyst or metal catalyst precursor; ii) optionally a co-catalyst; and iii) optionally a scavenger.

Step B) is related to a reaction with at least one metal substituting agent to remove the pacifier metal function and obtain a polyolefin main chain having one or multiple functionalized short chain branches. In this step the metal is replaced by a non metal atom or group that acts as an initiator group in step C). Non-limiting examples of initiator groups are -OH, -SH, -NR"'H, -NH₂. Wherein R"' is a hydrocarbyl group. More examples of functional groups are presented below.

Step C) relates to forming polymer side chains at the short chain branches on the polyolefin main chain obtained in step B). Said polyolefin main chain of step B) contains one or multiple functionalized short chain branches. In other words, step C) relates to the formation of the graft copolymer.

There are several synthetic routes according to the present invention in which the graft copolymer might be formed during step C). It might for example be grown via ROP or it may be added via nucleophilic substitution.

In an embodiment, step C) relates to obtaining a graft copolymer and is carried out by ROP of a cyclic monomer using the functionalized side chain branches on the polyolefin main chain obtained in step B) as initiators.

In an embodiment, step C) relates to obtaining a graft copolymer and is carried out by nucleophilic substitution, for example especially transesterification, of a polymer for the side chains comprising at least one carbonyl group-containing functionality, for example especially a carboxylic or carbonic acid ester functionality, using the functionalized side chain branches on the polyolefin main chain obtained in step B) as initiators.

In an embodiment, step C) relates to obtaining a graft copolymer and is carried out by a combination of ROP and nucleophilic substitution using the functionalized side chain branches on the polyolefin main chain obtained in step B) as initiators. ROP and nucleophilic substitution can be carried out simultaneously. Alternatively, first, a nucleophilic substitution is carried out using a polymer for the side chains comprising at least one carbonyl group-containing functionality carboxylic or carbonic ester acid functionality, using the functionalized side chain branches on the polyolefin main chain obtained in step B) as catalytic initiators. Subsequently, ROP is carried out by adding cyclic monomers to the functionalized graft copolymers obtained in the first sub-step of step C), which functions as initiators for the ROP.

Preferably, said all process steps are carried out directly one after another. Preferably, the process is carried out in a series of reactors.

Each of these steps will be discussed in more detail below and embodiments are discussed below.

### Step A): preparation of a polyolefin main chain

The first step in the process according to the present invention is the preparation of a polyolefin main chain that has reactive electrophilic metal pending groups. The product obtained in step A) is a metal-pacified functionalized side chain-containing polyolefin.

During step A) of the inventive process a copolymerization is carried out. At least two different olefin monomers are used; one of which is a functionalized olefin having a heteroatom-containing functional group which functionality has been pacified with a pacifying metal. This copolymerization leads to a random copolymer having one or more metal-pacified functionalized short chain branches.

In an embodiment of the present invention, the first type of olefin monomer has the following structure according to Formula I-A: 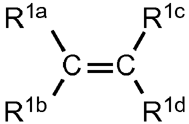 wherein C is carbon and wherein R^{1a}, R^{1b}, R^{1c}, and R^{1d} are each independently selected from the group consisting of H or hydrocarbyl with 1 to 16 carbon atoms.

The hydrocarbyl may for example be an alkyl, alkenyl, alkadienyl and alkynyl. It may also be an alicyclic substituent, such as cycloalkyl, cycloalkadienyl cycloalkenyl. It may also be an aromatic substituent, such as monocyclic or polycyclic aromatic substituent, as well as combinations thereof, such as alkyl-substituted aryls and aryl-substituted alkyls. The hydrocarbyl may be substituted with one or more non-hydrocarbyl-containing groups e.g. a heteroatom.

Preferably, the olefin monomer according to Formula I-A is selected from the group consisting of ethylene, propylene, 1-butene, 4-methyl-1-pentene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-cyclopentene, cyclohexene, norbornene, ethylidene-norbornene, and vinylidene-norbornene and one or more combinations thereof. Preferably, said first type of olefin monomer is ethylene or propylene.

In addition, a combination of for example ethylene and/or propylene on one hand and one or more other olefins on the other hand can also be used as the first type of olefin monomer. Substituted analogues of the monomers discussed above may also be used, e.g. substituted by one or more halogens. Also aromatic monomers may be used according to the present invention. It is also possible to use a combination of two or more olefins, such as a combination of ethylene with α-olefins to arrive at an LLDPE-side chain.

In an embodiment of the present invention, the second, metal-pacified functionalized olefin monomer has the following structure according to Formula I-B: 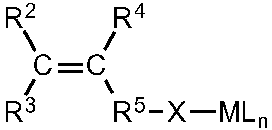 wherein C is carbon, wherein R², R³, and R⁴ are each independently selected from the group consisting of H or hydrocarbyl with 1 to 16 carbon atoms, wherein R⁵-X-MLₙ is a metal-pacified heteroatom-containing functional group.

In an embodiment, R⁵ is either not present in which case R⁵-X-MLₙ can be also written as X-MLₙ or in another embodiment R⁵ is a hydrocarbyl group. It should be noted that when X is a heteroatom-containing group, the heteroatom is bonded to M.

Preferably, X is a heteroatom or heteroatom-containing group selected from the group consisting of:
- -O-
- -S-
- -NR^{6a}-
- -CO₂-
- -C(=O)-
- -C(=S)S-
- -C(=O)S-
- -C(=S)O-
- -C(=O)N(R^{6a})-
- -C(=NR^{6a})O-
- -C(=NR^{6a})N(R^{6b})-
- -C(=NR^{6b})N(R^{6a})-
- -C(=S)N(R^{6a})-
- -C(=NR^{6a})S-
- -CH₂C(R^{6a})=C(OR^{6b})O-
- -CH₂C(R^{6a})=C(NR^{6b}R^{6c})O-
- -CH₂C(R^{6a})=P(OR^{6b}OR^{6c})O-
- -C(R^{6a})=N-
- -C(R^{6a})R^{6b}C(R^{6c})R^{6d}O-
- -C(R^{6a})R^{6b}C(R^{6c})R^{6d}NR^{6e}-
- -C(=O)-R^{6a}-C(=O)O-
- -C(R^{6b}R^{6c})N(R^{6a})-
- -S(=O)₂O-
- -C(R^{6a})(R^{6b})O-

Preferably, said heteroatom from said heteroatom-containing group X is O, S, N or one or more combinations thereof.

Preferably, R^{6a}, R^{6b}, R^{6c}, R^{6d}, R^{6e} are each independently selected from the group consisting of H or hydrocarbyl with 1 to 16 carbon atoms. Preferably, MLₙ is a metal ligated with one or more ligands L. Preferably, n is 0, 1, 2 or 3. Herein the total charge of Lₙ corresponds to the oxidation state of the metal minus 1.

M is the pacifying metal, preferably selected from the group consisting of: magnesium, calcium, boron, aluminum, gallium, bismuth, titanium, zinc, and one or more combinations thereof.

Preferably, ligand L is independently selected from the group consisting of hydride, hydrocarbyl, halide, alkoxide, aryloxide, amide, thiolate, mercaptate, carboxylate, carbamate, salen, salan, salalen, guanidinate, porphyrin, β-ketiminate, phenoxy-imine, phenoxy-amine, bisphenolate, trisphenolate, alkoxyamine, alkoxyether, alkoxythioether, subcarbonate and subsalicylate or combinations thereof.

In a preferred embodiment, the compound according to Formula I-B is a metal-pacified hydroxyl α-olefin or metal-pacified hydroxyl-functionalized ring-strained cyclic olefin monomer, preferably an aluminum-pacified hydroxyl olefin monomer.

Metal-pacified hydroxyl α-olefin monomers correspond to Formula I-B wherein R², R³, and R⁴ are each H and wherein X is -O- and wherein R⁵ is either -C(R^{7a})(R^{7b})- or a plurality of -C(R^{7a})(R^{7b})- groups, wherein R^{7a}, and R^{7b} are each independently selected from the group consisting of H or hydrocarbyl with 1 to 16 carbon atoms. An example of an R⁵ group is -(CH₂)₉-.

Metal-pacified hydroxyl-functionalized ring-strained cyclic olefins (also called internal olefins) are typically hydroxyl functionalized norbornenes, preferably metal-pacified 5-norbornene-2-methanol. They correspond to Formula I-B wherein R² and R⁴ are H and R³ and R⁵ together for a ring structure that is functionalized with X-MLₙ, wherein X is -O-.

Preferably, said metal-pacified functionalized olefin monomer is prepared in situ before the metal catalyst or metal catalyst precursor is added. The metal-pacified functionalized olefin monomer can for example be prepared by the deprotonation reaction of a protic functionalized olefin monomer according to Formula I-C (below) with a metal pacifying agent.

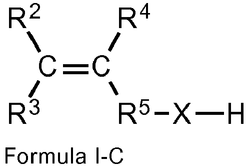

In an embodiment, the metal pacifying agent is selected from metal hydrocarbyl species LₙMR^{7c}ₚ. L, M and n are as specified above. R^{7c} is a hydride or hydrocarbyl with 1 to 16 carbon atoms and p is 1, 2 or 3. Herein the total charge of Lₙ + R^{7c}ₚ corresponds to the oxidation state of the metal.

Preferably, the metal pacifying agent is a mono-, di- or trihydrocarbyl aluminum, mono-, di- or trihydrocarbyl boron, mono-, di- or trihydro boron, mono-, di- or trihydrocarbyl gallium, mono-, di- or trihydrocarbyl bismuth, mono- or dihydrocarbyl zinc, mono- or dihydrocarbyl magnesium, mono- or dihydrocarbyl calcium, mono-, di-, tri- or tetrahydrocarbyl titanium and one or more combinations thereof.

Preferably, said metal pacifying agent is selected from trimethyl aluminum, triethyl aluminum, tri(i-propyl) aluminum, tri(n-butyl) aluminum, tri-isobutyl aluminum (TIBA), tri(t-butyl) aluminum, tri(n-hexyl) aluminum, tri(n-octyl) aluminum, di(isobutyl) aluminum hydride (DIBALH), dimethyl aluminum 2,6-di(t-butyl)-4-methyl-phenoxide, diethyl aluminum 2,6-di(t-butyl)-4-methyl-phenoxide, di-isobutyl aluminum 2,6-di(t-butyl)-4-methyl-phenoxide, i-butyl aluminum-bis(di-trimethylsilyl)amide), n-octyl aluminum-di(pyridine-2-methoxide), bis(n-octadecyl)-i-butyl aluminum, i-butyl aluminum-bis(di(n-pentyl)amide), n-octyl aluminum-bis(2,6-di-t-butylphenoxide), n-octyl aluminum-di-ethyl(1-naphthyl)amide), ethyl aluminum-bis(t-butyldimethylsiloxide), ethyl aluminum-di(bis(trimethylsilyl)amide), ethyl aluminum-bis(2,3,6,7-dibenzo-1-azacycloheptane-amide), n-octyl aluminum-bis(2,3,6,7-dibenzo-1-azacycloheptane-amide), n-octyl- aluminum-bis(dimethyl(t-butyl)siloxide, trimethyl gallium, triethyl gallium, tri-isobutyl gallium, di-n-butyl magnesium (DBM), dimethyl magnesium, butyl-octyl-magnesium, butyl-ethyl-magnesium, butyl magnesium 2,6-di(t-butyl)-4-methyl-phenoxide, benzyl calcium 2,6-di(t-butyl)-4-methyl-phenoxide, methyl zinc 2,6-di(t-butyl)-4-methyl-phenoxide, diethyl zinc (DEZ), dimethyl zinc, di-isopropyl zinc, di-t-butyl zinc, di-(n-hexyl) zinc, ethyl zinc (t-butoxide), ethyl zinc 2,6-di(t-butyl)-4-methyl-phenoxide, trimethyl boron, tributyl boron, diethyl boron 2,6-di(t-butyl)-4-methyl-phenoxide, 9-borabicyclo(3.3.1)nonane, catecholborane, diborane.

In an embodiment, the metal pacifying agent is selected from the group consisting TIBA, DIBALH, DBM, DEZ.

It should be noted that the metal pacifying agent might also act as a chain transfer agent during the polymerization reaction of step A).

### Catalyst system suitable for use in step A)

A catalyst system for use in step a) comprises the following components:
i) a metal catalyst or metal catalyst precursor comprising a metal from Group 3-10 of the IUPAC Periodic Table of elements; and
ii) optionally a co-catalyst;
iii) optionally a scavenger.

Suitable metal catalysts and/or metal catalyst precursors are discussed in this section as well as suitable co-catalysts, which are optional. A metal catalyst for step A) can be used without co-catalyst, a metal catalyst precursor for step A) requires a co-catalyst to obtain the actual active catalyst.

### Metal catalyst or metal catalyst precursor suitable for step A)

In the section below several metal catalysts or metal catalyst precursors, which may be used to prepare the metal catalyst according to the present invention, are specified. Metal catalysts that are suitable for use in step A) of the present invention may be obtained by reaction the metal catalyst precursors with an co-catalyst either prior to use in step A) or by reaction in situ.

According to the present invention, the metal catalyst has a metal center selected from a Group 3 metal, a Group 4 metal, a Group 5 metal, a Group 6 metal, a Group 7 metal, a Group 8 metal, a Group 9 metal or a Group 10 metal, preferably Y, Sm, Ti, Zr, Hf, V, Cr, Fe, Co, Ni, Pd.

In an embodiment, a metal catalyst precursor according to the formula: (C5R⁸ₘ)(R⁹)ₚ(C5R⁸ₘ)M(L¹)ₙ (Formula II) may be used in the present invention. 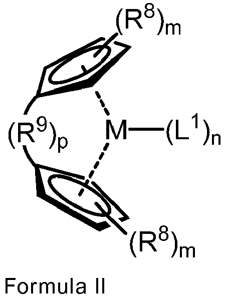
wherein M is a metal selected from the group consisting of Group 3 metals, Group 4 metals, Group 5 metals and Group 6 metals, preferably Y, Sm, Ti, Zr, Hf, V, Cr; most preferably Zr or Hf.
wherein M has an oxidation state selected from the group consisting of +2, +3, +4 or +5,
wherein (C₅R⁸ₘ) is a substituted cyclopentadienyl, each R⁸ is independently selected from the group consisting of H or C1-C20 hydrocarbyl or two R⁸ groups are joined together to form part of a substituted or unsubstituted ring having 4 to 20 carbon atoms; which ring may comprise saturated or unsaturated carbon-carbon bonds,
wherein R⁹ is a bridging group selected from the group consisting of a silyl group having up to 20 silicon atoms, and an unsubstituted or substituted C1-C30 hydrocarbyl group,
wherein L¹ is a neutral, monoanionic, dianionic or polyvalent anionic Lewis base ligand, or two L¹ groups are joined together to form a neutral chelating Lewis base ligand, an anionic chelating ligand or a conjugated diene having from 4 to 30 non-hydrogen atoms being bound to M by means of delocalized π-electrons, L¹ is a ligand to M;
wherein p is 0, 1 or 2;
wherein p + m is 5;
wherein n is 1 or 2; and
on the proviso that when n is 2 and the two L¹ groups are a Lewis base or form a conjugated diene, M is in the +2 oxidation state;
wherein the combined oxidation state of the n ligand(s) L¹ is equal to the oxidation state of M minus 2. This will lead to a neutral metal catalyst precursor due to the oxidation state of -1 for each of the cyclopentadienyl ligands.

C₅R⁸ₘ is a substituted cyclopentadienyl group as discussed above. In an embodiment, said substituted cyclopentadienyl is an indenyl group. Formula III depicts said indenyl group. In said indenyl group, two R⁸ groups together form an aromatic ring. On the cyclopentadienyl group m-2 R⁸ groups remain. Said aromatic ring may be substituted with four R¹⁰ groups. Each R¹⁰ is independently selected from the group consisting of hydrogen and unsubstituted or substituted C1-C30 hydrocarbyl. Alternatively, the 6-membered ring of the indenyl group might me hydrogenated to form a saturated ring. When two of these indenyl groups are present on the metal M in the metal catalyst precursor according to Formula II, the metal catalyst precursor can be considered to be an indenyl metallocene.

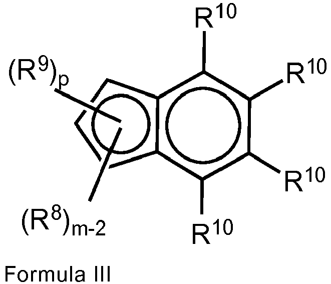

In an embodiment, the indenyl groups according to Formula III are bridged via the 1-position or the 2-position - preferably via the 1-position - according to the IUPAC Nomenclature of Organic Chemistry, 1979, rule A 21.1(2) shown in Formula IV below:

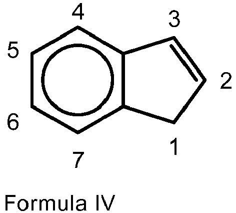

In an embodiment, the R⁹ hydrocarbyl bridging group of the metal catalyst precursor according to Formula II is bonded to the indenyl group at the 1-position. In another embodiment, the R⁹ hydrocarbyl bridging group of the metal catalyst precursor according to Formula II is bonded to the indenyl group at the 2-position.

In an embodiment, said substituted cyclopentadienyl of the metal catalyst precursor according to Formula II is a fluorenyl group. Formula V depicts said fluorenyl group. In said fluorenyl group, two R⁸ groups together form a first aromatic ring and two other R⁸ groups form a second aromatic ring. On the cyclopentadienyl group m-4 R⁸ groups remain; hence when p is 1 there a no R⁸ groups since m is 4 and when p is 0 there is one R⁸ group since m is 5. Said aromatic rings of the fluorenyl group may be substituted; each ring with four R¹¹ groups. Each R¹¹ group is independently selected from the group consisting of hydrogen and unsubstituted or substituted C1-C30 hydrocarbyl. Alternatively, the 6-membered rings of the fluorenyl group might me hydrogenated to form saturated rings.

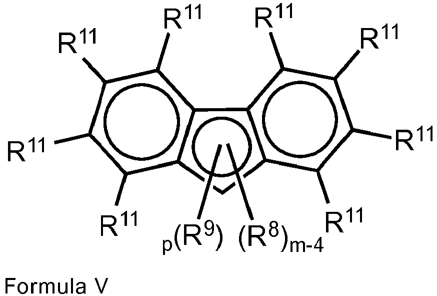

In an embodiment, the fluorenyl groups in the metal catalysts or metal catalyst precursors according to Formula II are bridged via the 9-position via R⁹ according to the IUPAC Nomenclature of Organic Chemistry, 1979, rule A 21.1 (10) shown in Formula VI below:

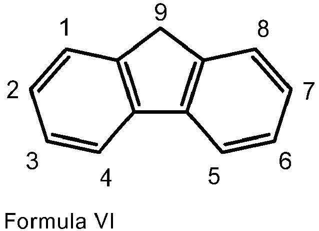

In an embodiment of the metal catalysts or metal catalyst precursors according to Formula II, p is 0 and m is 5. In this embodiment there is no bridging R⁹ group in between the two (substituted) cyclopentadienyl groups. This embodiment can be depicted by Formula VII:

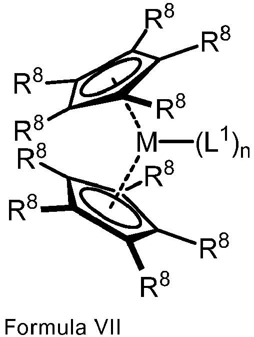

In another embodiment of the metal catalysts or metal catalyst precursors according to Formula II, p is 1 and m is 4. In this embodiment there is one bridging R⁹ group in between the two (substituted) cyclopentadienyl groups. This embodiment can be depicted by Formula VIII:

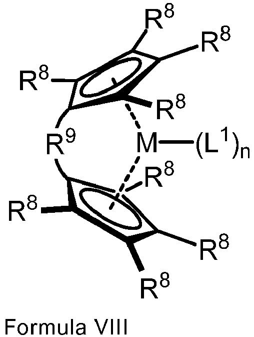

In yet another embodiment of the metal catalysts or metal catalyst precursors according to Formula II, p is 2 and m is 3. In this embodiment there are two bridging R⁹ groups in between the two substituted cyclopentadienyl groups. The bridging R⁹ groups may be in 1,2 position with respect to each other as depicted by Formula IX or they may be in 1,3 position with respect to each other (not shown in Formula):

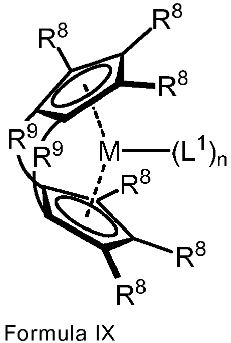

As discussed above, L¹ is a ligand to M. In an embodiment L¹ is selected from the group consisting of a hydride group, a halide group, a hydrocarbyl group, an alkoxy group (-OR¹²), an amide (-NR¹²R¹³), group, a phosphide group (-PR¹²R¹³), a thiolate group (-SR¹²), wherein R¹² and R¹³ are each independently selected from the group consisting of hydrogen, hydrocarbyl, diene, ether, ester, ketone, aldehyde, amine, amide, imine, nitrile, thioether, sulfonyl, sulfoxide, sulfonate, sulfate, phosphine, phosphine oxide, phosphinite, phosphonite, phosphonate, phosphinate and phosphate.

In an embodiment L¹ is a neutral or monoanionic ligand bonded to the metal M by means of a M-C or a M-X bond (wherein X is O, S, N or P). The ligand L¹ is in this embodiment additionally capable to non-covalently interact with M via one or more functional groups, said functional group being selected from the group consisting of F, CI, Br, I, ether, ester, ketone, aldehyde, amine, amide, imine, nitrile, thioether, sulfonyl, sulfoxide, sulfonate, sulfate, phosphine, phosphine oxide, phosphinite, phosphonite, phosphonate, phosphinate and phosphate functionalities.

In an embodiment, L¹ is selected from the group consisting of CI, Br, Me, ethyl, iBu, allyl, benzyl, phenyl, OMe, OEt, OtBu, OSiMe₃, NMe₂, NEt₂, NiPr₂, N(SiMe₂H)₂, N(SiMe₃)₂. Alternatively L¹ can be chosen from the group consisting of 2-MeO-C₆H₄-, 2,6-(MeO)₂-C₆H₃-, 2-MeO-C₆H₄CH₂-, 2,6-(MeO)₂-C₆H₃CH₂-, 2-Me₂N-C₆H₄-, 2-Me₂NCH₂C₆H₄-, 2-Me₂N-C₆H₄CH₂-, 2-C₅H₅N-CH₂-, Me₂PCH₂, C₆H₅SCH₂- and Me₂NCH₂CH₂N(Me)-. Alternatively, L¹ can be selected from the group consisting of furan, tetrahydrofuran, diethyl ether, 1,4-dioxane, dimethoxyethane, thiophene, tetrahydrothiophene, dimethyl sulfide, acetone, ethyl-methyl ketone, acetonitrile, benzonitrile, pyridine, 2-picoline, 2,6-lutidine, 2,4,6-collidine, 4-N,N-dimethylaminopyridine, N-methyl imidazole, N-methyl pyrrole, N,N,N',N'-tetramethylethylene diamine, trimethylamine, trimethyl phosphine, dimethylpheynl phosphine, diphenylmethyl phosphine, triphenyl phosphine, tristolyl phosphine and tricyclohexyl phosphine.

In the metal catalyst or metal catalyst precursor according to Formula II, R⁹ is a bridging group that is bonded to the two cyclopentadienyl groups.

In an embodiment, the R⁹ group is selected from the group disclosed in US5,646,322 on column 3, line 41 to column 4, line 14. For example, R⁹ may be a hydrocarbon group (such as an alkenyl group, an arylalkenyl group, an aryl group) or a group with at least one heteroatom selected from group 14, 15 or 16 of the IUPAC Periodic System of Elements. Preferably, R⁹ group is a (substituted) methylydene or ethylydene group. If R⁹ comprises a heteroatom, this heteroatom is preferably selected from the group consisting of silicon, germanium, nitrogen, phosphorus, oxygen, sulphur and tin. Examples of bridging R⁹ groups are: dimethyl methylene, diphenyl methylene, ethylene, dimethyl silyl, and diphenyl silyl, which may each independently be substituted with hydrocarbyl groups or heteroatom-bonded hydrocarbyl functionalities. Examples of aryl groups that can form part of a bridging R⁹ group are: phenylene, 2,2'-dimethylbiphenyl, 3,3'-dimethyldiphenyl, pyridine-2,5-diyl and an inorganic compound containing an aromatic group, for instance a metallocene compound and a ferrocene compound. Examples of borane, amine and phosphine bridging groups are: phenyl borane, phenyl phosphine, and aniline, respectively, which may each independently be substituted with hydrocarbyl groups or heteroatom-bonded hydrocarbyl functionalities.

The R⁸ groups are independent substituents of the cyclopentadienyl group in the metal catalyst precursor according to Formula II. The substituents R⁸ may each independently be selected from the group consisting of hydrogen and a C1-C30 hydrocarbyl group, preferably a C1-C20 hydrocarbyl group, such as alkyl, aryl, alkyl-substituted aryls and aryl-substituted alkyls. Examples of suitable alkyl groups as R⁸ groups are methyl, ethyl, n-propyl, i-propyl, n-butyl, i-butyl, t-butyl, n-hexyl, n-decyl and ademantyl. Examples of suitable aryl groups as R⁸ groups are phenyl, mesityl, tolyl and cumenyl. Examples of suitable arylalkyl groups as R⁸ groups are benzyl, styryl and trityl. Examples of suitable alkyl-substituted aryl groups as R⁸ groups are tolyl, pentamethylbenzyl and xylyl. Examples of other as R⁸ groups are halides, such as chloride, bromide, fluoride and iodide, alkoxides, such as methoxy, ethoxy and aryloxides such as phenoxy. In an embodiment, two adjacent R⁸ groups may be connected with each other in a ring system, for example, indenyl or fluorenyl can be formed as discussed above.

In an embodiment, said R⁸ groups may each independently comprise one or more heteroatoms from group 14, 15 or 16 of the Periodic System of Elements. Examples of such heteroatom containing R⁸ groups are: alkylsulphides (e.g. MeS-, or n-butyl-S-), arylsulphides (e.g. PhS-), amines (e.g. Me₂N-, (n-butyl)₂N-), Si-, Sn- or B-containing groups (e.g. Me₃Si-, Me₃Sn- or Et₂B-) or P-containing groups (e.g. Me₂P- or Ph₂P-).

As discussed above, R¹⁰ groups are substituents of the indenyl and/or fluorenyl group. The substituents R¹⁰ may each independently be a hydrogen or a C1-C30 hydrocarbyl group, preferably a C1-C20 hydrocarbyl group, such as alkyl, aryl, alkyl-substituted aryls and aryl-substituted alkyls. Examples of suitable alkyl groups as R¹⁰ groups are methyl, ethyl, n-propyl, i-propyl, n-butyl, i-butyl, t-butyl, n-hexyl, n-decyl and ademantyl. Examples of suitable aryl groups as R¹⁰ groups are phenyl, mesityl, tolyl and cumenyl. Examples of suitable arylalkyl groups as R¹⁰ groups are benzyl, styryl and trityl. Examples of suitable alkyl-substituted aryl groups as R¹⁰ groups are tolyl, pentamethylbenzyl and xylyl. Examples of other R¹⁰ groups are halides, such as chloride, bromide, fluoride and iodide, alkoxides, such as methoxy, ethoxy and aryloxides such as phenoxy.

In an embodiment said R¹⁰ groups may each independently comprise one or more heteroatoms from group 14, 15 or 16 of the Periodic System of Elements. Examples of such a heteroatom containing R¹⁰ groups are: alkylsulphides (e.g. MeS-, or n-butyl-S-), arylsulphides (e.g. PhS-), amines (e.g. Me₂N-, (n-butyl)₂N-), Si-, Sn- or B-containing groups (e.g. Me₃Si-, Me₃Sn- or Et₂B-) or P-containing groups (e.g. Me₂P-or Ph₂P-).

As discussed above, R¹¹ groups are substituents of the fluorenyl group. The substituents R¹¹ may each independently be hydrogen or a C1-C30 hydrocarbyl group, preferably a C1-C20 hydrocarbyl group such as alkyl, aryl, alkyl-substituted aryls and aryl-substituted alkyls. Examples of suitable alkyl groups as R¹¹ groups are methyl, ethyl, n-propyl, i-propyl, n-butyl, i-butyl, t-butyl, n-hexyl, n-decyl and ademantyl. Examples of suitable aryl groups as R¹¹ groups are phenyl, mesityl, tolyl and cumenyl. Examples of suitable arylalkyl groups as R¹¹ groups are benzyl, styryl and trityl. Examples of suitable alkyl-substituted aryl groups as R¹¹ groups are tolyl, pentamethylbenzyl and xylyl. Examples of other R¹¹ groups are halides, such as chloride, bromide, fluoride and iodide, alkoxides, such as methoxy, ethoxy and aryloxides such as phenoxy.

In an embodiment said R¹¹ groups may each independently comprise one or more heteroatoms from group 14, 15 or 16 of the Periodic System of Elements. Examples of such a heteroatom containing substituents are: alkylsulphides (e.g. MeS-, or n-butyl-S-), arylsulphides (e.g. PhS-), amines (e.g. Me₂N-, (n-butyl)₂N-), Si-, Sn- or B-containing groups (e.g. Me₃Si-, Me₃Sn- or Et₂B-) or P-containing groups (e.g. Me₂P-or Ph₂P-).

Non-limiting examples of metal catalysts or metal catalyst precursors according to Formula II according to the present invention are metal-indenyl compounds, preferably 1-indenyl or 2-indendyl compounds. 2-Indenyl metal catalysts or metal catalyst precursors as disclosed in, and incorporated here by reference, US 6,342,622, see examples, column 11, line 50 are suitable for the present invention. The structure of said metal catalysts or metal catalyst precursors is shown below (Formula X).

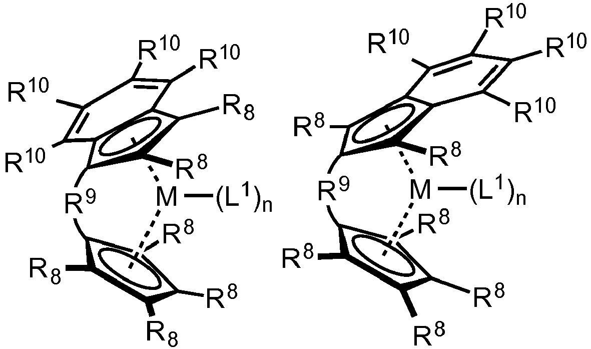

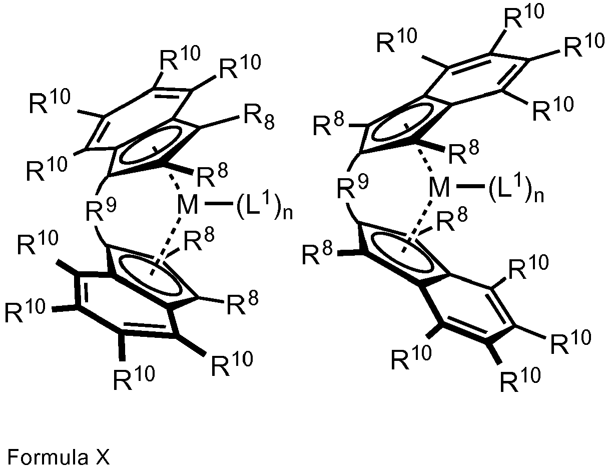

Other non-limiting examples of catalysts or metal catalyst precursors according to Formula II according to the present invention are metal-fluorenyl compounds. The structure of said metal catalyst precursors is shown below (Formula XI).

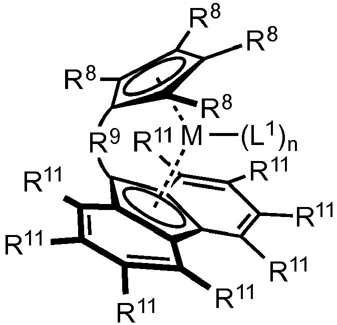

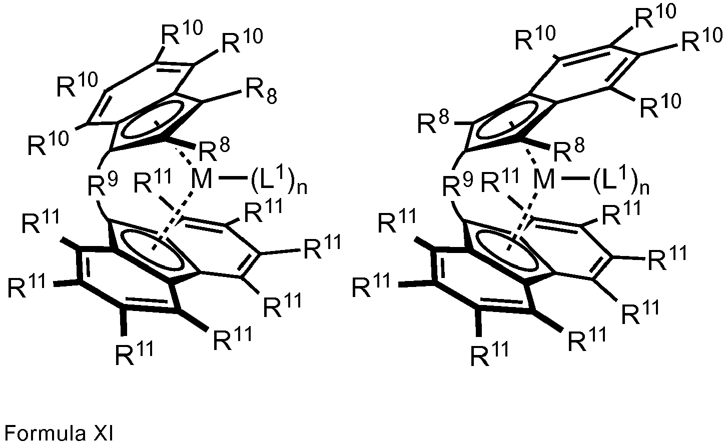

In an embodiment, the metal catalysts or metal catalyst precursors according to Formula II is Me₂Si(Ind)₂ZrCl₂ In this embodiment, R⁹ is -Si(Me)₂-, p is1, both C₅R⁸₄ are indenyl (all R⁸ and all R¹⁰ groups on indenyl are H), M is Zr⁴⁺; L¹ is Cl⁻ and n is 2.

In another embodiment, the metal catalysts or metal catalyst precursors according to Formula II is Me₂Si(2-Me-4-Ph-Ind)₂ZrCl₂. In this embodiment, R⁹ is -Si(Me)₂-, p is1, both C₅R⁸₄ are 2-Me-4-Ph-indenyl, M is Zr⁴⁺, and L¹ is Cl⁻ and n is 2.

In another embodiment, the metal catalyst is (C₅Me₅)₂Sm(THF)₂. In this embodiment, p is 0, m is 5, all R⁸ groups are CH₃; M is Sm²⁺, and L¹ is tetrahydrofuran and n is 2.

In another embodiment, the metal catalyst precursor is [ortho-bis(2-indenyl)benzene] zirconiumdichloride. In this embodiment, R⁹ is 2,2'-biphenyl; p is 1 and m is 4; two adjacent R⁸ groups together form an aromatic ring to give an indenyl group; all of the remaining R⁸ groups and all of the R¹⁰ groups on the indenyl are H; n is 2 and each L¹ is CI; M is Zr⁴⁺.

In another embodiment, the metal catalyst or metal catalyst precursor is a Cs or C₁ symmetric (C₅R⁸₄)R⁹(C₁₃R⁸₈)ML¹ₙ, where C₅R⁸₄ is an unsubstituted or substituted cyclopentadienyl, and C₁₃R¹¹₈ is an unsubstituted fluorenyl group or a substituted fluorenyl group; and the bridging R⁹ group is selected from the group consisting of-Si(Me)₂-, -Si(Ph)₂-, -C(Me)₂- or -C(Ph)₂-, thus producing C₁- and Cₛ-symmetric metallocenes.

Non-limiting examples of zirconocene dichloride metal catalyst precursors suitable for use in the present invention include: bis(cyclopentadienyl) zirconium dichloride, bis(methyl-cyclopentadienyl) zirconium dichloride, bis(n-propyl-cyclopentadienyl) zirconium dichloride, bis(n-butyl-cyclopentadienyl) zirconium dichloride, bis(1,3-dimethyl-cyclopentadienyl) zirconium dichloride, bis(1,3-di-t-butyl-cyclopentadienyl) zirconium dichloride, bis(1,3-ditrimethylsilyl-cyclopentadienyl) zirconium dichloride, bis(1,2,4-trimethyl-cyclopentadienyl) zirconium dichloride, bis(1,2,3,4-tetramethylcyclopentadienyl) zirconium dichloride, bis(pentamethylcyclopentadienyl) zirconium dichloride, bis(indenyl) zirconium dichloride, bis(2-phenyl-indenyl) zirconium dichloride, bis(fluorenyl) zirconium dichloride, bis(tetrahydrofluorenyl) zirconium dichloride, dimethylsilyl-bis(cyclopentadienyl) zirconium dichloride, dimethylsilyl-bis(3-t-butyl-cyclopentadienyl) zirconium dichloride, dimethylsilyl-bis(3-trimethylsilyl-cyclopentadienyl)zirconium dichloride, dimethylsilyl-bis(tetrahydrofluorenyl) zirconium dichloride, dimethylsilyl-(1-indenyl)(cyclopentadienyl) zirconium dichloride, dimethylsilyl-(1-indenyl)(fluorenyl) zirconium dichloride, dimethylsilyl-(1-indenyl)(octahydrofluorenyl) zirconium dichloride, *rac*-dimethylsilyl-bis(2-methyl-3-t-butyl-cyclopentadienyl) zirconium dichloride, *rac*-dimethylsilyl-bis(1-indenyl) zirconium dichloride, *rac*-dimethylsilyl-bis(4,5,6,7-tetrahydro-1-indenyl) zirconium dichloride, *rac*-dimethylsilyl-bis(2-methyl-1-indenyl) zirconium dichloride, *rac-*dimethylsilyl-bis(4-phenyl-1-indenyl) zirconium dichloride, rac-dimethylsilyl-bis(2-methyl-4-phenyl-1-indenyl) zirconium dichloride, *rac*-ethylene-bis(1-indenyl) zirconium dichloride, rac-ethylene-bis(4,5,6,7-tetrahydro-1-indenyl) zirconium dichloride, *rac*-1,1,2,2-tetramethylsilanylene-bis(1-indenyl) zirconium dichloride, *rac-*1,1,2,2-tetramethylsilanylene-bis(4,5,6,7-tetrahydro-1-indenyl) zirconium dichloride, *rac*-ethylidene(1-indenyl)(2,3,4,5-tetramethyl-1-cyclopentadienyl) zirconium dichloride, *rac*-[1-(9-fluorenyl)-2-(2-methylbenzo[b]indeno[4,5-d]thiophen-1-yl)ethane]zirconium dichloride, dimethylsilyl bis(cyclopenta-phenanthren-3-ylidene) zirconium dichloride, dimethylsilyl bis(cyclopenta-phenanthren-1-ylidene) zirconium dichloride, dimethylsilyl bis(2-methyl-cyclopenta-phenanthren-1-ylidene) zirconium dichloride, dimethylsilyl bis(2-methyl-3-benz-inden-3-ylidene) zirconium dichloride, dimethylsilyl-bis[(3a,4,5,6,6a)-2,5-dimethyl-3-(2-methylphenyl)-6*H*-cyclopentathien-6-ylidene]zirconium dichloride, dimethylsilyl-(2,5-dimethyl-1-phenylcyclopenta[*b*]pyrrol-4(1*H*)-ylidene)(2-methyl-4-phenyl-1-indenyl)zirconium dichloride, bis(2-methyl-1-cyclopenta-phenanthren-1-yl)zirconium dichloride, [*ortho*-bis(4-phenyl-2-indenyl) benzene]zirconium dichloride, [*ortho*-bis(5-phenyl-2-indenyl)benzene]zirconium dichloride, [*ortho*-bis(2-indenyl)benzene]zirconium dichloride, [*ortho*-bis(1-methyl-2-indenyl)benzene]zirconium dichloride, [2,2'-(1,2-phenyldiyl)-1,1'dimethylsilyl-bis(indenyl)]zirconium dichloride, [2,2'-(1,2-phenyldiyl)-1,1'-(1,2-ethanediyl)-bis(indenyl)]zirconium dichloride, dimethylsilyl-(cyclopentadienyl)(9-fluorenyl) zirconium dichloride, diphenylsilyl-(cyclopentadienyl)(fluorenyl)zirconium dichloride, dimethylmethylene-(cyclopentadienyl)(fluorenyl)zirconium dichloride, diphenylmethylene-(cyclopentadienyl)(fluorenyl)zirconium dichloride, dimethylmethylene-(cyclopentadienyl)(octahydrofluorenyl)zirconium dichloride, diphenylmethylene-(cyclopentadienyl)(octahydrofluorenyl)zirconium dichloride, dimethylmethylene-(cyclopentadienyl)(2,7-di-t-butyl-fluorenyl)zirconium dichloride, diphenylmethylene-(cyclopentadienyl)(2,7-di-t-butyl-fluorenyl)zirconium dichloride, dimethylmethylene-(3-methyl-1-cyclopentadienyl)(fluorenyl)zirconium dichloride, diphenylmethylene-(3-methyl-1-cyclopentadienyl)(fluorenyl)zirconium dichloride, dimethylmethylene-(3-cyclohexyl-1-cyclopentadienyl)(fluorenyl)zirconium dichloride, diphenylmethylene-(3-cyclohexyl-1-cyclopentadienyl)(fluorenyl)zirconium dichloride, dimethylmethylene-(3-t-butyl-1-cyclopentadienyl)(fluorenyl)zirconium dichloride, diphenylmethylene-(3-t-butyl-1-cyclopentadienyl)(fluorenyl)zirconium dichloride, dimethylmethylene-(3-ademantyl-1-cyclopentadienyl)(fluorenyl)zirconium dichloride, diphenylmethylene-(3-ademantyl-1-cyclopentadienyl)(fluorenyl)zirconium dichloride, dimethylmethylene-(3-methyl-1-cyclopentadienyl)(2,7-di-t-butyl-fluorenyl)zirconium dichloride, diphenylmethylene-(3-methyl-1-cyclopentadienyl)(2,7-di-t-butyl-fluorenyl) zirconium dichloride, dimethylmethylene-(3-cyclohexyl-1-cyclopentadienyl)(2,7-di-t-butyl-fluorenyl)zirconium dichloride, diphenylmethylene-(3-cyclohexyl-1-cyclopentadienyl)(2,7-di-t-butyl-fluorenyl)zirconium dichloride, dimethylmethylene-(3-t-butyl-1-cyclopentadienyl)(2,7-di-t-butyl-fluorenyl)zirconium dichloride, diphenylmethylene-(3-t-butyl-1-cyclopentadienyl)(2,7-di-t-butyl-fluorenyl)zirconium dichloride, dimethylmethylene-(3-methyl-cyclopentadienyl)(octahydro-octamethyl-dibenzo-fluorenyl)zirconium dichloride, diphenylmethylene-(3-methyl-cyclopentadienyl)(octahydro-octamethyl-dibenzo-fluorenyl)zirconium dichloride, dimethylmethylene-(3-cyclohexyl-cyclopentadienyl)(octahydro-octamethyl-dibenzo-fluorenyl)zirconium dichloride, diphenylmethylene-(3-cyclohexyl-cyclopentadienyl)(octahydro-octamethyl-dibenzo-fluorenyl)zirconium dichloride, dimethylmethylene-(3-t-butyl-cyclopentadienyl)(octahydro-octamethyl-dibenzo-fluorenyl)zirconium dichloride, diphenylmethylene-(3-t-butyl-cyclopentadienyl)(octahydro-octamethyl-dibenzo-fluorenyl)zirconium dichloride, dimethylmethylene-(3-ademantyl-cyclopentadienyl)(octahydro-octamethyl-dibenzo-fluorenyl)zirconium dichloride, diphenylmethylene-(3-ademantyl-cyclopentadienyl)(octahydro-octamethyl-dibenzo-fluorenyl)zirconium dichloride.

Other examples are the metal catalyst precursors cited in the list directly above wherein Lₙ is dimethyl, dibenzyl, diphenyl, 1,4-dimethyl-2-butene-1,4-diyl or 2,3-dimethyl-2-butene-1,4-diyl; or the metal is hafnium. In other words, the hafnium dichloride, zirconium dimethyl, hafnium dimethyl, zirconium dibenzyl, hafnium dibenzyl, zirconium 1,4-dimethyl-2-butene-1,4-diyl, hafnium 1,4-dimethyl-2-butene-1,4-diyl, zirconium 2,3-dimethyl-2-butene-1,4-diyl or hafnium 2,3-dimethyl-2-butene-1,4-diyl variants of the zirconium dichloride metal catalyst precursor cited in the list directly above.

### Mono cyclopentadienyl catalysts and catalysts precursors

Another type of metal catalysts or metal catalyst precursors that are suitable for use in the present invention are the so-called mono cyclopentadienyl catalysts or metal catalyst precursors. In an embodiment, a Group 3, Group 4, Group 5 or Group 6 or lanthanide metal catalyst or metal catalyst precursor according to the formula (C₅R⁸ₘ)(R⁹)ₚ(K¹)_{q}M(L¹)ₙ (Formula XII) may be used as the metal catalyst or metal catalyst precursor according to the present invention. 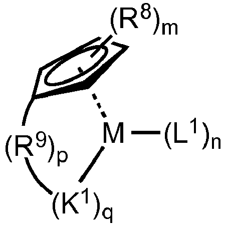 (C⁵R⁸ₘ)(R⁹)ₚ(K¹)_{q}M(L¹)ₙ (Formula XII)
wherein M is a metal selected from the group consisting of Group 3 metals, Group 4 metals, Group 5 metals and Group 6 metals, preferably Y, Sc, Sm, Ti, Zr, Hf, V or Cr; most preferably Ti or Cr.
wherein M has an oxidation state selected from the group consisting of +2, +3, +4 or +5,
wherein (C₅R⁸ₘ) is as discussed above;
wherein L¹ is as discussed above;
wherein K¹ is a neutral or anionic heteroatom containing group selected from the group consisting of: -O-, -OR¹⁴, -S-, -SR¹⁴, -NR¹⁴-, -NR¹⁴R¹⁵, -PR¹⁴-,-PR¹⁴R¹⁵, an -OSi(R¹⁴)₂O- group, and a -N=C(R¹⁴)O- group, wherein R¹⁴ and R¹⁵ are each independently selected from the group consisting of silyl, a linear or cyclic hydrocarbyl and one or more combinations thereof, and wherein R¹⁴ and R¹⁵ each independently have up to 30 carbon and/or silicon atoms; wherein preferably R¹⁴ and R¹⁵ are selected from the group consisting of methyl, ethyl, n-propyl, i-propyl, n-butyl, s-butyl, t-butyl, pentyl, heptyl, cyclopentyl, cyclohexyl, norbornyl, benzyl, phenyl and ademantyl;
wherein p is 0, 1 or 2;
wherein q is p or p+1;
wherein p + m is 5
wherein n is 1, 2 or 3; and
wherein the combined oxidation state of the n ligand(s) L¹ is equal to the oxidation state of M minus 1 when K¹ is neutral and minus (1 + q) when K¹ is anionic. This will lead to a neutral metal catalyst precursor due to the oxidation state of -1 for the cyclopentadienyl ligand and every anionic K¹.

In an embodiment, the present invention relates to a Group 3 metal, Group 4 metal, Group 5 metal and Group 6 metal or lanthanide metal catalyst or metal catalyst precursor according to the formula (C₅R⁸₅)K²_{q}M(L¹)ₙ (Formula XIII): 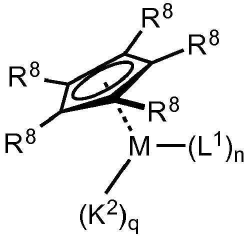 (C₅R⁸₅)(K²)_{q}M(L¹)ₙ (Formula XIII)
wherein M is a metal selected from the group consisting of Group 3 metals, Group 4 metals, Group 5 metals or Group 6 metals, preferably Y, Sm, Ti, Zr, Hf, V or Cr; most preferably Ti;
wherein M has an oxidation state selected from the group consisting of +2, +3, +4 or +5;
wherein (C₅R⁸₅) is a substituted cyclopentadienyl as discussed above;
wherein L¹ is as discussed above;
wherein n is 1, 2 or 3;
wherein K² is an anionic heteroatom-containing group selected from the groups consisting of -OR¹⁴, -SR¹⁴, -NR¹⁴R¹⁵, -PR¹⁴R¹⁵, -OSiR¹⁴R¹⁵R¹⁶, -N(SiR¹⁴R¹⁵R¹⁶)₂,-N=CR¹⁴R¹⁵, -N=PR¹⁴R¹⁵R¹⁶, -N(R¹⁴)C(R¹⁵)(=O), -OC(R¹⁴)(=NR¹⁵),-N(R¹⁴)C(R¹⁵)(=NR¹⁶), -N=C(R¹⁴)(NR¹⁵R¹⁶), -N(R¹⁴)C(NR¹⁵R¹⁶)(=O),-OC(NR¹⁴R¹⁵)(=NR¹⁶), -N(R¹⁴)C(NR¹⁵R¹⁶)(=NR¹⁷), wherein R¹⁴, R¹⁵ are as discussed above and wherein R¹⁶ and R¹⁷ are each independently selected from the group consisting of silyl, a linear or cyclic hydrocarbyl and combinations thereof, and wherein R¹⁶ and R¹⁷ have up to 30 carbon and/or silicon atoms; wherein preferably R¹⁶ and R¹⁷ are selected from the group consisting of methyl, ethyl, n-propyl, i-propyl, n-butyl, s-butyl, t-butyl, pentyl, heptyl, cyclopentyl, cyclohexyl, norbornyl, benzyl, phenyl and ademantyl;
wherein q is 0 or 1 and
wherein the combined oxidation state of the ligand(s) L¹ is equal to the oxidation state of M minus (1+q). This will lead to a neutral metal catalyst precursor due to the oxidation state of -1 for the cyclopentadienyl ligand and -1 for the K¹ ligand.

Non-limiting examples of titanium dichloride metal catalyst precursors suitable for use in the present invention include: cyclopentadienyl(*P,P,P*-tri-*t*-butylphosphine imidato) titanium dichloride, pentafluorophenylcyclopentadienyl(*P,P,P*-tri-*t*-butylphosphine imidato)titanium dichloride, pentamethylcyclopentadienyl(*P,P,P*-tri-*t*-butylphosphine imidato)titanium dichloride, 1,2,3,4-tetraphenyl-cyclopentadienyl(*P,P,P*-tri-*t-*butylphosphine imidato)titanium dichloride, cyclopentadienyl(*P,P,P-*tricyclohexylphosphine imidato)titanium dichloride, pentafluorophenyl cyclopentadienyl(*P,P,P*-tricyclohexylphosphine imidato)titanium dichloride, pentamethylcyclopentadienyl(*P,P,P*-tricyclohexylphosphine imidato)titanium dichloride, 1,2,3,4-tetraphenyl-cyclopentadienyl(*P,P,P*-tricyclohexylphosphine imidato)titanium dichloride, pentamethylcyclopentadienyl(*P,P*-dicyclohexyl-*P-*(phenylmethyl)phosphine imidato)titanium dichloride, cyclopentadienyl(2,6-di-*t*-butyl-4-methylphenoxy)titanium dichloride, pentafluorophenylcyclopentadienyl(2,6-di-*t-*butyl-4-methylphenoxy)titanium dichloride, pentamethylcyclopentadienyl(2,6-di-*t-*butyl-4-methylphenoxy)titanium dichloride, 1,2,3-trimethyl-cyclopentadienyl(2,6-bis(1-methylethyl)phenolato)titanium dichloride, [(3a,4,5,6,6a-η)-2,3,4,5,6-pentamethyl-3a*H*-cyclopenta[*b*]thien-3a-yl](2,6-bis(1-methylethyl)phenolato)titanium dichloride, pentamethylcyclopentadienyl(*N,N'*-bis(1-methylethyl)ethanimidamidato) titanium dichloride, pentamethylcyclopentadienyl(*N,N'-*dicyclohexylbenzenecarboximidamidato)titanium dichloride, pentamethylcyclopentadienyl(*N,N'*-bis(1-methylethyl)benzenecarboximidamidato) titanium dichloride, cyclopentadienyl(1,3-bis(1,1-dimethylethyl)-2-imidazolidiniminato) titanium dichloride, cyclopentadienyl(1,3-dicyclohexyl-2-imidazolidiniminato)titanium dichloride, cyclopentadienyl(1,3-bis[2,6-bis(1-methylethyl)phenyl]-2-imidazolidiniminato)titanium dichloride, pentafluorophenylcyclopentadienyl(1,3-bis(1,1-dimethylethyl)-2-imidazolidiniminato)titanium dichloride, pentafluorophenylcyclopentadienyl(1,3-dicyclohexyl-2-imidazolidiniminato)titanium dichloride, pentafluorophenylcyclopentadienyl(1,3-bis[2,6-bis(1-methylethyl)phenyl]-2-imidazolidiniminato)titanium dichloride, pentamethylcyclopentadienyl(di-*t-*butylketimino)titanium dichloride, pentamethylcyclopentadienyl(2,2,4,4-tetramethyl-3-pentaniminato)titanium dichloride, [(3a,4,5,6,6a-η)-2,4,5,6-tetramethyl-3a*H-*cyclopenta[*b*]thien-3a-yl](2,2,4,4-tetramethyl-3-pentaniminato)titanium dichloride, cyclopentadienyl(*N,N*-bis(1-methylethyl)benzenecarboximidamidato)titanium dichloride, pentafluorophenylcyclopentadienyl(N,*N*-bis(1-methylethyl)benzenecarboximidamidato)titanium dichloride, pentamethylcyclopentadienyl(*N,N*-bis(1-methylethyl)benzenecarboximidamidato) titanium dichloride, cyclopentadienyl(2,6-difluoro-*N,N*-bis(1-methylethyl)benzenecarboximidamidato)titanium dichloride, pentafluorophenylcyclopentadienyl(2,6-difluoro-*N,N*-bis(1-methylethyl)benzenecarboximidamidato)titanium dichloride, pentamethylcyclopentadienyl(2,6-difluoro-*N,N*-bis(1-methylethyl)benzenecarboximidamidato)titanium dichloride, cyclopentadienyl(*N,N-*dicyclohexyl-2,6-difluorobenzenecarboximidamidato)titanium dichloride, pentafluorophenylcyclopentadienyl(*N,N*-dicyclohexyl-2,6-difluorobenzenecarboximidamidato)titanium dichloride, pentamethylcyclopentadienyl(*N,N*-dicyclohexyl-2,6-difluorobenzenecarboximidamidato)titanium dichloride, cyclopentadienyl(*N,N,N',N*'-tetramethylguanidinato)titanium dichloride, pentafluorophenylcyclopentadienyl(*N,N,N',N'*-tetramethylguanidinato)titanium dichloride, pentamethylcyclopentadienyl(*N,N,N',N'*-tetramethylguanidinato)titanium dichloride, pentamethylcyclopentadienyl(1-(imino)phenylmethyl)piperidinato)titanium dichloride, pentamethylcyclopentadienyl chromium dichloride tetrahydrofuran complex. Other examples are the metal catalyst precursors cited in the list directly above wherein L¹ is dimethyl, dibenzyl, diphenyl, 1,4-diphenyl-2-butene-1,4-diyl, 1,4-dimethyl-2-butene-1,4-diyl or 2,3-dimethyl-2-butene-1,4-diyl; and/or the metal is zirconium or hafnium. In other words, the hafnium dichloride, zirconium dichloride, titanium dimethyl, zirconium dimethyl, hafnium dimethyl, titanium dibenzyl, zirconium dibenzyl, hafnium dibenzyl, titanium diphenyl, zirconium diphenyl, hafnium diphenyl, titanium 1,4-dimethyl-2-butene-1,4-diyl, zirconium 1,4-dimethyl-2-butene-1,4-diyl, hafnium 1,4-dimethyl-2-butene-1,4-diyl, titanium 2,3-dimethyl-2-butene-1,4-diyl, zirconium 2,3-dimethyl-2-butene-1,4-diyl or hafnium 2,3-dimethyl-2-butene-1,4-diyl variants of the titanium dichloride metal catalyst precursor cited in the list directly above.

In yet an embodiment, a Group 3, Group 4, Group 5 or Group 6 or lanthanide metal catalyst or metal catalyst precursor according to the formula (C₅R⁸₄)R⁹K³ML¹ₙ (Formula XIV) may be used as the metal catalyst or metal catalyst precursor according to the present invention. 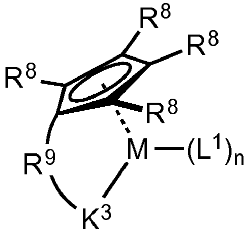 (C₅R⁸₄)R⁹K³ML¹ₙ (Formula XIV)
wherein M is a metal selected from the group consisting of Group 3 metals, Group 4 metals, Group 5 metals and Group 6 metals, preferably Sc, Y, Sm, Ti, Zr, Hf, V, Cr; most preferably Ti;
wherein M has an oxidation state selected from the group consisting of +2, +3, +4 or +5;
wherein (C₅R⁸₄) is a substituted cyclopentadienyl as discussed above;
wherein R⁹ is as discussed above;
wherein K³ is an anionic heteroatom-containing group selected from the group consisting of -O-, -S-, -NR¹⁴-, -PR¹⁴-, an -OSi(R¹⁴R¹⁵)₂O- group, and a-N=C(R¹⁴)O- group, wherein R¹⁴ and R¹⁵ are as discussed above;
wherein L¹ is as discussed above;
wherein n is 1, 2 or 3; and
wherein the combined oxidation state of the ligand(s) L¹ is equal to the oxidation state of M minus 2. This will lead to a neutral metal catalyst precursor due to the oxidation state of -1 for the cyclopentadienyl ligand and -1 for the K³ ligand.

In a preferred embodiment of the metal catalyst precursor according to Formula XIV, the metal catalyst precursor is [Me₂Si(C₅Me₄)N(tBu)]TiCl₂; wherein R⁹ is -SiMe₂-, all four R⁸ groups are Me and K³ is NR¹⁴ wherein R¹⁴ is t-Bu; wherein M is Ti⁴⁺, and L¹ is CI and n is 2.

A non-limiting list of examples of scandium catalysts according to Formula XIV that would be suitable for use in to the present invention are: (N-t-butylamido)(dimethyl)(tetramethylcyclopentadienyl)silane scandium bis(trimethylsilyl)methyl, (N-phenylamido)(dimethyl)(tetramethylcyclopentadienyl) silane scandium bis(trimethyl)methyl, (N-sec-butylamido)(dimethyl) (tetramethylcyclopentadienyl)silane scandium bis(trimethylsilyl)methyl, (N-sec-dodecylamido)(dimethyl)(fluorenyl)silane scandium hydride triphenylphosphine, (P-t-butylphospho)(dimethyl)(tetramethylcyclopentadienyl)silane scandium bis(trimethylsilyl)methyl. Other examples are the catalysts cited in the list directly above wherein L¹ is hydride, methyl, benzyl, phenyl, allyl, (2-N,N-dimethylaminomethyl)phenyl, (2-N,N-dimethylamino)benzyl; in other words scandium methyl, scandium benzyl, scandium allyl, scandium (2-N,N-dimethylamino)benzyl; and/or wherein the metal is trivalent yttrium or samarium; Other examples are metal catalyst precursors as cited in the list directly above wherein Lₙ is chloride, bromide, hydride, methyl, benzyl, phenyl, allyl, (2-N,N-dimethylaminomethyl)phenyl, (2-N,N-dimethylamino)benzyl and/or wherein the metal is trivalent titanium or trivalent chromium. In other words, the titanium chloride, the chromium chloride, the titanium bromide, the chromium bromide, titanium bis(trimethylsilyl)methyl, chromium bis(trimethylsilyl)methyl, titanium methyl, chromium methyl, titanium benzyl, chromium benzyl, scandium phenyl, titanium phenyl, chromium phenyl, titanium allyl, chromium allyl, titatnium (2-N,N-dimethylaminomethyl)phenyl, chromium (2-N,N-dimethylaminomethyl)phenyl, titanium (2-N,N-dimethylamino)benzyl, and chromium (2-N,N-dimethylamino)benzyl.

Non-limiting examples of titanium(IV) dichloride metal catalyst precursors according to Formula XIV suitable for use in the present invention are: (N-t-butylamido)(dimethyl)(tetramethylcyclopentadienyl)silane titanium dichloride, (N-phenylamido)(dimethyl)(tetramethylcyclopentadienyl)silane titanium dichloride, (N-sec-butylamido)(dimethyl)(tetramethylcyclopentadienyl)silane titanium dichloride, (N-sec-dodecylamido)(dimethyl)(fluorenyl)silane titanium dichloride, (3-phenylcyclopentadien-1-yl)dimethyl(t-butylamido)silane titanium dichloride, (3-(pyrrol-l-yl)cyclopentadien-1-yl)dimethyl(t-butylamido)silane titanium dichloride, (3,4-diphenylcyclopentadien-1-yl)dimethyl(t-butylamido)silane titanium dichloride, 3-(3-N,N-dimethylamino)phenyl)cyclopentadien-1-yl)dimethyl(t-butylamido)silane titanium dichloride, (P-t-butylphospho)(dimethyl)(tetramethylcyclopentadienyl)silane titanium dichloride. Other examples are the metal catalyst precursor cited in the list directly above wherein Lₙ is dimethyl, dibenzyl, diphenyl, 1,4-diphenyl-2-butene-1,4-diyl, 1,4-dimethyl-2-butene-1,4-diyl or 2,3-dimethyl-2-butene-1,4-diyl; and/or wherein the metal is zirconium or hafnium. In other words, the hafnium dichloride, zirconium dichloride, titanium dimethyl, zirconium dimethyl, hafnium dimethyl, titanium dibenzyl, zirconium dibenzyl, hafnium dibenzyl, titanium diphenyl, zirconium diphenyl, hafnium diphenyl, titanium 1,4-dimethyl-2-butene-1,4-diyl, zirconium 1,4-dimethyl-2-butene-1,4-diyl, hafnium 1,4-dimethyl-2-butene-1,4-diyl, titanium 2,3-dimethyl-2-butene-1,4-diyl, zirconium 2,3-dimethyl-2-butene-1,4-diyl or hafnium 2,3-dimethyl-2-butene-1,4-diyl variants of the titanium dichloride metal catalyst precursor cited in the list directly above.

Suitable metal catalyst precursors can be also the trivalent transition metal as those described in WO 9319104 - incorporated by reference herein - (see example 1, page 13, line 15): m is 4, all of the R⁸ groups is Me; R⁹ is -Si(Me)₂-; K³ is NR¹⁴ wherein R¹⁴ is t-Bu; M is Ti³⁺; L¹ is -CH₂-ortho-N(tBu)phenyl.

In yet another embodiment, a Group 3 metal, Group 4 metal, Group 5 metal and Group 6 metal or lanthanide metal catalyst or metal catalyst precursor according to the formula (C⁵R⁸₄)R⁹K⁴ML¹ₙ (Formula XV) may be used as the metal catalyst or metal catalyst precursor according to the present invention. 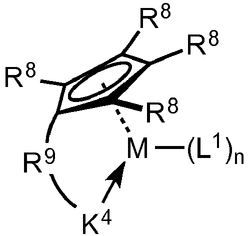 (C⁵R⁸₄)R⁹K⁴ML¹ₙ (Formula XV)
wherein M is a metal selected from the group consisting of Group 3 metals, Group 4 metals, Group 5 metals and Group 6 metals, preferably Sc, Y, Sm, Ti, Zr, Hf, V or Cr; most preferably Ti or Cr;
wherein M has an oxidation state selected from the group consisting of +2, +3, +4 or +5;
wherein (C₅R⁸₄) is a substituted cyclopentadienyl as discussed above;
wherein R⁹ is a bridging group as discussed above;
wherein K⁴ is a neutral heteroatom-containing group selected from the group consisting of: OR¹⁴, SR¹⁴, NR¹⁴R¹⁵ and PR¹⁴R¹⁵, wherein R¹⁴ and R¹⁵ as discussed above;
wherein L¹ is a as discussed above;
wherein n is 1, 2 or 3; and
wherein the combined oxidation state of the ligand(s) L¹ is equal to the oxidation state of M minus 1. This will lead to a neutral metal catalyst precursor due to the oxidation state of -1 for the cyclopentadienyl ligand.

Suitable metal catalyst precursors can be also the trivalent transition metal as those described in the following publications, which are incorporated by reference herein: WO 9613529 (see example III, page 20, line 10-13): [C₅Me₄CH₂CH₂N(n-Bu)₂]TiCl₂ wherein all four R⁸ groups are Me; R⁹ is -CH₂CH₂-; K⁴ is -NR¹⁴R¹⁵ wherein R¹⁴ and R¹⁵ are each n-butyl; M is Ti³⁺; L¹ is CI; and n is 2; WO 97142232 and WO 9742236 (see Example 1, page 26, line 14) [C₅H(iPr)₃CH₂CH₂NMe₂]TiCl₂ wherein one R⁸ is H and three R⁸ are i-Pr groups; R⁹ is -CH₂CH₂-; K⁴ is -NR¹⁴R¹⁵ wherein R¹⁴ and R¹⁵ are each methyl; M is Ti³⁺; L¹ is Cl; and n is2.

In an embodiment, the metal catalyst precursor is [C₅H₄CH₂CH₂NMe₂]TiCl₂; wherein R⁹ is -CH₂CH₂-, all four R⁸ groups are H and K⁴ is -NMe₂; M is Ti³⁺, then L¹ is Cl, and n is 2.

In an embodiment, the metal catalyst precursor is [C₅Me₄CH₂CH₂NMe₂]TiCl₂; wherein R⁹ is -CH₂CH₂-, all four R⁸ groups are Me and K⁴ is -NMe₂; M is Ti³⁺, then L¹ is Cl, and n is 2.

In an embodiment, the metal catalyst precursor is [C₅H₄CH₂CH₂NiPr₂]TiCl₂; wherein R⁹ is -CH₂CH₂-, all four R⁸ groups are H and K⁴ is -NiPr₂; M is Ti³⁺, then L¹ is Cl, and n is 2.

In an embodiment, the metal catalyst precursor is [C₅Me₄CH₂CH₂NiPr₂]TiCl₂; wherein R⁹ is -CH₂CH₂-, all four R⁸ groups are Me and K⁴ is -NiPr₂; M is Ti³⁺, then L¹ is Cl, and n is 2.

In an embodiment, the metal catalyst precursor is [C₅H₄C₉H₆N]TiCl₂; wherein R⁹K² is 8-quinoline: -C₉H₆N and all four R⁸ groups are H; M is Ti³⁺, then L¹ is CI, and n is 2.

In an embodiment, the metal catalyst precursor is [C₅H₄CH₂CH₂NMe₂]CrCl₂; wherein R⁹ is -CH₂CH₂-, all four R⁸ groups are H and K⁴ is -NMe₂; M is Cr³⁺, then L¹ is Cl, and n is 2.

In an embodiment, the metal catalyst precursor is [C₅Me₄CH₂CH₂NMe₂]CrCl₂; wherein R⁹ is -CH₂CH₂-, all four R⁸ groups are Me and K⁴ is -NMe₂; M is Cr³⁺, then L¹ is Cl, and n is 2.

In an embodiment, the metal catalyst precursor is [C₅H₄CH₂CH₂NiPr₂]CrCl₂; wherein R⁹ is -CH₂CH₂-, all four R⁸ groups are H and K⁴ is -NiPr₂; M is Cr³⁺, then L¹ is Cl, and n is 2.

In an embodiment, the metal catalyst precursor is [C₅Me₄CH₂CH₂NiPr₂]CrCl₂; wherein R⁹ is -CH₂CH₂-, all four R⁸ groups are Me and K⁴ is -NiPr₂; M is Cr³⁺, then L¹ is Cl, and n is 2.

In an embodiment, the metal catalyst precursor is [C₅H₄C₉H₆N]CrCl₂; wherein R⁹K² is 8-quinoline: -C₉H₆N and all four R⁸ groups are H; M is Cr³⁺, then L¹ is CI, and n is 2.

A non-limiting list of examples of metal catalyst precursors according to Formula XV that would be suitable according to the present invention are: (N, N-dimethylamino)methyl-tetramethylcyclopentadienyl titanium dichloride, (N,N-dimethylamino)ethyl-tetramethylcyclopentadienyl titanium dichloride, (N,N-dimethylamino)propyl-tetramethylcyclopentadienyl titanium dichloride, (N,N-dibuthylamino)ethyl-tetramethylcyclopentadienyl titanium dichloride, (pyrrolidinyl)ethyl-tetramethylcyclopentadienyl titanium dichloride, (N,N-dimethylamino)ethyl-fluorenyl titanium dichloride, (bis(1-methyl-ethyl)phosphino)ethyl-tetramethylcyclopentadienyl titanium dichloride, (bis(2-methyl-propyl)phosphino)ethyl-tetramethylcyclopentadienyl titanium dichloride, (diphenylphosphino)ethyl-tetramethylcyclopentadienyl titanium dichloride, (diphenylphosphino)methyldimethylsilyl-tetramethylcyclopentadienyl titanium dichloride. Other examples are the catalysts cited in the list directly above wherein Lₙ is bromide, hydride, methyl, benzyl, phenyl, allyl, (2-N,N-dimethylaminomethyl)phenyl, (2-N,N-dimethylamino)benzyl, 2,6-dimethoxyphenyl, pentafluorophenyl, and/or wherein the metal is trivalent titanium or trivalent chromium.

### Non-cyclopentadienyl metal catalysts or metal catalyst precursors

The metal catalysts or metal catalyst precursors for use in the present invention may also be from the group of metal catalysts or metal catalyst precursors having no cyclopentadienyl groups, in other words, non-cyclopentadienyl metal catalysts or metal catalyst precursors.

In an embodiment, the metal catalyst or metal catalyst precursor according to the present invention is a Group 3-10 metal catalyst or metal catalyst precursor having the formula (R¹⁸N-R¹⁹-NR²⁰)ML¹ₙ (Formula XVI): 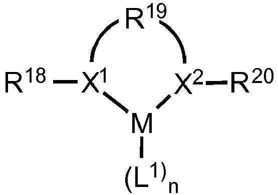 (R¹⁸N-R¹⁹-NR²⁰)ML¹ₙ (Formula XVI):
wherein M is a metal selected from the group consisting of Sc, Y, Sm, Ti, Zr, Hf, V, Cr, Fe, Co, Ni and Pd;
wherein M has an oxidation state selected from the group consisting of +2, +3, +4 or +5;
wherein R¹⁸ is selected from the group consisting of a linear, branched or cyclic C1-C30 hydrocarbyl group, or together with the X¹ to which it is bound forms a heterocycle, said heterocycle being optionally substituted by a linear, branched or cyclic C1-C20 hydrocarbyl;
on the proviso that when X¹ is N and together with R¹⁸ forms a heterocycle, and when said heterocycle NR¹⁸ is a substituted pyridine, the substituent at the 6-position forms a covalent bond to R¹⁹,
wherein R¹⁹ is a bridging group selected from the group consisting of a C1-C40 hydrocarbyl group or silyl group having up to 20 silicon atoms, R¹⁹ optionally comprising one or more heteroatoms;
wherein R²⁰ is selected from a linear, branched or cyclic C1-C30 hydrocarbyl group, organosilyl group, alkoxy group, aryloxy group, ester group, acyl group, amide group, amino group, sulfonamide group, sulfonyl group, nitrile group, or nitro group;
wherein R¹⁸, R¹⁹ and/or R²⁰ may comprise a heteroatom containing functionality that can coordinate to the metal center;
wherein L¹ is as discussed above;
wherein n is 1, 2, or 3 and selected so that the combined charge of M, L¹ₙ and [R¹⁸N-R¹⁹-NR²⁰] is zero.
In an embodiment, the metal catalyst or metal catalyst precursor according to the present invention is [R¹⁸N(CH₂)₂N(H)(CH₂)₂NR²⁰]ML¹ₙ, wherein M is Ti, Zr, Hf, R¹⁸ and R²⁰ are hydrocarbyl groups and L¹ₙ is as discussed above, according to the Formula XVII. 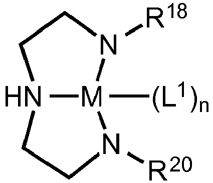 [R¹⁸N(CH₂)₂N(H)(CH₂)₂NR²⁰]ML¹ₙ (Formula XVII):

In a preferred embodiment, [R¹⁸N(CH₂)₂N(H)(CH₂)₂NR²⁰]ML¹ₙ is: [HN(CH₂CH₂N-2,4,6-Me₃-C₆H₂)₂]Hf(CH₂Ph)₂ - bis[N,N'-(2,4,6-trimethylphenyl)amido)ethylenediamine]hafnium dibenzyl.

In an embodiment, the metal catalyst or metal catalyst precursor according to the present invention is [R¹⁸NC(Me)CMe2NR²⁰]ML¹ₙ, wherein R¹⁸ and R²⁰ are as discussed above, M is Ti, Zr or Hf and L¹ₙ is as discussed above, according to the XVIII. 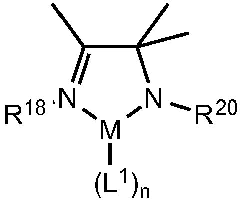 [R¹⁸NC(Me)CMe₂NR²⁰]ML¹ₙ (Formula XVIII):

In a preferred embodiment, [R¹⁸NC(Me )CMe₂NR²⁰]ML¹ₙ is: 2,6-diisopropylphenyl-N-(2-methyl-3-(octylimino)butan-2 hafnium trimethyl, 2,4,6-trimethylphenyl-N-(2-methyl-3-(octylimino)butan-2 hafnium trimethyl.
In an embodiment, the metal catalyst or metal catalyst precursor according to the present invention is [R²⁰N-C(Ar)-2-(6-Ar'-C₅H₃N)]ML¹ₙ, wherein R²⁰ is hydrocarbyl, Ar is a substituted aryl group and Ar' is a (substituted) phenylene-2-yl, wherein R²¹ and R²² are hydrogen, hydrocarbyl or taken together form a saturated or aromatic ring; wherein M is Ti, Zr or Hf; and L¹ₙ is as discussed above, according to Formula XIX: 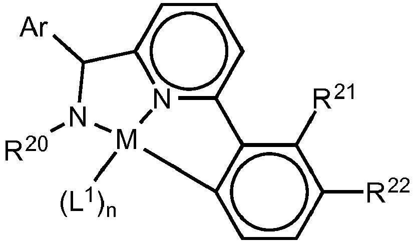 [R²⁰N-C(Ar)-2-(6-Ar'-C₅H₃N)]ML¹ₙ, (Formula XIX):

In a preferred embodiment, [R²⁰N-C(Ar)-2-(6-Ar'-C₅H₃N)]ML¹ₙ, is: [2,6-iPr₂C₆H₃NC(2-iPr-C₆H₄)-2-(6-C₈H₆)]HfMe₂-[N-(2,6-di(I-methylethyl)phenyl)amido)(2-isopropylphenyl) (α-naphthalen-2-diyl(6-pyridin-2-diyl)methane)]hafnium dimethyl. Other non-limiting examples of metal catalyst precursors according to the present invention according for Formula XIX are: [N-(2,6-di(1-methylethyl)phenyl)amido)(o-tolyl)(α-naphthalen-2-diyl(6-pyridin-2-diyl)methane)] hafnium dimethyl, [N-(2,6-di(1-methylethyl)phenyl)amido)(o-tolyl)(α,α-naphthalen-2-diyl(6-pyridin-2-diyl)methane)] hafnium di(N,N-dimethylamido), [N-(2,6-di(I-methylethyl)phenyl)amido)(o-tolyl)(α,α-naphthalen-2-diyl(6-pyridin-2-diyl)methane)] hafnium dichloride, [N-(2,6-di(1-methylethyl)phenyl)amido)(phenanthren-5-yl)(α,α-naphthalen-2-diyl (6-pyridin-2-diyl)methane)] hafnium dimethyl, [N-(2,6-di(1-methylethyl)phenyl)amido)(phenanthren-5-yl)(α-naphthalen-2-diyl(6-pyridin 2-diyl)methane)] hafnium di(N,N-dimethylamido), [N-(2,6-di(I-methylethyl)phenyl)amido)(phenanthren-5-yl) (α-naphthalen-2-diyl(6-pyridin-2-diyl)methane)] hafnium dichloride. Other non-limiting examples include the family of pyridyl diamide metal dichloride complexes such as: [*N*-[2,6-bis(1-methylethyl)phenyl] -6-[2-[phenyl(phenylamino-κ*N*)methyl]phenyl]-2-pyridinemethanaminato(2-)-κ*N*¹,κ*N*²] hafnium dichloride, [*N*-[2,6-bis(1-methylethyl)phenyl]-6-[2-[(phenylamino-κ*N*)methyl]-1-naphthalenyl]-2-pyridinemethanaminato(2-)-κ*N*¹,κ*N*²] hafnium dichloride, [*N*-[2,6-bis(1-methylethyl)phenyl]-α-[2-(1-methylethyl)phenyl]-6-[2-[(phenylamino-κ*N*)methyl] phenyl]-2-pyridinemethanaminato(2-)-κ*N*¹,κ*N*²] zirconium dichloride, [*N*-(2,6-diethylphenyl)-6-[2-[phenyl(phenylamino-κ*N*)methyl]-1-naphthalenyl]-2-pyridinemethanaminato(2-)-κ*N*¹,κ*N*²]zirconium dichloride, [4-methyl-2-[[2-phenyl-1-(2-pyridinyl-κ*N*)ethyl]amino-κ*N*]phenolato(2-)-κ*O*]bis(phenylmethyl)hafnium bis(phenylmethyl), [2-(1,1-dimethylethyl)-4-methyl-6-[[2-phenyl-1-(2-pyridinyl-κ*N*) ethyl]amino-κ*N*]penolato(2-)-κ*O*] hafnium bis(phenylmethyl), [2-(1,1-dimethylethyl)-4-methyl-6-[[phenyl(2-pyridinyl-κ*N*)methyl]amino-κ*N*]phenolato(2-)-κ*O*]hafnium bis(phenylmethyl).

In an embodiment, the metal catalyst or metal catalyst precursor according to the present invention is [R¹⁸NC(X)NR²⁰]ML¹ₙ, wherein X is a hydrogen, hydrocarbyl or heteroatom-bonded hydrocarbyl such as an amine or ether; wherein M is Sc, Y, Sm, Ti, Zr, Hf, V, Cr; wherein R¹⁸ and R²⁰ are hydrocarbyl groups, possibly containing a heteroatom that coordinates to the metal, and L¹ₙ is as discussed, according to Formula XX. 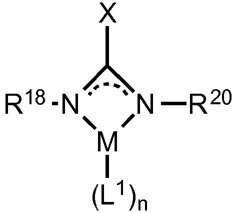 [R¹⁸NC(X)NR²⁰]ML¹ₙ (Formula XX):

In a preferred embodiment, [R¹⁸NC(X)NR²⁰]ML¹ₙ is: [2-(2,4,6-iPr₃-C₆H₂)-6-(2,4,6-iPr₃-C₆H₂)-C₅H₃N]Ti(CH₂Ph)₃ or [Et₂NC(N-2,6-iPr₂-C₆H₃)₂]TiCl₃. Other non-limiting examples of metal catalyst precursors according to the present invention according for Formula XX are: {N',N"-bis[2,6-di(1-methylethyl)phenyl]-N,N-diethylguanidinato} titanium chloride, {N',N"bis[2,6-di(1-methylethyl)phenyl]-N-methyl-N-cyclohexylguanidinato} titanium chloride, {N',N"-bis[2,6-di(1-methylethyl)phenyl]-N, N-pentamethyleneguanidinato} titanium, {N',N"-bis[2,6-di(methyl)phenyl]-sec-butyl-aminidinato}titanium chloride}, N-trimethylsilyl,N'-(N",N"-dimethylaminomethyl)benzamidinato titanium dichloride THF complex, N-trimethylsilyl,N'-(N",N"-dimethylaminomethyl)benzamidinato vanadium dichloride THF complex, N,N'-bis(trimethylsilyl)benzamidinato titanium dichloride THF complex, N,N'-bis(trimethylsilyl)benzamidinato vanadium dichloride THF complex.

In an embodiment, the metal catalyst or metal catalyst precursor according to the present invention is [R¹⁸N=C(R²¹)C(R²²)=NR²⁰]ML¹ₙ, wherein X is a hydrogen, hydrocarbyl or heteroatom-bonded hydrocarbyl such as an amine or ether; wherein M is Sc, Y, Ti, Zr or Hf; wherein R¹⁶, R¹⁷, R²¹, R²² and L¹ₙ are as discussed above, according to Formula XXI. 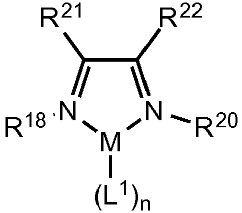 [R¹⁸N=CR²¹CR²²=NR²⁰]ML¹ₙ (Formula XXI)

Non-limiting examples of metal catalyst precursors according to the present invention according for Formula XXI are: N,N'-1,2-acenaphthylenediylidenebis(2,6-bis(1-methylethyl)benzenamine) nickel dibromide, N,N'-1,2-ethanediylidenebis(2,6-dimethylbenzenamine) nickel dibromide, N,N'-1,2-ethanediylidenebis(2,6-bis(1-methylethyl)benzenamine) nickel dibromide, N,N'-1,2-acenaphthylenediylidenebis(2,6-dimethylbenzenamine) nickel dibromide, N,N'-1,2-acenaphthylenediylidenebis(2,6-bis(1-methylethyl)benzenamine) nickel dibromide, N,N'-1,2-acenaphthylenediylidenebis(1,1'-biphenyl)-2-amine nickel dibromide. Other examples are the catalysts cited in the list directly above wherein Lₙ is chloride, hydride, methyl, benzyl and/or M is palladium.

The metal catalyst or metal catalyst precursor according to the present invention is the ligand system [R¹⁸N=C(R²³)C₅H₃N(C(R²⁴)=NR²⁰] giving [R¹⁸N=C(R²³)C₅H₃N(C(R²⁴)=NR²⁰]ML¹ₙ, wherein M is V, Cr, Fe or Co; wherein R¹⁸, R²⁰ and L¹ are as discussed above; wherein R²³ and R²⁴ are hydrogen or linear, branched or cyclic C1-C30 hydrocarbyl group, according to Formula XXII. 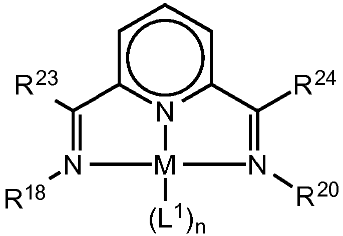 [R¹⁸N=C(R²³)C₅H₃N(C(R²⁴)=NR²⁰]ML¹ₙ (Formula XXII):

In a preferred embodiment, [R¹⁶N=C(Me)C₅H₃N(C(Me)=NR¹⁸]ML³ₙ is: [C₅H₃N{CMe=N(2,6-iPr₂C₆H₃)}]₂]FeCl₂.

In an embodiment, the metal catalyst or metal catalyst precursor according to the present invention is a Group 3-10 metal catalyst or metal catalyst precursor having Formula XXIII: (R²⁵X¹-R²⁶-O)ₚML¹ₙ 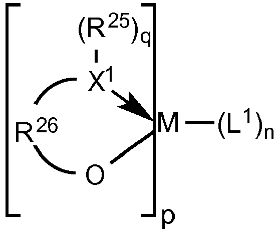 [(R²⁵)_{q}X¹-R²⁶-O]ₚML¹ₙ (Formula XXIII):
wherein M is a metal selected from the group consisting of Sc, Y, Sm, Ti, Zr, Hf, V, Cr, Fe, Co, Ni and Pd;
wherein M has an oxidation state selected from the group consisting of +2, +3, +4 or 5+;
wherein X¹ is N, P, O or S;
wherein R²⁵ is selected from the group consisting of a linear, branched or cyclic C1-C30 hydrocarbyl group, or together with the N to which it is bound forms a heterocycle, said heterocycle being optionally substituted by a linear, branched or cyclic C1-C20 hydrocarbyl,
on the proviso that when N together with R²⁵ forms a heterocycle, and when said heterocycle NR²⁵ is a substituted pyridine, the substituent at the 6-position forms a covalent bond to R²⁶;
on the proviso that when p is 2, R²⁵ may be a linker unit between two [X¹-R²⁶-O] ligand fragments,
wherein R²⁵ may comprise a heteroatom containing functionality that can coordinate to the metal center;
wherein R²⁶ is a bridging group selected from the group consisting of a C1-C40 hydrocarbyl group and a silyl group having up to 20 silicon atoms, wherein R²⁶ optionally comprising one or more heteroatoms;
wherein R²⁶ is selected from the group consisting of a linear, branched or cyclic C1-C30 hydrocarbyl group;
wherein L¹ is as discussed above;
wherein p is 1 or 2;
wherein q is 1 or 2;
wherein n is 1, 2 or 3 and selected so that the combined charge of M, L¹ₙ and [R²⁵N-R²⁶-O] is zero.

In an embodiment, the metal catalyst or metal catalyst precursor according to the present invention is [2-R²⁹,4-R³⁰,6-C(R²⁷)=R²⁸-C₆H₂₀]ₚML¹ₙ, wherein M is Ti, Zr, Hf, V or Ni; wherein R²⁷ is hydrogen or hydrocarbyl, R²⁸ is hydrocarbyl or perfluoro carbyl, R²⁹ and R³⁰ are hydrogen, hydrocarbyl, perfluoro carbyl or halide, p is 1 or 2 and L¹ are as discussed above, according to Formula XXIV. 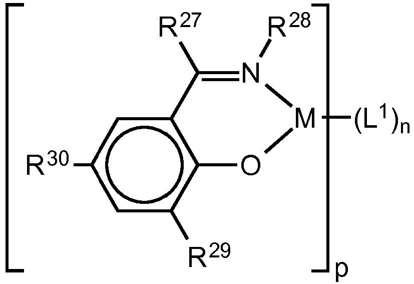 [2-R²⁹,4-R³⁰,6-C(R²⁷)=NR²⁸-C₆H₂O]ₚML¹ₙ, (Formula XXIV):
In a preferred embodiment, [2-R²⁹,4-R³⁰,6-C(R²⁷)=NR²⁸-C₆H₂O]ₚML¹ₙ is: [2,4-(t-Bu)₂,-6-(CH=NC₆F₅)C₆H₂O]₂TiCl₂ - bis[2-(1,1-dimethylethyl)-6-[(pentafluorophenylimino)methyl] phenolato] titanium dichloride. Other non-limiting examples of metal catalyst precursors according to the present invention according for Formula XXIV are: bis[2-[(2-pyridinylimino)methyl]phenolato] titanium dichloride, bis[2-(1,1-dimethylethyl)-6-[(phenylimino)methyl]phenolato] titanium dichloride, bis[2-(1,1-dimethylethyl)-6-[(1-naphthalenylimino)methyl]phenolato] titanium dichloride, bis[3-[(phenylimino)methyl][1,1'-biphenyl]-2-phenolato] titanium dichloride, bis[2-(1,1-dimethylethyl)-4-methoxy-6-[(phenylimino)methyl]phenolato] titanium dichloride, bis[2,4-bis(1-methyl-1-phenylethyl)-6-[(phenylimino)methyl]phenolato] titanium dichloride, bis[2,4-bis(1,1-dimethylpropyl)-6-[(phenylimino)methyl]phenolato] titanium dichloride, bis[3-(1,1-dimethylethyl)-5-[(phenylimino)methyl][1,1'-biphenyl]-4-phenolato] titanium dichloride, bis[2-[(cyclohexylimino)methyl]-6-(1,1-dimethylethyl)phenolato] titanium dichloride, bis[2-(1,1-dimethylethyl)-6-[[[2-(1-methylethyl)phenyl]imino]methyl]phenolato] titanium dichloride, bis[2-(1,1-dimethylethyl)-6-[(pentafluorophenylimino)ethyl]phenolato] titanium dichloride, bis[2-(1,1-dimethylethyl)-6-[(pentafluorophenylimino)propyl]phenolato] titanium dichloride, bis[2,4-bis(1,1-dimethylethyl)-6-[1-(phenylimino)ethyl]phenolato] titanium dichloride, bis[2,4-bis(1,1-dimethylethyl)-6-[1-(phenylimino)propyl]phenolato] titanium dichloride, bis[2,4-bis(1,1-dimethylethyl)-6-[phenyl(phenylimino)methyl]phenolato] titanium dichloride. Other examples are the metal catalyst precursor cited in the list directly above wherein Lₙ is dimethyl, dibenzyl, diphenyl, 1,4-diphenyl-2-butene-1,4-diyl, 1,4-dimethyl-2-butene-1,4-diyl or 2,3-dimethyl-2-butene-1,4-diyl; and/or wherein the metal is zirconium or hafnium. In other words, the hafnium dichloride, zirconium dichloride, titanium dimethyl, zirconium dimethyl, hafnium dimethyl, titanium dibenzyl, zirconium dibenzyl, hafnium dibenzyl, titanium diphenyl, zirconium diphenyl, hafnium diphenyl, titanium 1,4-dimethyl-2-butene-1,4-diyl, zirconium 1,4-dimethyl-2-butene-1,4-diyl, hafnium 1,4-dimethyl-2-butene-1,4-diyl, titanium 2,3-dimethyl-2-butene-1,4-diyl, zirconium 2,3-dimethyl-2-butene-1,4-diyl or hafnium 2,3-dimethyl-2-butene-1,4-diyl variants of the titanium dichloride metal catalyst precursor cited in the list directly above, [2-[[[2,6-bis(1-methylethyl)phenyl]imino-κ*N*]methyl]-6-(1,1-dimethylethyl) phenolato-κ*O*] nickel phenyl(triphenylphosphine), [2-[[[2,6-bis(1-methylethyl)phenyl] imino-κ*N*]methyl]-6-(1,1-dimethylethyl)phenolato-κ*O*] nickel phenyl(triphenylphos phine), [2-[[[2,6-bis(1-methylethyl)phenyl]imino-κ*N*]methyl]phenolato-κ*O*] nickel phenyl(triphenylphosphine)-, [3-[[[2,6-bis(1-methylethyl)phenyl]imino-κ*N*]methyl][1,1'-biphenyl]-2-olato-κ*O*] nickel phenyl(triphenylphosphine)-, [2-[[[2,6-bis(1-methylethyl) phenyl]imino-κ*N*]methyl]-4-methoxyphenolato-κ*O*] nickel phenyl(triphenylphosphine), [2-[[[2,6-bis(1-methylethyl)phenyl]imino-κ*N*]methyl]-4-nitrophenolato-κ*O*] nickel phenyl(triphenylphosphine), [2,4-diiodo-6-[[[3,3",5,5"-tetrakis(trifluoromethyl)[1,1':3', 1"-terphenyl]-2'-yl]imino-κ*N*]methyl]phenolato-κ*O*] nickel methyl[[3,3',3"-(phosphinidyne-κ*P*)tris[benzenesulfonato]]] trisodium; [2,4-diiodo-6-[[[3,3",5,5"-tetrakis(trifluoromethyl)[1,1':3',1"-terphenyl]-2'-yl]imino-κ*N*]methyl]phenolato-κ*O*] nickel methyl[[3,3'-(phenylphosphinidene-κ*P*)bis[benzenesulfonato]]]-disodium.

In an embodiment, the metal catalyst or metal catalyst precursor according to the present invention is [salan]ML¹ₙ according to Formula XXV: 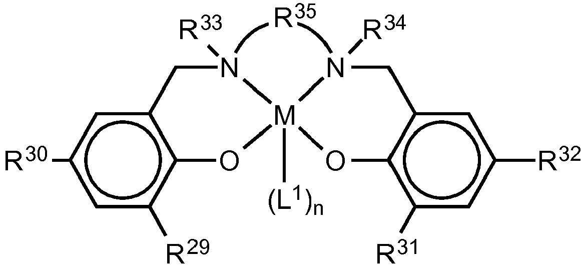 [salan]ML¹ₙ (Formula XXV):
wherein M is Ti, Zr or Hf; wherein, R²⁹, R³⁰, R³¹, R³² are independently selected from hydrogen, hydrocarbyl, halide;
wherein R³³ and R³⁴ are independently selected from hydrogen or hydrocarbyl;
wherein R³⁵ is a hydrocarbyl;
and L¹ are as discussed above.

In a preferred embodiment, [salan]ML¹ₙ according to Formula XXV is: [2-[[[2-[[[3,5-bis(1,1-dimethylethyl)-2-(hydroxy-κ*O*)phenyl]methyl]amino-κ*N*]ethyl]methylamino-κ*N*] methyl]-4,6-bis(1,1-dimethylethyl)phenolato(2-)-κ*O*] titanium bis(phenylmethyl), [2,4-dichloro-6-[[[2-[[[3,5-dichloro-2-(hydroxy-κ*O*)phenyl]methyl]amino-κ*N*]ethyl] methylamino-κ*N*]methyl]phenolato(2-)-κ*O*] titanium bis(phenylmethyl), [2-[[[[1-[[2-(hydroxy-κ*O*)-3,5-diiodophenyl]methyl]-2-pyrrolidinyl-κ*N*]methyl]amino-κ*N*]methyl]-4-methyl-6-tricyclo[3.3.1.1^{3,7}]dec-1-ylphenolato(2-)-κ*O*] titanium bis(phenylmethyl), [2-[[[2-[[[[2-(hydroxy-κ*O*)-3,5-bis(1-methyl-1-phenylethyl)phenyl]methyl]methylamino-κ*N*] methyl]phenyl]methylamino-κ*N*]methyl]-4,6-bis(1-methyl-1-phenylethyl)phenolato(2-)-κ*O*] titanium bis(phenylmethyl), [2,4-dichloro-6-[[[2-[[[[3,5-dichloro-2-(hydroxy-κ*O*) phenyl]methyl]amino-κ*N*]methyl]phenyl]amino-κ*N*]methyl]phenolato(2-)-κ*O*] titanium bis(phenylmethyl). Other examples are the metal catalyst precursor cited in the list directly above wherein Lₙ is dichloride, dimethyl, diphenyl, 1,4-diphenyl-2-butene-1,4-diyl, 1,4-dimethyl-2-butene-1,4-diyl or 2,3-dimethyl-2-butene-1,4-diyl; and/or wherein the metal is zirconium or hafnium.

In an embodiment, the metal catalyst or metal catalyst precursor according to the present invention is according to Formula XXVI: 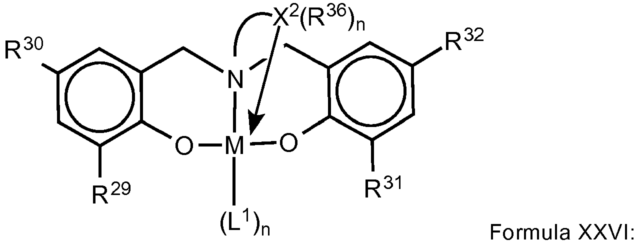
wherein X² is N, P, O or S;
wherein M is Ti, Zr or Hf;
wherein, R²⁹, R³⁰, R³¹, R³² are independently selected from hydrogen, hydrocarbyl, halide;
wherein each R³⁶ is independently chosen from hydrogen, hydrocarbyl or perfluoro carbyl;
wherein R³³ and R³⁴ are independently selected from hydrogen or hydrocarbyl;
and L¹ are as discussed above.

In a preferred embodiment, the metal catalyst or metal catalyst precursor according to Formula XXVI is: [[2,2'-[[[2-(dimethylamino-κN)ethyl]imino-κN]bis(methylene)]bis[4,6-bis(1,1-dimethylethyl) phenolato-κO]] zirconium dibenzyl, (phenylmethyl)[[2,2'-[(propylimino-*κ*N)bis(methylene)]bis[4,6-bis(1,1-dimethylethyl)phenolato-κO]] zirconium dibenzyl or (phenylmethyl)[[2,2'-[[[(2-pyridinyl-κN)methyl]imino-κN]bis(methylene)]bis[4,6-bis(1,1-dimethylethyl)phenolato-κO]] zirconium dibenzyl.

In an embodiment, the metal catalyst or metal catalyst precursor according to the present invention is a bis(phenolate) diether Group 4 metal species according to Formula XXVII. 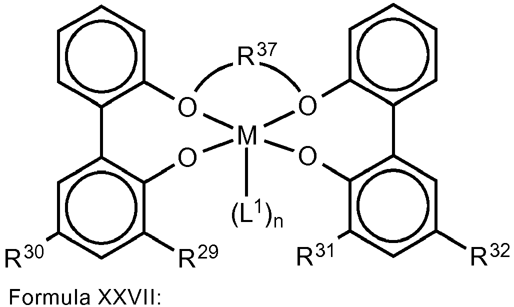
wherein R²⁹,R³⁰, R³¹ and R³² are independently selected from hydrogen, hydrocarbyl or halide;
wherein R³⁷ is hydrocarbyl;
wherein M is Ti, Zr or Hf, and L¹ are as discussed above.
In a preferred embodiment, complexes as reported in WO 00/43426, WO 2004/081064, US 2014/0039138 A1, US 2014/0039139 A1 and US 2014/0039140 A1 are suitable to use as metal catalyst precursors for the processes of the present invention.

### Co-catalysts suitable for step A)

A co-catalyst is optional when a metal catalyst is used. However, a co-catalyst is required when a metal catalyst precursor is used. The function of this co-catalyst is to activate the metal catalyst precursor.

Co-catalystsmay be aluminoxanes or a compound selected from the group consisting of fluorinated aryl borane and fluorinated aryl borate (viz. B(R')_{y} wherein R' is a fluorinated aryl and y is 3 or 4, respectively). An example of a fluorinated borane is B(C₆F₅)₃ and of fluorinated borates are [X]⁺[B(C₆F₅)₄]⁻ (e.g. X = Ph₃C, C₆H₅N(H)Me₂).

For example, the co-catalyst can be an organometallic compound. The metal of the organometallic compound can be selected from Group 1, 2, 12 or 13 of the IUPAC Periodic Table of Elements. Preferably, the co-catalyst is an organoaluminum compound, more preferably an aluminoxane, said aluminoxane being generated by the reaction of a trialkyl aluminum compound with water to partially hydrolyze said aluminoxane. For example, trimethyl aluminum can react with water (partial hydrolysis) to form MAO. MAO has the general formula (Al(CH₃)₃₋ₙO_{0.51})ₓ·(AlMe₃)_{y} having an aluminum oxide framework with methyl groups on the aluminum atoms.

MAO generally contains significant quantities of free trimethyl aluminum (TMA), which can be removed by drying the MAO to afford the so-called depleted MAO or DMAO. Supported MAO (SMAO) may also be used and may be generated by the treatment of an inorganic support material, typically silica, by MAO. Alternatively to drying the MAO, when it is desired to remove the free trimethyl aluminum, butylhydroxytoluene (BHT, 2,6-di-t-butyl-4-methylphenol) can be added which reacts with the free trimethyl aluminum.

Neutral Lewis acid modified polymeric or oligomeric aluminoxanes may also be used, such as alkylaluminoxanes modified by addition of a C1-30 hydrocarbyl substituted Group 13 compound, especially a tri(hydrocarbyl) aluminum- or tri(hydrocarbyl) boron compounds, or a halogenated (including perhalogenated) derivatives thereof, having 1 to 10 carbon atoms in each hydrocarbyl or halogenated hydrocarbyl group, more especially a trialkyl aluminum compound.

Other examples of polymeric or oligomeric aluminoxanes are triisobutyl aluminum- or trioctyl aluminum-modified methylaluminoxanes, generally referred to as modified methylaluminoxanes, or MMAO. In the present invention, MAO, DMAO, SMAO and MMAO may all be used as co-catalyst.

In addition, for certain embodiments, the metal catalyst precursors may also be rendered catalytically active by a combination of an alkylating agent and a cation forming agent which together form the co-catalyst, or only a cation forming agent in the case the metal catalyst precursor is already alkylated, as exemplified in T. J. Marks et al., Chem. Rev. 2000, (100), 1391. Suitable alkylating agents are trialkyl aluminum compounds, preferably TIBA. Suitable cation forming agents for use herein include (i) neutral Lewis acids, such as C1-30 hydrocarbyl substituted Group 13 compounds, preferably tri(hydrocarbyl)boron compounds and halogenated (including perhalogenated) derivatives thereof, having from 1 to 10 carbon atoms in each hydrocarbyl or halogenated hydrocarbyl group, more preferably perfluorinated tri(aryl)boron compounds, and most preferably tris(pentafluorophenyl)borane, (ii) non polymeric, compatible, non-coordinating, ion forming compounds of the type [C]⁺[A]⁻ where "C" is a cationic group such as ammonium, phosphonium, oxonium, carbonium, silylium or sulfonium groups.

Non-limiting examples of the anionic ["A"] are borate compounds such as C1-30 hydrocarbyl substituted borate compounds, preferably tetra(hydrocarbyl)boron compounds and halogenated (including perhalogenated) derivatives thereof, having from 1 to 10 carbon atoms in each hydrocarbyl or halogenated hydrocarbyl group, more preferably perfluorinated tetra(aryl)boron compounds, and most preferably tetrakis(pentafluorophenyl)borate.
Typical examples of [C]⁺[A]⁻ compounds are tri-substituted (alkyl) ammonium salts such as trimethylammonium tetraphenylborate, triethylammonium tetraphenylborate, tripropylammonium tetraphenylborate, tri(n-butyl)ammonium tetraphenylborate, N,N-dimethylanilinium tetraphenylborate, N,N-diethylanilinium tetraphenylborate, N,N-dimethyl-2,4,6-trimethylanilinium tetraphenylborate, trimethylammonium tetrakis(pentafluorophenyl)borate, triethylammonium tetrakis(pentafluorophenyl)-borate, tripropylammonium tetrakis(pentafluorophenyl)borate, tri(n-butyl)ammonium tetrakis(pentafluorophenyl)borate, N,N-dimethylanilinium tetrakis(pentafluorophenyl)-borate, N,N-diethylanilinium tetrakis(pentafluorophenyl)borate, N,N-dimethyl-2,4,6-trimethylanilinium tetrakis(pentafluorophenyl)borate, dioctadecylmethylammonium tetrakis(pentafluorophenyl)borate, trimethylammonium tetrakis(3,5-bis(trifluoromethyl)phenyl)borate, triethylammonium tetrakis(3,5-bis(trifluoromethyl)phenyl)-borate, tripropylammonium tetrakis(3,5-bis(trifluoromethyl)phenyl)borate, tri(n-butyl)ammonium tetrakis(3,5-bis(trifluoromethyl)phenyl)borate, N,N-dimethylanilinium tetrakis(3,5-bis(trifluoromethyl)phenyl)borate, N,N-diethylanilinium tetrakis(3,5-bis(trifluoromethyl)phenyl)borate, N,N-dimethyl-2,4,6-trimethylanilinium tetrakis(3,5-bis(trifluoromethyl)phenyl)borate, dioctadecylmethylammonium tetrakis(3,5-bis(trifluoromethyl)phenyl)borate, N,N-dimethylanilinium n-butyltris(pentafluorophenyl)borate, N,N-dimethylanilinium benzyltris(pentafluorophenyl)borate, N,N-dimethylanilinium tetrakis(4-(t-butyldimethylsilyl)-2,3,5,6-tetrafluorophenyl)-borate, N,N-dimethylanilinium tetrakis(4-(tri(isopropyl)silyl)-2,3,5,6-tetrafluoro-phenyl)borate, N,N-dimethylanilinium tris(pentafluorophenyl)(pentafluorophenoxy)borate, N,N-diethylanilinium tris(pentafluorophenyl)(pentafluorophenoxy)borate, N,N-dimethylanilinium tris(pentafluorophenyl)(p-hydroxyphenyl)borate, N,N-diethylanilinium tris(pentafluorophenyl)(p-hydroxyphenyl)borate, trimethylammonium tetrakis(2,3,4,6-tetrafluorophenyl)borate, triethylammonium tetrakis(2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl)borate, dimethyl(t-butyl)ammonium tetrakis(2,3,4,6-tetrafluorophenyl)borate, N,N-dimethylanilinium tetrakis(2,3,4,6-tetrafluorophenyl) borate, N,N-diethylanilinium tetrakis(2,3,4,6-tetrafluorophenyl)borate and N,N-dimethyl-2,4,6-trimethylanilinium tetrakis(2,3,4,6-tetrafluorophenyl)borate; dialkyl ammonium salts such as: di(i-propyl)ammonium tetrakis(pentafluorophenyl)borate, and dicyclohexylammonium tetrakis(pentafluorophenyl)borate; trityl (triphenyl methyl) salts such as: trityl tetrakis(pentafluorophenyl)borate, trityl tetrakis(3,5-bis(trifluoromethyl)phenyl)borate, trityl n-butyltris(pentafluorophenyl)borate, benzyltris(pentafluorophenyl)borate, trityl tetrakis(4-(t-butyldimethylsilyl)-2,3,5,6-tetrafluorophenyl)borate, trityl tetrakis(4-(tri(isopropyl)silyl)-2,3,5,6-tetrafluorophenyl)borate, trityl tris(pentafluorophenyl)(pentafluorophenoxy)borate and N,N-dimethylanilinium tris(pentafluorophenyl)(p-hydroxyphenyl)borate; tri-substituted phosphonium salts such as: triphenylphosphonium tetrakis(pentafluorophenyl)borate, tri(o-tolyl)phosphonium tetrakis(pentafluorophenyl)borate, and tri(2,6-dimethylphenyl) phosphonium tetrakis(pentafluorophenyl)borate; di-substituted oxonium salts such as: diphenyloxonium tetrakis(pentafluorophenyl)borate, di(o-tolyl)oxonium tetrakis(pentafluorophenyl)borate, and di(2,6-dimethylphenyl) oxonium tetrakis(pentafluorophenyl)borate; di-substituted sulfonium salts such as: diphenylsulfonium tetrakis(pentafluorophenyl)borate, di(o-tolyl)sulfonium tetrakis(pentafluorophenyl)borate, and bis(2,6-dimethylphenyl)sulfonium tetrakis(pentafluorophenyl)borate.

A supported catalyst may also be used, for example using SMAO as the co-catalyst or other supports for the catalyst. The support material can be an inorganic material. Suitable supports include solid and particulated high surface area, metal oxides, metalloid oxides, or mixtures thereof. Non-limiting examples include: talc, silica, alumina, magnesia, titania, zirconia, tin oxide, aluminosilicates, borosilicates, clays, and mixtures thereof.

Preparation of a supported catalyst can be carried out using methods known in the art, for example i) a metal catalyst precursor can be reacted with supported MAO to produce a supported catalyst; ii) MAO can be reacted with a metal catalyst precursor and the resultant mixture can be added to silica to form the supported catalyst; iii) a metal catalyst precursor immobilized on a support can be reacted with soluble MAO.

### Scavengers suitable for step A)

A scavenger can optionally be added in the catalyst system in order to react with impurities that are present in the polymerization reactor, and/or in the solvent and/or monomer feed. This scavenger prevents poisoning of the catalyst during the olefin polymerization process. The scavenger can be the same as the co-catalyst but can also independently be selected from the group consisting of aluminum hydrocarbyls (e.g. triisobutyl aluminum, trioctyl aluminum, trimethyl aluminum, MAO, MMAO, SMAO), zinc hydrocarbyls (e.g. diethyl zinc) or magnesium hydrocarbyls (e.g. dibutyl magnesium).

### Polymerization of the olefins

Step A) is a step of polymerizing at least two types of olefins to provide a copolymerized polyolefin main chain and this step is preferably carried out in an inert atmosphere.

In the present invention the heteroatom-containing functions on the second type of olefin monomer are in situ protected or pacified by a pacifying metal.

Polymerization of the olefins can for example be carried out in the gas phase below the melting point of the polymer. Polymerization can also be carried out in the slurry phase below the melting point of the polymer. Moreover, polymerization can be carried out in solution at temperatures above the melting point of the polymer product.

It is known to continuously polymerize one or more olefins, such as ethylene or propylene, in solution or in slurry, e.g. in a continuous (multi) CSTR or (multi) loop reactor, in the gas-phase in a reactor with a fluidized or mechanically stirred bed or in a combination of these different reactors, in the presence of a catalyst based on a compound of a transition metal belonging to Groups 3 to 10 of the Periodic Table of the Elements.

For the gas phase process, the polymer particles are kept in the fluidized and/or stirred state in a gaseous reaction mixture containing the olefin(s). The catalyst is introduced continuously or intermittently into the reactor while the polymer constituting the fluidized or mechanically stirred bed is withdrawn from the reactor, also continuously or intermittently. The heat of the polymerization reaction is essentially removed by the gaseous reaction mixture, which passes through heat transfer means before being recycled into the reactor. In addition, a liquid stream may be introduced into the gas-phase reactor to enhance heat removal.

Slurry phase polymerization of olefins is very well known, wherein an olefin monomer and optionally olefin comonomer are polymerized in the presence of a catalyst in a diluent in which the solid polymer product is suspended and transported. Two or more reactors are typically used in such polymerizations when it is desired to produce a multimodal product, in which a polymer made in a first reactor is transferred to a second reactor, where a second polymer having different properties to the first polymer is made in the presence of the first. However, it may also be desirable to connect two reactors making monomodal polymers in order to create a swing monomodal/multimodal plant or to increase the flexibility of two small reactors that individually may lack the scale to be economically viable. A slurry reactor may also be combined with a gas phase reactor.

Slurry phase polymerizations are typically carried out at temperatures in the range 50-125 °C and at pressures in the range 1-40 bar. The catalyst used can be any catalyst typically used for olefin polymerization such as those according to the present invention. The product slurry, comprising polymer and diluent and in most cases also components of the catalyst system, olefin monomer and comonomer can be discharged from each reactor intermittently or continuously, optionally using concentrating devices such as hydrocyclones or settling legs to minimize the quantity of fluids withdrawn with the polymer.

The present invention may also be carried out in a solution polymerization process. Typically, in the solution process, the monomers and polymer are dissolved in an inert solvent.

Solution polymerization has some advantages over slurry processes. The molecular weight distribution and the process variables are more easily controlled because the polymerization occurs in a homogeneous phase using homogeneous single-site catalysts (viz. metal catalysts or metal catalyst precursors consisting of solely one type of catalytically active site). The high polymerization temperature typically above 150°C also leads to high reaction rates. The solution process is used primarily for the production of relatively low molecular weight and/or low density resins, which are difficult to manufacture by the liquid slurry or gas phase processes. The solution process is very well suited to produce low density products but it is thought much less satisfactory for higher molecular weight resins because of the excessive viscosity in the reactor as discussed by Choi and Ray, JMS Review Macromolecular Chemical Physics C25(l), 1-55, pg. 10 (1985).

Unlike in the gas phase or slurry process, in a solution process there is usually no polymer solid or powder formed. Typically, the reaction temperature and the reaction pressure are higher than in gas phase or slurry process to maintain the polymer in solution. The solution process tends to use an inert solvent that dissolves the polymer as it is formed, subsequently the solvent is separated and the polymer is pelletized. The solution process is considered versatile in that a wide spectrum of product properties can be obtained by varying the composition of the catalyst system, the pressure, the temperature and the comonomer employed.

Since relatively small reactors are used for a solution process, the, residence time is short and grade changeover can be rapid. For example two reactors in series operated at pressures of up to 50 bar and temperatures up to 250 °C in the reactor can be used. Fresh and recycled olefin monomer is compressed up to 55 bar and pumped into the polymerization reactor by a feed pump. The reaction is adiabatic and maintained at a maximum reactor outlet of about 250 °C. Although a single reactor can be used, multiple reactors provide a narrower residence time distribution and therefore a better control of molecular weight distribution.

### Step B) metal substitution step

In step B) a metal substituting agent is used to remove the pacifying metal or in other words to detach the pacifying metal from the short chain branches and to restore the functionality. Said metal substituting agent may be selected for example from the group consisting of hydrolyzing agents or quenching agents.

In an embodiment, said metal substituting agent is a hydrolyzing agent, selected from the group of protic solvents, e.g. water or an alcohol, such as (acidified) methanol or ethanol, preferably water.

The metal substitution agent may substitute the pacifying metal with a group selected from the group consisting of H, SiR⁷₃, SnR⁷₃ or a hydrocarbyl with 1 to 16 carbon atoms. Most preferably hydrogen.

In an embodiment, said metal substituting agent is a quenching agent, which is typically a halogen-containing agent releasing a metal-halide or an anhydride releasing a metal-carboxylate. Typical examples are alkyl halides, especially for example TMS-chloride, and anhydrides.

In one embodiment of the invention, the product obtained after step B) can be premixed with a catalyst to be used in step C) prior to step C)

### Step C) forming of polymer side chains

As discussed above, the graft copolymer is formed during step C). Step C) is hence a step of forming the polymer side chains on the one or multiple functionalized short chain branches to obtain the graft copolymer. In other words, step C) relates to the formation of the polymer side chains, viz. the polymer branches, viz. the graft copolymer. This can be carried out e.g. by ROP. This can also be carried out by means of a nucleophilic substitution reaction with a pre-synthesized polymer containing carbonyl group-containing functionalities (e.g. carboxylic or carbonic acid ester functionalities). The polymer branches can thereby also be for example random or block copolymers.

In case during step C) polar polymer side chains are introduced, the polarity of these may be tuned by e.g. by adding during step C) the combination of multiple cyclic monomers of different polarity, by using a pre-synthesized homopolymer or copolymer with a tuned polarity that can be attached to the polyolefin main chain via ROP and/or nucleophilic substitution by adding during step C) a combination of multiple polymers of different polarity or at least two different cyclic monomers, or by adding during step C) a combination of at least one cyclic monomer and at least one polymer.

Alternatively, the polarity of the polymer side chains may be tuned by reacting the polyolefin having functional side groups obtained in step B) with a combination of a cyclic monomer and a pre-synthesized polymer that can be attached to the polyolefin main chain via nucleophilic substitution for obtaining the side chains. Both the physical and mechanical properties may be tuned using the process according to the present invention. In addition, the hydrolysis and degradation properties of the polar polymer side chains may be tuned while not affecting the polyolefin main chain.

In case during step C) polyethylene-like polyester side chains are introduced, the copolymers obtained may be used as compatibilizers for polyolefin-PE blends, in particular iPP-PE blends.

In case of a grafting onto approach in step C), the polymers added to be grafted onto the main chain comprise carbonyl group-containing functionalities, for example carboxylic or carbonic acid ester functionalities. It is possibly that said polymer side chains are random copolymers or block copolymers.

In this manner a plurality of polymer blocks or chains are "linked" to said polyolefin main chain comprising the reactive functionalities. In an embodiment, all of the polymer side chains are made of the same monomer(s) but may vary in average molecular weight. By tuning the reactivity and amount of the polymer branches the properties of the graft copolymer obtained can be easily tuned. In an embodiment, the polymer side chains are homopolymers, preferably polar polymers such as polyesters. The polymer side chains may also be random copolymers or block copolymers. The side chains may be all the same or may be different.

In a specific embodiment, the process according to the present invention consists of three successive steps comprising copolymerizing an olefin, such as ethylene, with a metal-pacified functional olefin as comonomer, such as an aluminum-pacified functional (preferably a hydroxyl functionality) olefin, and in a following step, the deprotection of the aluminum-pacified functional olefin and in the last step the addition of cyclic monomers, e.g. lactones, to initiate the ROP using a metal catalyst.

The product of the first step (step A) is a polyolefin having metal-pacified side groups. The product of the second step (step B) is a polyolefin having functional side groups.

Each of said functional side groups obtained in step B) can act as a ROP initiator and together with a catalyst in step C) to provide the graft copolymer.

In a specific embodiment, the process according to the present invention consists of three successive steps, the first step being copolymerizing an olefin, such as ethylene, with a metal-pacified functional olefin as comonomer, such as an aluminum-pacified functional (preferably a hydroxyl functionality) olefin, the second step the deprotection of the metal-pacified groups and the subsequent step being attaching polymers comprising carbonyl-containing functionalities as side chains.

### Ring-opening polymerization reaction to grow polymer branches

During step C) of the inventive process the polymer side chains may be formed by ROP of cyclic monomers.

The result of step B) is a polyolefin having one or multiple functionalized short side chain branches. These functionalized short side chain branches can be used to initiate ROP.

The cyclic monomers as preferably used by the present invention are oxygen-containing cyclic compounds. The mechanism of ROP is well known to a skilled person and described for example in the Handbook of Ring-Opening Polymerization, 209, Eds. P. Dubois, O. Coulembier, J.-M. Raquez, Wiley VCH, ISBN: 9783527319534. A mixture of cyclic monomer may also be used to form random polymer side chains to tune the properties. Also the sequential addition of different cyclic monomers may be used.

In an embodiment, the cyclic monomer for use in ROP is a polar monomer. The polar cyclic monomer is preferably selected from the group consisting of a lactone, a lactide, a cyclic oligoester (e.g. a di-ester, a tri-ester, a tetra-ester, a penta-ester or higher oligoesters), an epoxide, an aziridine, a combination of epoxide and/or aziridine and CO₂, a cyclic anhydride, a combination of epoxide and/or aziridine and a cyclic anhydride, a combination of epoxide and/or aziridine and CO₂ and a cyclic anhydride, a cyclic N-carboxyanhydride, a cyclic carbonate, a lactam and one or more combinations thereof.

Lactone is used to prepare polylactone side chains; lactide is used to prepare polylactide side chains; cyclic oligoester (e.g. a di-ester, a tri-ester, a tetra-ester or a penta-ester) is used to prepare different types of polyester side chains; epoxide is used to prepare polyether side chains using ROP; a combination of epoxide and CO₂ is used to prepare polycarbonate side chains or poly(carbonate-co-ether) side chains; a combination of epoxide and a cyclic anhydride is used to prepare polyester side chains or polyester-co-ether side chains; a combination of epoxide, cyclic anhydride and CO₂ is used to prepare poly(carbonate-co-ester) side chains or poly(carbonate-co-ester-co-ether) side chains; an N-carboxyanhydride is used to produce polypeptide side chains; a carbonate is used to prepare polycarbonate or polycarbonate-co-ether side chains.

Other cyclic monomers are cyclic sulfur-containing compounds such as sulfides; cyclic nitrogen-containing compounds such as amines (aziridines), lactams, urethanes, ureas; cyclic phosphorus-containing compounds such as phosphates, phosphonates, phosphites, phosphines and phosphazenes; and cyclic silicon-containing compounds such as siloxanes, and silyl ethers.

In an embodiment, the at least one cyclic monomer for use in ROP is a monomer selected from the group consisting of cyclic hydrocarbyls containing a reactive functionality that can undergo a nucleophilic substitution reaction at a carbonyl group-containing functionality, such as macrolactones or macrooligolactones, whereby the monomer comprises at least 10 consecutive carbon atoms forming the ring.

In case the cyclic monomer is a cyclic ester, it may be a cyclic ester having a ring size from 4-40 atoms. Preferably the atoms forming the ring, other than the oxygen of the ester functionality or ester functionalities in the case of cyclic oligoesters, are carbon atoms.

A lactone is a cyclic compound having one ester group; a dilactone is a compound having two ester groups; a trilactone is a compound having three ester groups; a tetralactone is a compound having four ester groups; a pentalactone is a compound having five ester groups; an oligolactone is a compound having 2-20 ester groups.

Examples of cyclic esters that can be used as monomer in step C) include β-propiolactone, β-butyrolactone, 3-methyloxetan-2-one, γ-valerolactone, ε-caprolactone, ε-decalactone, 5,5-dimethyl-dihydro-furan-2-one, 1,4-dioxepan-5-one, 1,5-dioxepan-2-one, 3,6-dimethylmorpholine-2,5-dione, 1,4-dioxepan-7-one, 4-methyl-1,4-dioxepan-7-one, (S)-γ-hydroxymethyl-γ-butyrolactone, γ-octanoic lactone, γ-nonanoic lactone, δ-valerolactone, δ-hexalactone, δ-decalactone, δ-undecalactone, δ-dodecalactone, glycolide, lactide (L, D, meso), heptalactone, octalactone, nonalactone, decalactone, 11-undecalactone, 12-dodecalactone, 13-tridecalactone, 14-tetradecalactone, 15-pentadecalactone (or ω-pentadecalactone), globalide, 16-hexadecalactone, ambrettolide, 17-heptadecalactone, 18-octadecalactone, 19-nonadecalactone, ethylene brassylate, butylene brassylate, cyclic butyl terephthalate, cyclic butyl adipate, cyclic butyl succinate, cyclic butyl terephthalate oligomers.

The cyclic esters, in particular where these are lactones, may be in any isomeric form and may further contain organic substituents on the ring that do not prevent the ROP. Examples of such cyclic esters include 4-methyl caprolactone, ε-decalactone, the lactone of ricinoleic acid (a 10-membered ring with a hexyl branched on the (co-1)-position) or the hydrogenated version of thereof, 13-hexyloxacyclotridecan-2-one (a macrocycle with a hexyl branch on the α-position), and the like. These lactones in which there are at least 10 methylene units in the ring are considered in the context of the present invention to be a nonpolar monomer.

It is further possible that the cyclic ester comprise one or more unsaturations in the ring. Examples of such cyclic esters include 5-tetradecen-14-olide, 11-pentadecen-15-olide, 12-pentadecen-15-olide (also known as globalide), 7-hexadecen-16-olide (also known as ambrettolide) and 9-hexadecen-16-olide.

The cyclic ester may further have one or more heteroatoms in the ring, provided that such do not prevent the ROP. Examples of such cyclic esters include 1,4-dioxepan-5-one, 1,5-dioxepan-2-one, 3,6-dimethylmorpholine-2,5-dione, 1,4-oxazepan-7-one, 4-methyl-1,4-oxazepan-7-one, 10-oxahexadecanolide, 11-oxahexadecanolide, 12-oxahexadecanolide and 12-oxahexadecen-16-olide.

In an embodiment, first a nonpolar monomer is used to form a first polyethylene-like block in the polymer side chain and subsequently a polar monomer is used to form an additional block on the nonpolar block in the polymer side chain. In other words, the side chains in themselves are block-copolymers.

In an embodiment, the polyolefin is isotactic PP, the nonpolar polymer is a polyambrettolide or polypentadecalactone and the polar polymer is polycaprolactone or polylactide.

### Nucleophilic substitution to add polymer side chains

During step C) a nucleophilic substitution reaction can be carried out to add polymer side chains to the polyolefin main chain.

The result of step A) is a polyolefin having one or multiple metal-pacified functionalized short side chain branches. These metal-pacified functionalized short side chain branches are deprotected and then used to carry out a nucleophilic substitution reaction.

In the context of the present invention, a nucleophilic substitution reaction describes the reaction of a nucleophile with a carbonyl group-containing functionality present in a polymer added during step C) to the polyolefin having one or multiple functionalized short side chain branches obtained in step B).

### Combination of ROP and nucleophilic substitution to add polymer side chains

During step C) of the present process the polymer side chains may be formed by a combination of ROP of cyclic monomers, e.g. lactones, and nucleophilic substitution, e.g. transesterification.

The polymers comprising at least one carbonyl group-containing functionality to be added during step C) to afford the graft copolymer may for example be selected from the group consisting of a polyester, a polycarbonate, a polyamide, a polyurethane, a polyurea, a random or block poly(carbonate-ester), poly(carbonate-ether), poly(ester-ether), poly(carbonate-ether-ester), poly(ester-amide), poly(ester-ether-amide), poly(carbonate-amide), poly(carbonate-ether-amide), poly(ester-urethane), poly(ester-ether-urethane), poly(carbonate-urethane), poly(carbonate-ether-urethane), poly(ester-urea), poly(ester-ether-urea), poly(carbonate-urea), poly(carbonate-ether-urea), poly(ether-amide), poly(amide-urethane), poly(amide-urea), poly(urethane-urea) or one or more combination thereof.

In an embodiment, besides a pre-synthesized polymer for the side chains also cyclic monomers are added to provide a combination of ROP and nucleophilic substitution reactions to yield for example a final "polyolefin-g-polar polymer" or "polyolefin-g-polyethylene-like polymer" graft copolymer. This approach provides a versatile method to tune the physical and mechanical properties of the graft copolymer.

In an embodiment, a co-catalyst is present during step C) in case of nucleophilic substitution reaction. More preferably, when using a Cr- or Co-based catalyst and using epoxides and/or aziridines in combination with CO₂ or using epoxides and/or aziridines in combination with cyclic anhydrides or using epoxides and/or aziridines in combination with CO₂ and cyclic anhydrides. Examples of a co-catalyst suitable for use are N-methyl-imidazole, 4-dimethylanimopyridine, bis(triphenylphosphoranylidene)ammonium chloride) bis(triphenyl-phosphoranylidene)ammonium azide), tricyclohexylphosphine, triphenylphosphine, tris(2,4,6-trimethoxyphenyl)phosphine and 1,5,7-triazabicyclododecene.

Catalyst that are suitable for the ROP, transesterification or nucleophilic substitution reaction are provided below. Specific examples of catalysts include among others mineral acids, organic acids, organic bases, metallic compounds such as hydrocarbyls, oxides, chlorides, carboxylates, alkoxides, aryloxides, amides, salen complexes, β-ketiminato complexes, guanidinato complexes of tin, titanium, zirconium, aluminum, bismuth, antimony, magnesium, calcium and zinc and lipase enzymes. Examples of suitable catalysts are as reported by J. Otera and J. Nishikido, Esterification, p. 52-99, Wiley 2010; J. Otera Chem. Rev. 1993, 93, 1449; H. Kricheldorf Chem. Rev. 2009, 109, 5579; D.-W. Lee, Y.-M. Park, K.-Y. Lee Catal. Surv. Asia 2009, 13, 63; A. B. Ferreira, A. L. Cardoso, M. J. da Silva International Schilarity Research Network, 2012, doi: 10.5402/2012/142857; Z. Helwani, M. R. Othman, \N. Aziz, J. Kim, W. J. N. Fernando Appl. Catal. A: Gen. 2009, 363, 1; N. E. Kamber, W. Jeong, R. M. Waymouth, R. C. Pratt, B. G. G. Lohmeijer, J. L. Hedrick, Chem. Rev., 2007, 107, 5813; D. Bourissou, S. Moebs-Sanchez, B. Martin-Vaca, C. R. Chimie, 2007, 10, 775.

Examples of organic acid as catalysts for ROP or nucleophilic substitution according to the present invention are the following, an acid selected from the group comprising diethyl ether complex of hydrogen chloride, fluorosulfonic acid, trifluoromethanesulfonic acid, methyl trifluorosulfonate, ethyl trifluoromethanesulfonate, n-propyl trifluorosulfonate and i-propyl trifluorosulfonate)), metal (yttrium, aluminum and bismuth) triflates, the acidic catalyst may also be selected from a group of compounds that are formed by combining a strong Lewis acid and a strong Bronsted acid. A specific example of such a compound is an equimolar combination of fluorosulfonic acid and antimony pentafluoride.

Examples of organic bases as catalysts for ROP or nucleophilic substitution according to the present invention are the following. The bases herein are defined as super bases and are referred as compounds which exhibit basicity significantly higher than that of commonly used amines such as pyridine or triethylamine. Super bases can broadly be divided into three categories: organic, organometallic and inorganic. Organic super bases comprise molecules characterized as amidines, guanidines, multicyclic polyamines and phosphazenes.

Amidines are classified as amine compounds which have an imine function adjacent to the α-carbon:

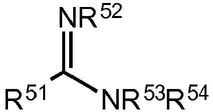

Structurally these correspond to amine equivalents of carboxylic esters. The alkyl substituents R⁵¹-R⁵⁴ are independently selected from hydrogen and C1-C16 alkyl substituents that may be linear, branched, cyclic or aromatic. Further these alkyl substituents R⁵¹-R⁵⁴ may be unsaturated, halogenated or carry a specific functionality such as hydroxyl, ether, amine, cyano, or nitro functions. The alkyl substituents R⁵¹-R⁵⁴ may also form bicyclic structures, where an increased ring strain may lead to stronger basicity. Examples of cyclic amidines are 1,5-diazabicyclo[4.3.0]non-5-ene, 3,3,6,9,9-pentamethyl-2,10-diazabicyclo-[4.4.0]dec-1-ene, 1,8-diazabicyclo[5.4.0]undec-7-ene (DBU). DBU is considered to be the strongest amidine derivative.

Guanidines can similarly be classified as amines, which possess two imine functions adjacent to the α-carbon:

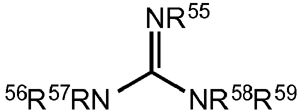

These correspond to amine equivalents of ortho esters and show the strongest Bronsted basicity among amine derivatives. The basicity of guanidine is close to that of a hydroxyl ion, which is the strongest base in aqueous chemistry. The alkyl substituents R⁵⁵-R⁵⁹ are independently selected from hydrogen and C1-C16 alkyl substituents that may be linear, branched, cyclic or aromatic. Further these alkyl substituents R⁵⁵-R⁵⁹ may be unsaturated, halogenated or carry a specific functionality such as hydroxyl, ether, amine, cyano, or nitro functions. The alkyl substituents R⁵⁵-R⁵⁹ may also form bicyclic structures, where an increased ring strain may lead to stronger basicity. Examples of common guanidines are 1,5,7-triazabicyclo[4.4.0]dec-5-ene (TBD), *N*-methyl-1,5,7-triazabicyclo[4.4.0]dec-5-ene (MTBD), N,N,N',N'-tetramethyl-guanidine (TMG), or N,N,N',N',N"-pentamethylguanidine (PMG) can be given as examples of guanidine compounds.

Phosphazenes are organic super bases containing a pentavalent phosphorus atom bonded to four nitrogen functions of three amine substituents and one imine substituent.

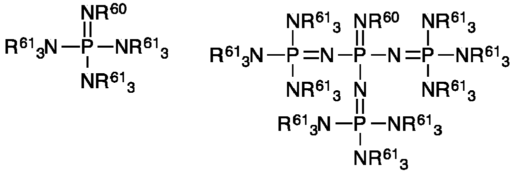

Phosphazenes are classified as Pₙ bases, where n denotes the number of phosphorus atoms in the molecule. The basicity of phosphazenes increase with an increasing amount of phosphorous atoms in the molecule. A P₄ base is considered to have a basicity parallel to organolithium compounds. The alkyl substituents R⁶⁰-R⁶¹ are independently selected from C1-C16 alkyl substituents that may be linear, branched, cyclic or aromatic. Further these alkyl substituents may be unsaturated, halogenated or carry a specific functionality such as hydroxyl, ether, amine, cyano, or nitro functions. The alkyl substituents R may be the same or mixtures of various combinations. Suitable examples of phosphazenes according to the present invention are 1-t-butyl-2,2,4,4,4-pentakis(dimethylamino)-2A⁵,4A⁵- catenadi(phosphazene) (P₂-t-Bu) and 1-t-butyl-4,4,4-tris(dimethylamino)-2,2-bis[tris(dimethylamino)-phosphoranylidenamino]-2A⁵,4A⁵-catenadi(phosphazene) (P₄-t-Bu).

Examples of organometallic or inorganic bases as catalysts for ROP or nucleophilic substitution according to the present invention are the following. Organometallic or inorganic super bases consist of metal alkyls, metal alkoxides and metal amides such as butyl lithium, potassium t-butoxide, lithium diisopropylamide and lithium bis(trimethylsilyl)amide to give an example of these. Mixtures of organometallic super bases can also be used to further enhance their reactivity; a mixture of butyl lithium and potassium t-butoxide an example of such. Inorganic super bases are frequently compounds with anions that are small in size and exhibit a high charge density such as metal hydrides in general and lithium nitride to give as examples.

Examples of tin-based catalysts for ROP or nucleophilic substitution according to the present invention are the following. Tetravalent tin compounds which are used as metal catalysts are tin oxide, dibutyltin dilaurate, dibutyltin diacetate, dibutyltin di(2-ethylhexoate), dioctyltin dilaurate, dibutyltin maleate, di(n-octyl)tin maleate, bis(dibutyl acetoxy tin) oxide, bis(dibutyl lauroxyloxy tin) oxide, dibutyltin dibutoxide, dibutyltin dimethoxide, dibutyltin disalicylate, dibutyltin bis(isooctyl maleate), dibutyltin bis(isopropyl maleate), dibutyltin oxide, tributyltin acetate, tributyltin isopropyl succinate, tributyltin linoleate, tributyltin nicotinate, dimethyltin dilaurate, dimethyltin oxide, dioctyltin oxide, bis(tributyltin) oxide, diphenyltin oxide, triphenyltin acetate, tripropyltin acetate, tripropyltin laurate, and bis(tripropyltin) oxide. Suitable tin-containing compounds include the carboxylate salts of divalent tin in which the carboxylate group is derived from a monobasic acid, an aliphatic dibasic acid, a tribasic aliphatic acid, a monobasic aromatic acid, a dibasic aromatic acid or a tribasic aromatic acid as hereinafter described in connection with the process for the production of esters. The carboxylate salt may be added as such or may be formed 'in situ' by reacting divalent tin oxide with a carboxylic acid. Divalent tin compounds, which are used are tin oxide, tin bis(2-ethyl-hexanonate), tin bis(2,6-tBu-4-Me-C₆H₂O), tin oxalate, tin dichloride.

Examples of titanium-based catalysts for ROP or nucleophilic substitution according to the present invention are the following. Titanium compounds which can be employed include tetramethyl titanate, tetraethyl titanate, tetraallyl titanate, tetrapropyl titanate, tetraisopropyl titanate, tetrabutyl titantate, tetraisobutyl titanate, tetraamyl titanate, tetracyclopentyl titanate, tetrahexyl titanate, tetracyclohexyl titanate, tetrabenzyl titanate, tetraoctyl titanate, tetra(2-ethyl-hexyl) titanate, tetranonyl titanate, tetradecyl titanate, and tetraoleyl titanate, tetraphenyl titanate, tetra(o-tolyl) titanate and tetra(m-tolyl) titanate, and tetra(1-naphthyl) titanate and tetra(2-naphthyl) titanate. Mixed alkyl titanate compounds would include trimethyl butyl titanate, dimethyl dibutyl titanate, triethyl butyl titanate, methyl isopropyl dibutyl titanate, diethyl dibutyl titanate, propyl tributyl titanate, ethyl tricyclohexyl titanate, diisopropyl dioctadecyl titanate, and dibutyl dioctadecyl titanate.

Examples of bismuth-based catalysts for ROP or nucleophilic substitution according to the present invention are the following. Bismuth tris(2-ethyl-hexanoate), bismuth trisacetate, bismuth trishexanoate, bismuth tristriflate, bismuth subsalicylate (also called orthosalicylate), bismuth subcarbonate, BiCl₃, BiBr₃, BiI₃, Bi₂O₃, Ph₂BiOEt, Ph₂BiOMe, Ph₂BiOtBu, Ph₂BiOBr, Ph₂BiI, [SCH₂CH₂O]Bi[SCH₂CH₂OH], B(OEt)₃, bismuth aminotriethanolate, bismuth lactate, bismuth nitrate, bismuthyl nitrate, bismuth carbonate, bismuthyl carbonate, bismuthyl hydroxide, bismuth ortho hydroxide (Bi(OH)₃).

Examples of organometallic/metal coordination complexes for use as catalysts for ROP, transesterification or nucleophilic substitution according to the present invention are the following. Besides metal halide, triflate, hydrocarbyl, alkoxide, aryloxide, amide, carboxylate, acetylacetonate complexes or complexes consisting of combinations of these substituents of Li, Na, K, Mg, Ca, Sc, Y, lanthanides, Ti, Zr, Zn, Al, Ga, Bi and Sn, distinct and well-defined organometallic and metal coordination complexes have been applied as metal catalysts for the ROP of various kinds of cyclic esters or cyclic carbonates and for the transesterification of polymers containing carboxylic acid-esters or carbonic acid-esters. Examples are salen, salan, salalen, guanidinate, porphyrin, β-ketiminate, phenoxy-imine, phenoxy-amine, bisphenolate, trisphenolate, alkoxyamine, alkoxyether and alkoxythioether complexes of Mg, Ca, Sc, Y, lanthanides, Ti, Zr, Zn, Al, Ga, Bi and Sn.

Recently, several well-defined metallic initiators have been developed for the controlled, living ROP of the various isomers of LA, namely *rac-,* L-, D- and meso-LA, as disclosed for example in O'Keefe et al. (B. J. O'Keefe, M. A. Hillmyer, W. B. Tolman, J. Chem. Soc., Dalton Trans., 2001, 2215-2224), or in Lou et al. (Lou, C. Detrembleur, R. Jérôme, Macromol. Rapid. Commun., 2003, 24, 161-172), or in Nakano et al. (K. Nakano, N. Kosaka, T. Hiyama, K. Nozaki, J. Chem. Soc., Dalton Trans., 2003, 4039-4050), or in Dechy-Cabaret et al. (O. Dechy-Cabaret, B. Martin-Vaca, D. Bourissou, Chem. Rev., 2004, 104, 6147-6176), or in Wu et al. (Wu, T.-L Yu, C.-T. Chen, C.-C. Lin, Coord. Chem. Rev., 2006, 250, 602-626), or in Amgoune et al. (Amgoune, C. M. Thomas, J.-F. Carpentier, Pure Appl. Chem. 2007, 79, 2013-2030). They are based mostly on: non-toxic zinc (M. Cheng, A. B. Attygalle, E. B. Lobkovsky, G. W. Coates, J. Am. Chem. Soc., 1999, 121, 11583-11584; B. M. Chamberlain, M. Cheng, D. R. Moore, T. M. Ovitt, E. B. Lobkovsky, G. W. Coates, J. Am. Chem. Soc., 2001, 123, 3229-3238; C. K. Williams, L. E. Breyfogle, S. K. Choi, W. Nam, V. G. Young Jr., M. A. Hillmyer, W. B. Tolman, J. Am. Chem. Soc., 2003, 125, 11350-11359; G. Labourdette, D. J. Lee, B. O. Patrick, M. B. Ezhova, P. Mehrkhodavandi, Organometallics, 2009, 28, 1309-1319; Z. Zheng, G. Zhao, R. Fablet, M. Bouyahyi, C. M. Thomas, T. Roisnel, O. Casagrande Jr., J.-F. Carpentier, New J. Chem., 2008, 32, 2279-2291), aluminum (N. Spassky, M. Wisniewski, C. Pluta, A. LeBorgne, Macromol. Chem. Phys., 1996, 197, 2627-2637; T. M. Ovitt, G. W. Coates, J. Am. Chem. Soc., 1999, 121, 4072-4073; M. Ovitt, G. W. Coates, J. Am. Chem. Soc., 2002, 124, 1316-1326; N. Nomura, R. Ishii, Y. Yamamoto, T. Kondo, Chem. Eur. J., 2007, 13, 4433-4451; H. Zhu, E. Y.-X. Chen, Organometallics, 2007, 26, 5395-5405), non-toxic bismuth H. Kricheldorf Chem. Rev. 2009, 109, 5579 or Group 3 metals and lanthanides (C.-X. Cai, A. Amgoune, C. W. Lehmann, J.-F. Carpentier, Chem. Commun., 2004, 330-331; A. Amgoune, C. M. Thomas, T. Roisnel, J.-F. Carpentier, Chem. Eur. J., 2006, 12, 169-179; A. Amgoune, C. M. Thomas, S. Ilinca, T. Roisnel, J.-F. Carpentier, Angew. Chem. Int. Ed., 2006, 45, 2782-2784).

The amount of additional catalyst for step C) used is selected from a range of for example 0.0001 to 0.5% by weight, preferably 0.001 to 0.1% by weight based on the cyclic ester, or the number of carbonyl functionalities in the polymer added during step C).

After step C) is finished, the graft copolymer is obtained. In an embodiment, the reaction mixture is quenched using a quenching agent, preferably a protic polar reagent, more preferably an alcohol, preferably methanol or ethanol. However, water can also be used. The product obtained after this quenching is a crude product which may contain also the polyolefin obtained in step A) and/or the polymer obtained from the ROP or nucleophilic substitution reaction in step C) that is not attached to the polyolefin main chain. For most applications, however, the crude product may be used as such without further purification.

If the polymer obtained from the ROP or nucleophilic substitution reaction in step C) has to be removed from the product, this crude product may for example be subjected to an additional step of work up. This work up step may comprise a precipitation. For example a precipitation in a solvent, such as THF or other organic solvents, such as chloroform. This can also be called an extraction in case the polymer for the side chains is polar because any polar homopolymer formed will be extracted out of the crude product leaving the graft copolymer and possibly homopolymer of the olefin.

A person skilled in the art will be able to determine the required steps in order to purify the copolymer products, using e.g. one or more precipitation and/or extraction steps using one or more solvents. The product may also be dried prior to use thereof.

### Further embodiments

The present invention relates to a three-step process for the preparation of graft copolymers.

Using the process according to the present invention, graft copolymers can be obtained. In an embodiment, the graft copolymer has an number average molecular weight (Mₙ) between for example 500 and 1,000,000 g/mol, preferably between 1,000 and 200,000 g/mol.

The polyolefin-based graft copolymers obtained after step C) of the present invention preferably have a polydispersity index (*Ð*) of between 1.1 and 10.0, more preferably between 1.1 and 5.0, more preferably between 1.1 and 4.0, even more preferably between 1.5 and 3.

The polyolefin main chain may be linear or branched (both long chain branched and short chain branched), atactic, isotactic or syndiotactic, preferably, isotactic polyolefins in the case of poly-α-olefins, wherein the isotactic polyolefin is preferably isotactic polypropylene.

According to a specific, non-limiting embodiment of the present invention, the polyolefin main chain may be linear low density polyethylene (LLDPE), high density polyethylene (HDPE), atactic, isotactic or syndiotactic PP (aPP, iPP, sPP, respectively), poly-4-methyl-1-pentene (P4M1P) or atactic, isotactic or syndiotactic polystyrene (aPS, iPS, sPS, respectively).

The graft copolymers according to the present invention may have a mass fraction of polyolefin (*mf*Pol) of between 10 % and 90 %, preferably between 30 % and 70 %. The mass fraction *mf*Pol is defined by the mass of the polyolefin divided by the total mass of the copolymer.

The graft copolymers according to the present invention may have a volume fraction of polymer for the side chains (*vf*Pol) of between 90 % and 10 %, preferably between 70 % and 30 %. The volume fraction *vf*Pol is defined by the volume of the polymer for the side chains divided by the total volume of the copolymer.

Examples of polymers having a polyolefin main chain and polar polymer side chains that can be prepared using the present method are HDPE-g-PCL, HDPE-g-PLA, HDPE-g-PBA, HDPE-g-PBS, HDPE-g-PEB, HDPE-g-poly(CL-co-PDL), HDPE-g-poly(BA-co-EB), HDPE-g-poly(BA-co-PDL), LLDPE-g-PCL, LLDPE-g-PLA, LLDPE-g-PBA, LLDPE-g-PBS, LLDPE-g-PEB, LLDPE-g-poly(BA-co-EB), LLDPE-g-poly(CL-co-PDL), LLDPE-g-poly(BA-co-PDL), EP-g-PCL, EP-g-PLA, EP-g-PBA, EP-g-PBS, EP-g-PEB, EP-g-poly(BA-co-EB), EP-g-poly(CL-co-PDL), EP-g-poly(BA-co-PDL), aPP-g-PCL, iPP-g-PLA, aPP-g-PBA, aPP-g-PBS, aPP-g-PEB, aPP-g-poly(BA-co-EB), aPP-g-poly(CL-co-PDL), aPP-g-poly(BA-co-PDL), iPP-g-PCL, iPP-g-PLA, iPP-g-PBA, iPP-g-PBS, iPP-g-PEB, iPP-g-poly(BA-co-EB), iPP-g-poly(CL-co-PDL), iPP-g-poly(BA-co-PDL), sPP-g-PCL, sPP-g-PLA, sPP-g-PBA, sPP-g-PBS, sPP-g-PEB, sPP-g-poly(BA-co-EB), sPP-g-poly(CL-co-PDL), sPP-g-poly(BA-co-PDL), iP4M1P-g-PCL, iP4M1P-g-PBA, iP4M1 P-g-PBS, iP4M1 P-g-PEB, iP4M1 P-g-poly(BA-co-EB), iP4M1 P-g-poly(CL-co-PDL), iP4M1P-g-poly(BA-co-PDL), aPS-g-PCL, aPS-g-PBA, aPS-g-PBS, aPS-g-PEB, aPS-g-poly(BA-co-EB), aPS-g-poly(CL-co-PDL), aPS-g-poly(BA-co-PDL), iPS-g-PCL, iPS-g-PBA, iPS-g-PBS, iPS-g-PEB, iPS-g-poly(BA-co-EB), iPS-g-poly(CL-co-PDL), iPS-g-poly(BA-co-PDL), sPS-g-PCL, sPS-g-PBA, sPS-g-PBS, sPS-g-PEBL, sPS-g-poly(BA-co-EB), sPS-g-poly(CL-co-PDL), sPS-g-poly(BA-co-PDL) and many other polymers.

Examples of polymers having a polyolefin main chain and polyethylene-like polymer side chains that can be prepared using the present method are HDPE-g-PPDL, HDPE-g-PAmb, HDPE-g-poly(PDL-co-Amb), LLDPE-g-PPDL, LLDPE-g-PAmb, LLDPE-g-poly(PDL-co-Amb), EP-g-PPDL, EP-g-PAmb, EP-g-poly(PDL-co-Amb), aPP-g-PPDL, aPP-g-PAmb, aPP-g-poly(PDL-co-Amb), iPP-g-PPDL, iPP-g-PAmb, iPP-g-poly(PDL-co-Amb), sPP-g-PPDL, sPP-g-PAmb, sPP-g-poly(PDL-co-Amb), iP4M1P-g-PPDL, iP4M1 P-g-PAmb, iP4M1 P-g-poly(PDL-co-Amb), aPS-g-PPDL, aPS-g-PAmb, aPS-g-poly(PDL-co-Amb), iPS-g-PPDL, iPS-g-PAmb, iPS-g-poly(PDL-co-Amb), sPS-g-PPDL, sPS-g-PAmb, sPS-g-poly(PDL-co-Amb).

Examples of polymers having a polyolefin main chain, and polyethylene-like and polar side chains that can be prepared using the present method are HDPE-g-PPDL-g-PCL, HDPE-g-PAmb-g-PCL, HDPE-poly(PDL-co-Amb)-g-PCL, LLDPE-g-PPDL-g-PCL, LLDPE-g-PAmb-g-PCL, LLDPE-poly(PDL-co-Amb)-g-PCL, EP-g-PPDL-g-PCL, EP-g-PAmb-g-PCL, EP-g-poly(PDL-co-Amb)-g-PCL, aPP-g-PPDL-g-PCL, aPP-g-PAmb-g-PCL, aPP-poly(PDL-co-Amb)-g-PCL, iPP-g-PPDL-g-PCL, iPP-g-PAmb-g-PCL, iPP-poly(PDL-co-Amb)-g-PCL, sPP-g-PPDL-g-PCL, sPP-g-PAmb-g-PCL, sPP-poly(PDL-co-Amb)-g-PCL, iP4M1P-g-PPDL-g-PCL, iP4M1P-g-PAMb-g-PCL, iP4M1P-g-poly(PDL-co-Amb)-g-PCL, aPS-g-PPDL-g-PCL, aPS-g-PAmb-g-PCL, aPS-poly(PDL-co-Amb)-g-PCL, iPS-g-PPDL-g-PCL, iPS-g-PAmb-g-PCL, iPS-poly(PDL-co-Amb)-g-PCL, sPS-g-PPDL-g-PCL, sPS-g-PAmb-g-PCL, sPS-poly(PDL-co-Amb)-g-PCL.

According to a specific, non-limiting embodiment of the present invention, the polyolefin main chain may be HDPE, LLDPE, EP, aPP, iPP, sPP, iP4M1P, aPS, iPS or sPS.

The copolymers prepared according to the present invention may for example be used to introduce polar properties to enhance the interfacial interactions in polyolefins blends with polar polymers or blends with different polyolefins with PEs. They may be used as compatibilizers to improve properties such as adhesion. They may be used to improve barrier properties, especially against oxygen, for polyolefin films. They may be used as compatibilizers to highly polar polymers such as starch or for polyolefin-based composites with inorganic fillers such as glass or talc. They may be used in drug delivery devices, nonporous materials/membranes.

### Advantages of the present invention

An advantage of the present invention is the versatility allowing the production of graft copolymer having finely tuned properties, such as polarity.

It is preferred that the present process is a so-called "in reactor" process. Preferably, step B) is carried out directly after step A), and step C) directly after step B) preferably in a series of connected reactors, preferably continuously. It should be noted that an extruder is also considered as a reactor in the context of the present invention.

### Examples

The invention is further illustrated by the following non-limiting examples merely used to further explain certain embodiments of the present invention.

Regarding steps A) and B) a polyolefin main chains having a hydroxyl-functionalized short side chain branches were obtained as described below.

All manipulations were performed under an inert dry nitrogen atmosphere using either standard Schlenk or glove box techniques. Dry, oxygen free toluene was employed as solvent for all polymerizations.

### Preparation of polyethylene (HDPE) main chain having hydroxyl-functionalized short side chain branches

A mixture of cis-cyclooctene (5 g, 45.5 mmol) and 5-hydroxy-cis-cyclooctene (172 mg, 1.36 mmol), second generation Grubbs catalyst (19.3 mg, 22.7 µmol) and toluene (10.0 mL) were stirred at room temperature for 24 h. The manipulations were carried out in the glovebox. Ethyl vinyl ether (1.7 mg, 22.7 µmol) was added to stop the polymerization after which the polymer was precipitated in acidic methanol. The unsaturated polymers were redissolved in toluene and transferred to a 300 mL stainless steel Büchi reactor. Subsequently, an appropriate amount of Wilkinson's catalyst dissolved in a small amount of toluene (2 mL) was added via syringe and the mixture was stirred for 48 h at 90 °C under the H₂ (20 bar) (step A)). Afterwards, the reaction mixture was quenched in acidified methanol (used as metal substituting agent, step B)), filtered and purified by re-precipitation in methanol. The saturated polymer, obtained with the yield of 94%, was dried under reduced pressure at 80 °C for 24h.

### Preparation of polypropylene (iPP) main chain having hydroxyl-functionalized short side chain branches

The copolymerization of propylene/10-undecen-1-ol using C₂-symmetric silyl-bridged zirconocene catalyst rac-Me₂Si(2-Me-4-Ph-Ind)₂ZrCl₂)/MAO has been conducted to synthesize randomly functionalized isotactic polypropylenes. Polymerization reactions were carried out in stainless steel Büchi reactors. Prior to the polymerization, the reactor was dried in vacuo at 40 °C and flushed with dinitrogen. Toluene solvent (70 mL) was introduced followed by TIBA and the functional monomer under an inert atmosphere. The resulting solution was stirred for 15-20 min followed by the addition of a calculated amount of cocatalyst under dinitrogen atmosphere. The polymerization reaction was started by addition of the catalyst to reactor. The reactor was then pressurized to the desired pressure with propylene and the pressure was maintained for a predefined time (step A)). The propylene feed was stopped and the resulting mixture was quenched in acidified methanol (used as metal substituting agent, step B)), filtered and dried under reduced pressure at 60 °C for 24 h.

All examples below relate to step C) of the process according to the present invention, wherein polymer branches were formed using a previously prepared polyolefin main chain having a hydroxyl-functionalized short side chain branches.

### Example 1

Typical procedure for synthesis of HDPE-*graft*-PCL copolymers: A glass crimp cap vial was charged with ε-caprotactone (CL,0.547 g 4,8 mmol) and Al-salen catalyst 1 (3.4 mg, 9,7 µmol), randomly functionalized HDPE (70 mg, 9.7 µmol) and toluene (1,50 g, 16,3 mmol). All manipulations were carried out in the glovebox. Then, the mixture was removed from the glovebox and stirred in an oil bath at 100 °C. The progress of the reaction was followed by ¹H NMR spectroscopy by taking aliquots at set time intervals. The synthesized copolymer was cooled to room temperature and quenched using acidified methanol, isolated and dried in vacuum at room temperature for 18 h. Table 1, entries HDPE-PCL1 - HDPE-PCL3 specify the reaction conditions, molecular weight (*M*ₙ and *M*_{w}), *Ð* and the CL conversion for the present example with catalyst 1.

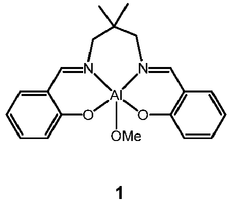

### Example 2

The same procedure was used as for example 1, with this difference that pentadecalactone (PDL) was used instead of CL. Table 1, entries HDPE-PPDL1 - HDPE-PPDL3 specify the reaction conditions, molecular weight (*M*ₙ and *M*_{w}), *Ð* and the PDL conversion for the present example with PDL.

### Example 3

The same procedure was used as for example 1, with this difference that catalyst **2** was used instead of **1.** Table 1, entries HDPE-PCL4 - HDPE-PCL6 specify the reaction conditions, molecular weight (*M*ₙ and *M*_{w}), *Ð* and the CL conversion for the present example with catalyst 2.

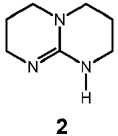

### Example 4

The same procedure was used as for example 2, with this difference that catalyst 2 was used instead of 1. Table 1, entries HDPE-PPDL4 - HDPE-PPDL6 specify the reaction conditions, molecular weight (*M*ₙ and *M*_{w}), *Ð* and the PDL conversion for the present example with catalyst 2.

**Table 1. Ring-opening polymerization of CL and PDL initiated by hydroxyl-functionalized HDPE affording polyethylene-polyester graft copolymers.**

| **entry** | **cat.** | **mon/cat./initiator** | **time [h]** | **T [°C]** | **Mₙ [g/mol]** | ***Ð*** | **conv. [%]** |
|---|---|---|---|---|---|---|---|
| HDPE-PCL 1 | **1** | 250/1/1 | 2 | 100 | 20700 | 2.8 | 90 |
| HDPE-PCL2 | **1** | 500/1/1 | 2 | 100 | 85900 | 2.3 | 94 |
| HDPE-PCL3 | **1** | 1000/1/1 | 2 | 100 | 24800 | 2.1 | 97 |
| HDPE-PPDL1 | **1** | 250/1/1 | 5 | 100 | 49400 | 2.4 | 92 |
| HDPE-PPDL2 | **1** | 500/1/1 | 5 | 100 | 59600 | 3.5 | 94 |
| HDPE-PPDL3 | **1** | 1000/1/1 | 5 | 100 | 31400 | 2.5 | 88 |
| HDPE-PCL4 | **2** | 100/1/1 | 24 | 100 | 15500 | 2.3 | 96 |
| HDPE-PCL5 | **2** | 200/1/1 | 24 | 100 | 21900 | 2.3 | 96 |
| HDPE-PCL6 | **2** | 500/1/1 | 24 | 100 | 46600 | 2.1 | 84 |
| HDPE-PPDL4 | **2** | 100/1/1 | 24 | 100 | 13000 | 2.0 | 96 |
| HDPE-PPDL5 | **2** | 200/1/1 | 24 | 100 | 15300 | 1.6 | 93 |
| HDPE-PPDL6 | **2** | 500/1/1 | 24 | 100 | 18100 | 2.1 | 85 |

### Example 5

Typical procedure for synthesis of iPP-*graft*-PPDL copolymers: A glass crimp cap vial was charged with toluene (1.5 mL), PDL (1.1 g, 4.5 mmol), hydroxyl-functionalized iPP (4.9 mg, 8.7 µmol) and catalyst **1** (∼3.05 mg, 8.7 µmol). All manipulations were carried out in the glovebox. Then, the mixture was removed from the glovebox and stirred in an oil bath at 100 °C. The progress of the reaction was followed by ¹H NMR spectroscopy by taking aliquots at set time intervals. The synthesized copolymer was cooled to room temperature and quenched using acidified methanol, isolated and dried in vacuum at room temperature for 18 h. Table 2, entry iPP-PPDL1- HDPE-PPDL3 specifies the reaction conditions, molecular weight (*M*ₙ and *M*_{w}), *Ð* and the PDL conversion for the present example with catalyst 1.

### Example 6

The same procedure was used as for example 5, with this difference that catalyst 2 was used instead of 1. Table 2, entry iPP-PPDL4 specifies the reaction conditions, molecular weight (*M*ₙ and *M*_{w}), *Ð* and the PDL conversion for the present example with catalyst 2.

**Table 2. Ring-opening polymerization of PDL initiated by hydroxyl-functionalized iPP affording iPP-graft-PPDL copolymers.**

| **entry** | **cat.** | **mon/cat./initiator** | **time [h]** | T **[°C]** | ***M*ₙ [g/mol]** | ***Ð*** | **conv. [%]** |
|---|---|---|---|---|---|---|---|
| iPP-PPDL1 | **1** | 250/1/1 | 24 | 100 | 42000 | 2.4 | 95 |
| iPP-PPDL2 | **1** | 500/1/1 | 24 | 100 | 50800 | 2.2 | 94 |
| iPP-PPDL3 | **1** | 1000/1/1 | 24 | 100 | 84800 | 1.9 | 40 |
| iPP-PPDL4 | **2** | 100/1/1 | 24 | 100 | 64400 | 2.0 | 16 |

From the above, the following can be observed. With the method according to the present method a variety of graft copolymers can be obtained by tuning the polyolefin main chain and by tuning the monomer used in the preparation of the polymer side chains. Moreover, several catalyst may be used to prepare the side chain branches.

### Analytical techniques

¹H NMR analysis carried out at 80-110 °C using TCE-*d₂* as the solvent and recorded in 5 mm tubes on a Varian Mercury spectrometer operating at frequencies of 400 MHz. Chemical shifts are reported in ppm versus tetramethylsilane and were determined by reference to the residual solvent.

Heteronuclear multiple-bond correlation spectra (HMBC) were recorded with pulse field gradients. The spectral windows for 1H and 13C axes were 6075.3 and 21367.4 Hz, respectively. The data were collected in a 2560 × 210 matrix and processed in a 1K × 1K matrix. The spectra were recorded with the acquisition time 0.211 s, relaxation delay 1.4 s and number of scans equal to 144 × 210 increments.

Solid-state ¹³C{¹H} Cross-Polarization/Magic-Angle Spinning (CP/MAS) NMR and ¹³C{¹H} Insensitive Nuclei Enhanced by Polarization Transfer (INEPT) experiments were carried out on a Bruker AVANCE-III 500 spectrometer employing a double-resonance H-X probe for rotors with 2.5 mm outside diameter. These experiments utilized a MAS frequency of 25.0 kHz, a 2.5 µs π/2 pulse for ¹H and ¹³C NMR, a CP contact time of 2.0 ms and TPPM decoupling during acquisition. The CP conditions were pre-optimized using L-alanine. The ¹³C{¹H} INEPT spectra were recorded using the refocused-INEPT sequence with a J-evolution period of either 1/3 J_{CH} or 1/6 J_{CH} assuming a ¹J_{CH} of 150 Hz, i.e. for a J-evolution time of 1/3 J_{CH} the signals from CH and CH₃ groups are positive, while those of CH₂ are negative. The ²D ¹H-¹H double quantum-single quantum (DQ-SQ) correlation experiments and DQ build-up experiments were carried out on a Bruker AVANCE-III 700 spectrometer using a 2.5 mm solid-state MAS double-resonance probe. These experiments employed a spinning frequency of 25.0 kHz. DQ excitation and reconversion was performed using the broadband back-to-back (BaBa) sequence. Chemical shifts for ¹H and ¹³C NMR spectra are reported relative to TMS using solid adamantane as an external.

Size exclusion chromatography (SEC). The molecular weight (*M*ₙ and *M*_{w}) in g/mol and the *Ð* were determined by means of high temperature size exclusion chromatography which was performed at 160 °C using a high speed GPC (Freeslate, Sunnyvale, USA). Detection: IR4 (PolymerChar, Valencia, Spain). Column set: three Polymer Laboratories 13 µm PLgel Olexis, 300 × 7.5 mm. 1,2,4-Trichlorobenzene (TCB) was used as eluent at a flow rate of 1 mL·min⁻¹. TCB was freshly distilled prior to use. The molecular weights and the corresponding *Ð* were calculated from HT SEC analysis with respect to narrow polyethylene standards (PSS, Mainz, Germany). HT SEC of copolymers was performed at 160 °C on a Polymer Laboratories PLXT-20 Rapid GPC Polymer Analysis System (refractive index detector and viscosity detector) with 3 PLgel Olexis (300 × 7.5 mm, Polymer Laboratories) columns in series. TCB was used as eluent at a flow rate of 1 mL·min-1. The molecular weights (*M*ₙ and *M*_{w}) were calculated with respect to polyethylene standards (Polymer Laboratories). A Polymer Laboratories PL XT-220 robotic sample handling system was used as autosampler.

Differential scanning calorimetry (DSC). Melting (*Tₘ*) and crystallization (*T_{c}*) temperatures as well as enthalpies of the transitions were measured by DSC using a DSC Q100 from TA Instruments. The measurements were carried out at a heating and cooling rate of 10 °C·min⁻¹ from -60 °C to 160 °C. The transitions were deduced from the second heating and cooling curves.

## Claims

1. A process for the preparation of a graft copolymer comprising a polyolefin main chain and one or multiple polymer side chains, the process comprising the steps of:
A) copolymerizing at least one first type of olefin monomer and at least one second type of metal-pacified functionalized olefin monomer using a catalyst system to obtain a polyolefin main chain having one or multiple metal-pacified functionalized short chain branches, the catalyst system comprising:
i) a metal catalyst or metal catalyst precursor comprising a metal from Group 3-10 of the IUPAC Periodic Table of elements;
ii) optionally a co-catalyst;
B) reacting the polyolefin main chain having one or multiple metal-pacified functionalized short chain branches obtained in step A) with at least one metal substituting agent to obtain a polyolefin main chain having one or multiple functionalized short chain branches;
C) forming one or multiple polymer side chains on the polyolefin main chain, wherein as initiators the functionalized short chain branches on the polyolefin main chain obtained in step B) are used to obtain the graft copolymer and a transesterification reaction is carried out to add polymer side chains to the polyolefin main chain.

2. The process according to claim 1, wherein step C) of obtaining a graft copolymer is carried out by a combination of ROP using at least one type of cyclic monomer and at least one transesterification reaction with at least one transesterifiable polymer.

3. The process according to any one of the preceding claims, wherein the at least one first type of olefin monomer is a compound according to Formula I-A: 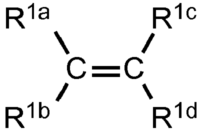 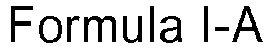 wherein C is carbon and wherein R^{1a}, R^{1b}, R^{1c}, and R^{1d} are each independently selected from the group consisting of H or hydrocarbyl with 1 to 16 carbon atoms.

4. The process according to any one of the preceding claims, wherein the at least one second type of metal-pacified functionalized olefin monomer is a compound according to Formula I-B: 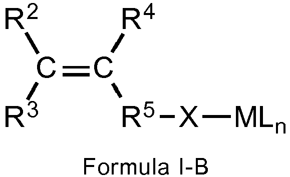
wherein C is carbon;
wherein R², R³, and R⁴ are each independently selected from the group consisting of H or hydrocarbyl with 1 to 16 carbon atoms, and
wherein R⁵-X-MLₙ is a main group metal pacified heteroatom-containing functional group, wherein X is a heteroatom or a heteroatom-containing group, wherein the heteroatom that is bonded to M is selected from the group consisting of O, S and N;
wherein R⁵ is a hydrocarbyl with 1 to 16 carbon atoms.

5. The process according to any one of the preceding claims, wherein step B) is carried out directly after step A) and/or wherein step C) is carried out directly after step B), preferably in a series of connected reactors, preferably continuously.

6. The process according to any one of claims 2 - 5, wherein during step C) an additional catalyst for the ROP and/or transesterification is added.

7. The process according to any one of the preceding claims, wherein the metal catalyst used in step A) comprises a metal from Group 3-8, preferably Group 3-6, more preferably from Group 3-4 of the IUPAC Periodic Table of elements and/or wherein the metal catalyst used in step A) comprises a metal selected from the group consisting of Ti, Zr, Hf, V, Cr, Fe, Co, Ni, Pd, preferably Ti, Zr or Hf.

8. The process according to any one of the preceding claims, wherein the co-catalyst is selected from the group consisting of MAO, DMAO, MMAO, SMAO and fluorinated aryl borane or fluorinated aryl borate.

9. The process according to any one of the preceding claims, wherein the at least one olefin monomer according to Formula I-A is selected from the group consisting of ethylene, propylene, 1-butene, 4-methyl-1-pentene, 1-pentene, 1-hexene, 1-heptene, 1-octene, 1-nonene, 1-decene, 1-undecene, 1-dodeceme, 1-tridecene, 1-tetradecene, 1-pentadecene, 1-hexadecene, 1-heptadecene, 1-octadecene, 1-cyclopentene, cyclohexene, norbornene, ethylidene-norbornene, and vinylidene-norbornene and one or more combinations thereof.

10. The process according to any one of the claims 2, 4 and 5-11, wherein the cyclic monomer used during ROP in step C) is a polar monomer, selected from the group consisting of a lactone, a lactide, a cyclic oligoester such as a di-ester, a tri-ester, a tetra-ester, a penta-ester or higher oligoesters, an epoxide, an aziridine, a combination of epoxide and/or aziridine and CO₂, a cyclic anhydride, a combination of epoxide and/or aziridine and a cyclic anhydride, a combination of epoxide and/or aziridine and CO₂ and a cyclic anhydride, a cyclic N-carboxyanhydride, a cyclic carbonate, a lactam and one or more combinations thereof, preferably a lactone.
or wherein the cyclic monomer is selected from macrolactones and/or macrooligolactones, preferably with at least 10 consecutive carbon atoms in the ring/cycle, cyclic carbonates, cyclic amides, cyclic urethanes and cyclic ureas; or one or more combinations thereof, preferably macrolactones.

11. The process according to any one of the claims 1-10, wherein at least one polymer for the side chains and/or at least one transeterifiable polymer is selected from the group consisting of a polyester, a polycarbonate, a polyamide, a polyurethane, a polyurea, a random or block poly(carbonate-ester), poly(carbonate-ether), poly(ester-ether), poly(carbonate-ether-ester), poly(ester-amide), poly(ester-ether-amide), poly(carbonate-amide), poly(carbonate-ether-amide), poly(ester-urethane), poly(ester-ether-urethane), poly(carbonate-urethane), poly(carbonate-ether-urethane), poly(ester-urea), poly(ester-ether-urea), poly(carbonate-urea), poly(carbonate-ether-urea), poly(ether-amide), poly(amide-urethane), poly(amide-urea), poly(urethane-urea) or one or more combination thereof.

12. The process according to any one of the preceding claims, wherein the pacifying metal is selected from the group consisting of: magnesium, calcium, boron, aluminum, gallium, bismuth, titanium, zinc, and one or more combinations thereof.

## Patentansprüche

1. Verfahren zur Herstellung eines Pfropfcopolymers mit einer Polyolefin-Hauptkette und einer oder mehreren Polymer-Seitenketten, wobei das Verfahren folgende Schritte umfasst:
A) Copolymerisieren von mindestens einem ersten Typ von Olefinmonomer und mindestens einem zweiten Typ von mit Metall pazifiziertem funktionalisiertem Olefinmonomer unter Verwendung eines Katalysatorsystems zum Erhalt einer Polyolefin-Hauptkette mit einer oder mehreren mit Metall pazifizierten funktionalisierten Kurzkettenverzweigungen, wobei das Katalysatorsystem
i) einen Metallkatalysator oder Metallkatalysator-Vorläufer, der ein Metall aus Gruppe 3-10 des Periodensystems der Elemente nach IUPAC umfasst;
ii) gegebenenfalls einen Cokatalysator umfasst;
B) Umsetzen der in Schritt A) erhaltenen Polyolefin-Hauptkette mit einer oder mehreren mit Metall pazifizierten funktionalisierten Kurzkettenverzweigungen mit mindestens einem Metallsubstitutionsmittel zum Erhalt einer Polyolefin-Hauptkette mit einer oder mehreren funktionalisierten Kurzkettenverzweigungen;
C) Bilden einer oder mehrerer Polymer-Seitenketten an der Polymer-Hauptkette unter Verwendung der in Schritt B) erhaltenen funktionalisierten Kurzkettenverzweigungen als Initiatoren zum Erhalt des Pfropfcopolymers, wobei eine Umesterungsreaktion zur Hinzufügung von Polymer-Seitenketten zur Polyolefin-Hauptkette durchgeführt wird.

2. Verfahren nach Anspruch 1, wobei Schritt C) des Erhalts eines Pfropfcopolymers durch eine Kombination von ROP unter Verwendung von mindestens einem Typ von cyclischem Monomer und mindestens eine Umesterungsreaktion mit mindestens einem umesterbaren Polymer durchgeführt wird.

3. Verfahren nach einem der vorhergehenden Ansprüche, wobei es sich bei dem mindestens einen ersten Typ von Olefinmonomer um eine Verbindung gemäß Formel I-A handelt: 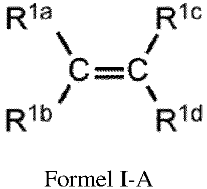 wobei C für Kohlenstoff steht und wobei R^{1a}, R^{1b}, R^{1c} und R^{1d} jeweils unabhängig aus der Gruppe bestehend aus H oder Hydrocarbyl mit 1 bis 16 Kohlenstoffatomen ausgewählt sind.

4. Verfahren nach einem der vorhergehenden Ansprüche, wobei es sich bei dem mindestens einen zweiten Typ von mit Metall pazifiziertem funktionalisiertem Olefinmonomer um eine Verbindung gemäß Formel I-B handelt: 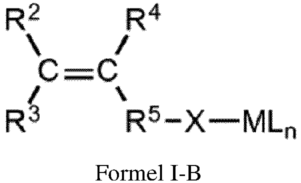
wobei C für Kohlenstoff steht;
wobei R², R³ und R⁴ jeweils unabhängig aus der Gruppe bestehend aus H oder Hydrocarbyl mit 1 bis 16 Kohlenstoffatomen ausgewählt sind und
wobei R⁵-X-MLₙ für eine mit einem Hauptgruppenmetall pazifizierte heteroatomhaltige funktionelle Gruppe steht, wobei X für ein Heteroatom oder eine heteroatomhaltige Gruppe steht, wobei das Heteroatom, das an M gebunden ist, aus der Gruppe bestehend aus O, S und N ausgewählt ist; wobei R⁵ für ein Hydrocarbyl mit 1 bis 16 Kohlenstoffatomen steht.

5. Verfahren nach einem der vorhergehenden Ansprüche, wobei Schritt B) direkt nach Schritt A) durchgeführt wird und/oder wobei Schritt C) direkt nach Schritt B) durchgeführt wird, vorzugsweise in einer Serie verbundener Reaktoren, vorzugsweise kontinuierlich.

6. Verfahren nach einem der Ansprüche 2-5, wobei bei Schritt C) ein zusätzlicher Katalysator für die ROP und/oder Umesterung zugegeben wird.

7. Verfahren nach einem der vorhergehenden Ansprüche, wobei der in Schritt A) verwendete Metallkatalysator ein Metall aus Gruppe 3-8, vorzugsweise Gruppe 3-6, weiter bevorzugt aus Gruppe 3-4 des Periodensystems der Elemente nach IUPAC umfasst und/oder wobei der in Schritt A) verwendete Metallkatalysator ein Metall aus der Gruppe bestehend aus Ti, Zr, Hf, V, Cr, Fe, Co, Ni, Pd, vorzugsweise Ti, Zr oder Hf, umfasst.

8. Verfahren nach einem der vorhergehenden Ansprüche, wobei der Cokatalysator aus der Gruppe bestehend aus MAO, DMAO, MMAO, SMAO und fluoriertem Arylboran oder fluoriertem Arylborat ausgewählt wird.

9. Verfahren nach einem der vorhergehenden Ansprüche, wobei das mindestens eine Olefinmonomer gemäß Formel I-A aus der Gruppe bestehend aus Ethylen, Propylen, 1-Buten, 4-Methyl-1-penten, 1-Penten, 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexadecen, 1-Heptadecen, 1-Octadecen, 1-Cyclopenten, Cyclohexen, Norbornen, Ethylidennorbornen und Vinylidennorbornen und einer oder mehreren Kombinationen davon ausgewählt wird.

10. Verfahren nach einem der Ansprüche 2, 4 und 5-11, wobei es sich bei dem bei der ROP in Schritt C) verwendeten cyclischen Monomer um ein polares Monomer aus der Gruppe bestehend aus einem Lacton, einem Lactid, einen cyclischen Oligoester wie einen Diester, einem Triester, einem Tetraester, einem Pentaester oder höheren Oligoestern, einem Epoxid, einem Aziridin, einer Kombination von Epoxid und/oder Aziridin und CO₂, einem cyclischen Anhydrid, einer Kombination von Epoxid und/oder Aziridin und einem cyclischen Anhydrid, einer Kombination von Epoxid und/oder Aziridin und CO₂ und einem cyclischen Anhydrid, einem cyclischen N-Carboxyanhydrid, einem cyclischem Carbonat, einem Lactam und einer oder mehreren Kombinationen davon, vorzugsweise ein Lacton, handelt oder wobei das cyclische Monomer aus Makrolactonen und/oder Makrooligolactonen, vorzugsweise mit mindestens 10 aufeinanderfolgenden Kohlenstoffatomen im Ring/Cyclus, cyclischen Carbonaten, cyclischen Amiden, cyclischen Urethanen und cyclischen Harnstoffen oder einer oder mehreren Kombinationen davon, vorzugsweise Makrolactonen, ausgewählt wird.

11. Verfahren nach einem der Ansprüche 1-10, wobei mindestens ein Polymer für die Seitenketten und/oder mindestens ein umesterbares Polymer aus der Gruppe bestehend aus einem Polyester, einem Polycarbonat, einem Polyamid, einem Polyurethan, einem Polyharnstoff, einem statistisch oder blockartig aufgebauten Poly(carbonat-ester), Poly-(carbonat-ether), Poly(ester-ether), Poly-(carbonat-ether-ester), Poly(ester-amid), Poly-(ester-ether-amid), Poly(carbonat-amid), Poly-(carbonat-ether-amid), Poly(ester-urethan), Poly-(ester-ether-urethan), Poly(carbonat-urethan), Poly(carbonat-ether-urethan), Poly(ester-harnstoff), Poly(ester-ether-harnstoff), Poly-(carbonat-hamstoff), Poly(carbonat-ether-harnstoff), Poly(ether-amid), Poly(amid-urethan), Poly(amid-harnstoff), Poly(urethan-harnstoff) oder einer oder mehreren Kombinationen davon ausgewählt wird.

12. Verfahren nach einem der vorhergehenden Ansprüche, wobei das pazifizierende Metall aus der Gruppe bestehend aus Magnesium, Calcium, Bor, Aluminium, Gallium, Bismut, Titan, Zink und einer oder mehreren Kombinationen davon ausgewählt wird.

## Revendications

1. Procédé pour la préparation d'un copolymère greffé comprenant une chaîne principale de polyoléfine et une ou de multiples chaînes latérales de polymère, le procédé comprenant les étapes de :
A) la copolymérisation d'au moins un premier type de monomère d'oléfine et d'au moins un second type de monomère d'oléfine fonctionnalisé à passivation métallique en utilisant un système de catalyseur pour obtenir une chaîne principale de polyoléfine ayant une ou de multiples branches à chaîne courte fonctionnalisées à passivation métallique, le système de catalyseur comprenant :
i) un catalyseur métallique ou précurseur de catalyseur métallique comprenant un métal du groupe 3-10 de la table périodique des éléments IUPAC ;
ii) optionnellement un co-catalyseur ;
B) la réaction de la chaîne principale de polyoléfine ayant une ou de multiples branches à chaîne courte fonctionnalisées à passivation métallique, obtenue dans l'étape A), avec au moins un agent de substitution métallique pour obtenir une chaîne principale de polyoléfine ayant une ou de multiples branches à chaîne courte fonctionnalisées ;
C) la formation d'une ou de multiples chaînes latérales de polymère sur la chaîne principale de polyoléfine, dans lequel, en tant qu'initiateurs, les branches à chaîne courte fonctionnalisées sur la chaîne principale de polyoléfine obtenue dans l'étape B) sont utilisées pour obtenir le copolymère greffé et une réaction de transestérification est réalisée pour ajouter des chaînes latérales de polymère à la chaîne principale de polyoléfine.

2. Procédé selon la revendication 1, dans lequel l'étape C) de l'obtention d'un copolymère greffé est réalisée par une combinaison de ROP, utilisant au moins un type de monomère cyclique, et d'au moins une réaction de transestérification avec au moins un polymère transestérifiable.

3. Procédé selon l'une quelconque des revendications précédentes, dans lequel l'au moins un premier type de monomère d'oléfine est un composé selon la formule I-A : 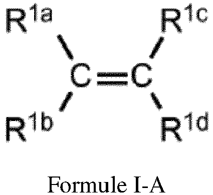 dans lequel C est carbone et dans lequel R^{1a}, R^{1b}, R^{1c}, et R^{1d} sont chacun indépendamment sélectionnés parmi le groupe constitué de : H ou hydrocarbyle avec 1 à 16 atomes de carbone.

4. Procédé selon l'une quelconque des revendications précédentes, dans lequel l'au moins un second type de monomère d'oléfine fonctionnalisé à passivation métallique est un composé selon la formule I-B : 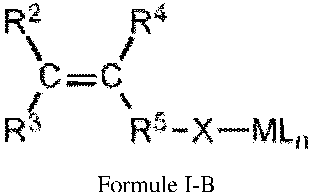
dans lequel C est carbone ;
dans lequel R², R³, et R⁴ sont chacun indépendamment sélectionnés parmi le groupe constitué de : H ou hydrocarbyle avec 1 à 16 atomes de carbone, et
dans lequel R⁵-X-MLₙ est un groupe fonctionnel contenant un hétéroatome à passivation métallique de groupe principal, dans lequel X est un hétéroatome ou un groupe contenant un hétéroatome, dans lequel l'hétéroatome qui est lié à M est sélectionné parmi le groupe constitué de : O, S et N ; dans lequel R⁵ est un hydrocarbyle avec 1 à 16 atomes de carbone.

5. Procédé selon l'une quelconque des revendications précédentes, dans lequel l'étape B) est réalisée directement après l'étape A) et/ou dans lequel l'étape C) est réalisée directement après l'étape B), de préférence dans une série de réacteurs raccordés, de préférence en continu.

6. Procédé selon l'une quelconque des revendications 2 à 5, dans lequel, durant l'étape C), un catalyseur supplémentaire pour la ROP et/ou transestérification est ajouté.

7. Procédé selon l'une quelconque des revendications précédentes, dans lequel le catalyseur métallique utilisé dans l'étape A) comprend un métal du groupe 3-8, de préférence du groupe 3-6, mieux encore du groupe 3-4 de la table périodique des éléments IUPAC et/ou dans lequel le catalyseur métallique utilisé dans l'étape A) comprend un métal sélectionné parmi le groupe constitué de : Ti, Zr, Hf, V, Cr, Fe, Co, Ni, Pd, de préférence Ti, Zr ou Hf.

8. Procédé selon l'une quelconque des revendications précédentes, dans lequel le co-catalyseur est sélectionné parmi le groupe constitué de : MAO, DMAO, MMAO, SMAO et arylborane fluoré ou arylborate fluoré.

9. Procédé selon l'une quelconque des revendications précédentes, dans lequel l'au moins un monomère d'oléfine selon la formule I-A est sélectionné parmi le groupe constitué de : éthylène, propylène, 1-butène, 4-méthyle-1-pentène, 1-pentène, 1-hexène, 1-heptène, 1-octène, 1-nonène, 1-décène, 1-undécène, 1-dodécène, 1-tridécène, 1-tétradecène, 1-pentadécène, 1-hexadécène, 1-heptadécène, 1-octadécène, 1-cyclopentène, cyclohexène, norbornène, éthylidène-norbornène, et vinylidène-norbornène et une ou plusieurs combinaisons de ceux-ci.

10. Procédé selon un quelconque des revendications 2, 4 et 5 à 11, dans lequel le monomère cyclique utilisé durant la ROP dans l'étape C) est un monomère polaire, sélectionné parmi le groupe constitué de : une lactone, un lactide, un oligoester cyclique tel qu'un di-ester, un tri-ester, un tétra-ester, un penta-ester ou des oligoesters supérieurs, un époxyde, une aziridine, une combinaison d'époxyde et/ou d'aziridine et de CO₂, un anhydride cyclique, une combinaison d'époxyde et/ou d'aziridine et d'un anhydride cyclique, une combinaison d'époxyde et/ou d'aziridine et de CO₂ et d'un anhydride cyclique, un N-carboxyanhydride cyclique, un carbonate cyclique, un lactam et une ou plusieurs combinaisons de ceux-ci, de préférence une lactone, ou dans lequel le monomère cyclique est sélectionné parmi des macrolactones et/ou macro-oligolactones, de préférence avec au moins 10 atomes de carbone consécutifs dans l'anneau/le cycle, des carbonates cycliques, des amides cycliques, des uréthanes cycliques et des urées cycliques ; ou une ou plusieurs combinaisons de ceux-ci, de préférence des macrolactones.

11. Procédé selon un quelconque des revendications 1 à 10, dans lequel au moins un polymère pour les chaînes latérales et/ou au moins un polymère transestérifiable est sélectionné parmi le groupe constitué de : un polyester, un polycarbonate, un polyamide, un polyuréthane, une polyurée, un poly(carbonate-ester), poly(carbonate-éther), poly(ester-éther), poly(carbonate-éther-ester), poly(ester-amide), poly(ester-éther-amide), poly(carbonate-amide), poly(carbonate-éther-amide), poly(ester-uréthane), poly(ester-éther-uréthane), poly(carbonate-uréthane), poly(carbonate-éther-uréthane), poly(ester-urée), poly(ester-éther-urée), poly(carbonate-urée), poly(carbonate-éther-urée), poly(éther-amide), poly(amide-uréthane), poly(amide-urée), poly(uréthane-urée), aléatoire ou séquencé, ou une ou plusieurs combinaisons de ceux-ci.

12. Procédé selon l'une quelconque des revendications précédentes, dans lequel le métal de passivation est sélectionné parmi le groupe constitué de : magnésium, calcium, bore, aluminium, gallium, bismuth, titanium, zinc, et une ou plusieurs combinaisons de ceux-ci.
